# EUROPEAN PATENT SPECIFICATION

(11) **EP 3 747 931 B1**
(45) Date of publication and mention of the grant of the patent: **06.03.2024**
(21) Application number: 19747233.5
(22) Date of filing: 31.01.2019
(51) Int. Cl.: C08G 65/336, C03C 17/32, C08G 65/00, H04M 1/02

(54) **ELECTRONIC DEVICE**
ELEKTRONISCHE VORRICHTUNG
APPAREIL ÉLECTRONIQUE

(30) Priority: 02.02.2018 JP 2018017588
(43) Date of publication of application: 09.12.2020
(73) Proprietor: DAIKIN INDUSTRIES, LTD., Osaka-Shi, Osaka 530-0001 (JP)
(72) Inventor: MITSUHASHI, Hisashi, Osaka-shi, Osaka 530-8323 (JP); NOMURA, Takashi, Osaka-shi, Osaka 530-8323 (JP); NAITOU, Masato, Osaka-shi, Osaka 530-8323 (JP); WATANABE, Yuusuke, Osaka-shi, Osaka 530-8323 (JP); OZAWA, Kaori, Osaka-shi, Osaka 530-8323 (JP); TAKANO, Shinya, Osaka-shi, Osaka 530-8323 (JP); HUPFIELD, Peter, 40211 Düsseldorf (DE)
(74) Representative: Hoffmann Eitle
(86) International application number: PCT/JP2019/003495
(87) International publication number: WO 2019/151445

(56) References cited:
- EP-A1- 1 923 434
- EP-A1- 3 085 749
- EP-A1- 3 345 912
- EP-A1- 3 578 586
- EP-A1- 3 747 930
- WO-A1-2015/157880
- WO-A1-2017/187775
- WO-A1-2018/143433
- WO-A1-2018/169002
- JP-A- 2012 131 683
- JP-A- 2013 006 819
- JP-A- 2013 150 393
- JP-A- 2015 168 785
- JP-A- 2016 017 176
- JP-A- 2018 065 946

## Description

### Technical Field

The present disclosure relates to an electronic device.

### Background Art

Electronic devices, for example, mobile devices such as mobile phones and smartphones, which can be driven by a battery are often driven by a battery pack. For charging such a battery pack, a method using a non-contact power supply technology for making the power transmission side and the power reception side wireless, for example, a method utilizing electromagnetic induction, may be used. For example, Patent Literature 1 discloses a method of charging a battery pack by transferring electric power from a power supply coil built in a charging stand to an inductive coil built in the battery pack. WO2012/081519 discloses that since the battery-driven device and the charging stand are made of hard plastic, the surface is smooth and slippery when overlapped, and that an anti-slip unit such as a rubber-like sheet is provided on the charging surface.

EP-A-3 085 749 addresses a fluoropolyether-containing polymer-modified silane of a general formula (1) including a monovalent fluorooxyalkyl- or divalent fluorooxyalkylene-containing polymer residue, and a plurality of silane containing groups, which polymer forms a film having water and oil repellency and abrasion resistance.

EP-A-1 923 434 describes a coating composition comprising (A) at least one fluorine-containing organosilicon compound of the formula Rf¹-QZ¹A_{α} (1) or A_{α}Z¹Q-Rf²-(Q-Z²-Q-Rf²)ₓ-QZ¹A_{α} (2), and (B) a fluorine-containing carboxylic acid having a Mw of 100-10,000 and a fluorine content of Z 25 wt%, which composition can be cured rapidly even at room temperature to produce water-repellent and antifouling coatings.

EP-A-3 345 912 discloses a fluorinated ether compound of the formula A¹-O-(R^{fl}O)ₘ₁-Q¹-[C(O)N(R¹)]ₚ₁-R¹¹C[-R¹²-SiR¹³ₙ₁X¹₃₋ₙ₁]₃ (1) which preferably have a poly(oxyperfluoroalkylene) chain with an ether bond present at middle in a perfluoroalkyl chain, and which exhibit high lubricity, water/oil repellency and stain removability.

EP-A-3 578 586 discloses a perfluoro(poly)ether group-containing silane compound (1a) or (1b):

(Rf-PFPE)_{β}-X-(CR^{a}ₖR^{b}ₗR^{c}ₘ)_{α} (1a)

(R^{c}ₘR^{b}ₗR^{a}ₖC)_{α}-X-PFPE-X-(CR^{a} ₖR^{b}ₗR^{c}ₘ)_{α} (1b)

Wherein Rf is C₁₋₁₆-alkyl optionally substituted with F; and PFPE is a group of the formula:

- (OC₆F₁₂)ₐ-(OC₅F₁₀)_{b}-(OC₄F₈)_{c}-(OC₃F₆)_{d}-(OC₂F₄)ₑ-(OCF₂)_{f}-

wherein a-f are an integer of 0-200, (a+b+c+d+e+f) is Z 1, and the order of repeating units in parentheses is not limited.

EP-A-3 747 930 relates to an electronic device comprising, on the surface thereof, a surface-treating layer formed of a (poly)ether group-containing silane compound of any of the formulae (A1), (A2), (B1), (B2), (C1), or (C2) including a group - (OC₆F₁₂)ₐ-(OC₅F₁₀)_{b}-(OC₄F₈)_{c}-(OC₃X^{F} ₆)_{d}-(OC₂F₄)ₑ-(OCF₂)_{f}- having at least one branched structure.

### Summary of Invention

### Technical Problem

An object of the present invention is to suppress lubricity on the surface of an electronic device.

### Solution to Problem

Accordingly, the present invention provides an electronic device comprising a surface-treating layer formed on at least a part of a surface thereof, the surface-treating layer being formed of a compound which is a fluoro(poly)ether group-containing silane compound of any of the formulae (A1), (A2), (B1), (B2), (C1) or (C2): 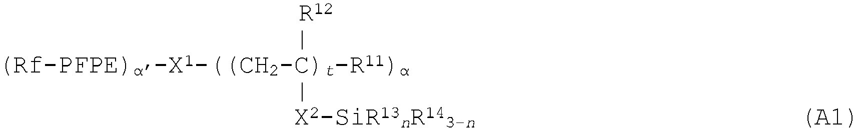 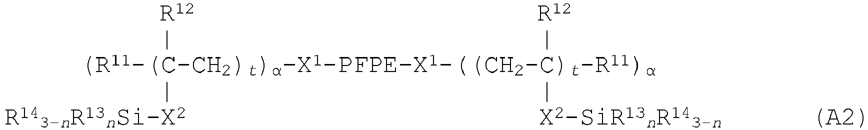
wherein, each independently at each occurrence:
   - PFPE: is -(OC₃F₆)*_{d}*- wherein the repeating unit-(OC₃F₆)- has a branched structure, and d is an integer of 1-200;
   - Rf: is C₁₋₁₆-alkyl optionally substituted by F;
   - X¹: is a 2- to 10-valent organic group;
   - α: is an integer of 1-9;
   - α': is an integer of 1-9;
   - R¹¹: is H or halogen;
   - R¹²: is H or C₁₋₂₀-alkyl;
   - X²: is C₁₋₂₀-alkylene;
   - R¹³: is OH or a hydrolyzable group;
   - R¹⁴: is H or C₁₋₂₂-alkyl;
   - n: is an integer of 0-3 for each (-SiR¹³*ₙ*R¹⁴_{3-*n*}) unit;
   - t: is an integer of 2-10;
   in the formulae (A1) and (A2), at least one n is an integer of 1-3;

   (Rf-PFPE)_{β'}-X³-(SiR^{a}₃)_{β} (B1)

   (R^{a}₃Si)_{β}-X³-PFPE-X³-(SiR^{a}₃)_{β} (B2)
wherein Rf is as defined above and, each independently at each occurrence:
   - PFPE: is a group of the formula:

   - (OC₆F₁₂)ₐ-(OC₅F₁₀)_{b}-(OC₄F₈)_{c}-(OC₃X^{F}₆)_{d}-(OC₂F₄)ₑ-(OCF₂)_{f}-

   and has at least one branched structure,
   wherein *a*-*f* each independently are an integer of 0-200 and *(a+b+c+d+e+f)* Z 1, and the order of the respective repeating units in parentheses with *a, b, c, d, e* or *f* is arbitrary, and X^{F} each independently is H, F or Cl; or is a group of the formula:

      - (R¹⁶-R¹⁷)_{*j*1}-
   wherein R¹⁶ is OCF₂ or OC₂F₄; R¹⁷ is a group selected from OC₂F₄, OC₃X^{F}₆, OC₄F₈, OC₅F₁₀, and OC₆F₁₂, or is a combination of two or three groups independently selected from these groups; *j*1 is an integer of 2-100;
   and X^{F} each independently is H, F or Cl;
   - X³: is a single bond or a 2- to 10-valent organic group;
   - β: is an integer of 1-9;
   - β': is an integer of 1-9;
   - R^{a}: is -Z³-SiR⁷²_{q1}R⁷³ᵣ₁; wherein, each independently at each occurrence,
   Z³ is a divalent organic group which does not include a group forming a siloxane bond together with an Si atom;
   R⁷² is OH or a hydrolyzable group;
   R⁷³ is H or C₁₋₂₀-alkyl;
   *q*1 is an integer of 1-3;
   *r*1 is an integer of 0-2; and
   (*q*1+*r*1) = 3 in each (-Z³-SiR⁷²_{*q*1}R⁷³_{*r*1});

   Rf-PFPE-X⁵-CR^{e}₃ (C1)

   R^{e}₃C-X⁵-PFPE-X⁵-CR^{e}₃ (C2)
wherein PFPE and Rf are as defined for formulae (B1) and (B2) and, each independently at each occurrence:
   - X⁵: is a divalent organic group of the formula -(R³¹)*_{p'}*-((X^{b})*_{l'}*)*_{q'}*- wherein, each independently at each occurence,
   R³¹ is a single bond, -(CH₂)_{s'}- optionally substituted by one or more F wherein s' is an integer of 1-20, or o-, m- or p-phenylene,
   X^{b} is -O-, - (OR³⁵)*ₙ₄*-, -S-, o-, m- or p-phenylene, -C(O)O-, -Si (R³³)₂-, -(Si(R³³)₂O)*_{m'}*-Sᵢ(R³³)₂-, -CON(R³⁴)-, -O-CON(R³⁴)-, -N(R³⁴)- or -(CH₂)*_{n'}*-, wherein
   R³³ is phenyl, C₁₋₆-alkyl or C₁₋₆-alkoxy,
   R³⁴ is H, phenyl or C₁₋₆-alkyl,
   R³⁵ is C₁₋₆-alkylene,
   *n4* is an integer of 1-5,
   *m'* is an integer of 1-100,
   *n'* is an integer of 1-20,
   - *l*': is an integer of 1-10,
   - *p'*: is 0 or 1,
   - *q'*: is 0 or 1, and
   at least one of *p'* and *q'* is 1, and the order of the respective repeating units in parentheses with p' or
   *q'* is arbitrary;
   - R^{e}: is -Y-SiR⁸⁵*ₙ₂*R⁸⁶₃-_{n*2*};
   Y each independently is C₁₋₆-alkylene or -phenylene-(CH₂)_{i'}- wherein i' is an integer of 0-6;
   R⁸⁵ is OH or a hydrolyzable group;
   R⁸⁶ is H or C₁₋₂₀-alkyl; and
   n2 is an integer of 1-3 for each (-Y-SiR⁸⁵*ₙ₂*R⁸⁶_{3-*n2*}) unit.

Also, the present invention provides an electronic device, which is a charging stand, and comprises a surface-treating layer formed on at least a part of a surface thereof, the surface-treating layer being formed of a compound which is a fluoro(poly)ether group-containing silane compound of any of the formulae (A1), (A2), (B1), (B2), (C1) or (C2): 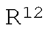 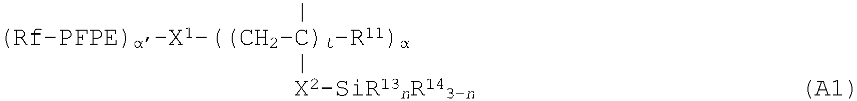 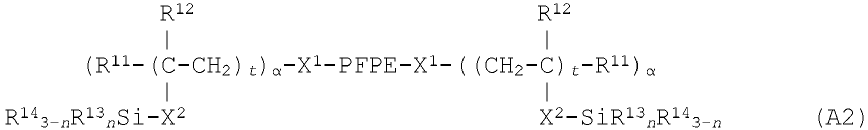
wherein, each independently at each occurrence:
   - PFPE: is a group of the formula:

   -(OC₆F₁₂)ₐ-(OC₅F₁₀)_{b}-(OC₄F₈)_{c}-(OC₃X^{F}₆)_{d}-(OC₂F₄)ₑ-(OCF₂)_{f}-

   and has at least one branched structure,
   wherein *a*-*f* each independently are an integer of 0-200 and *(a+b+c+d+e+f)* Z 1, and the order of the respective repeating units in parentheses with *a, b, c, d, e* or *f* is arbitrary, and X^{F} each independently is H, F or Cl; or is a group of the formula:

      - (R¹⁶-R¹⁷)_{*j*1}-
   wherein R¹⁶ is OCF₂ or OC₂F₄; R¹⁷ is a group selected from OC₂F₄, OC₃X^{F}₆, OC₄F₈, OC₅F₁₀, and OC₆F₁₂, or is a combination of two or three groups independently selected from these groups; *j*1 is an integer of 2-100;
   and X^{F} each independently is H, F or Cl;
   - Rf: is C₁₋₁₆-alkyl optionally substituted by F;
   - X¹: is a single bond or a 2- to 10-valent organic group;
   - α: is an integer of 1-9;
   - α': is an integer of 1-9;
   - R¹¹: is H or halogen;
   - R¹²: is H or C₁₋₂₀-alkyl;
   - X²: is a single bond or a divalent organic group;
   - R¹³: is OH or a hydrolyzable group;
   - R¹⁴: is H or C₁₋₂₂-alkyl;
   - n: is an integer of 0-3 for each (-SiR¹³*ₙ*R¹⁴_{3-*n*}) unit;
   - t: is an integer of 2-10; in the formulae (A1) and (A2), at least one n is an integer of 1-3;

   (Rf-PFPE)_{β'}-X³-(SiR^{a}_{*k*1}R^{b}_{*l*1}R^{c}_{*m*1})_{β} (B1)

   (R^{c}_{*m*1}R^{b}_{*l*1}R^{a}_{*k*1}Si)_{β}-X³-PFPE-X³-(SiR^{a}_{*k*1}R^{b}R^{c}_{*m*1})_{β} (B2)
wherein PFPE and Rf are as defined above and, each independently at each occurrence:
   - X³: is a single bond or a 2- to 10-valent organic group;
   - β: is an integer of 1-9;
   - β': is an integer of 1-9;
   - R^{a}: is -Z³-SiR⁷¹ₚ₁R⁷²_{q1R}⁷³ᵣ₁; wherein, each independently at each occurrence,
   Z³ is O or a divalent organic group;
   R⁷¹ is as defined for R^{a};
   R⁷² is OH or a hydrolyzable group;
   R⁷³ is H or C₁₋₂₀-alkyl;
   *p*1 is an integer of 0-3;
   *q*1 is an integer of 0-3;
   *r*1 is an integer of 0-3;
   (*p*1+*q*1+*r*1) = 3 in each (-Z³-SiR⁷¹_{*p*1}R⁷²_{*q*1}R⁷³_{*r*1}); and
   in R^{a}, the number of Si atoms which are linearly linked via Z³ is ≤ 5;
   - R^{b}: is OH or a hydrolyzable group;
   - R^{c}: is H or C₁₋₂₀-alkyl;
   - *k*1: is an integer of 0-3;
   - *l*1: is an integer of 0-3;
   - *m*1: is an integer of 0-3;
   in each (SiR^{a}_{*k*1}R^{b}_{*l*1}R^{c}_{*m*1}), (*k*1+*l*1+*m*1)= 3, and in the formulae (B1) and (B2), at least one *q*1 is an integer of 1-3;

   (Rf-PFPE)_{γ'}-X⁵-(CR^{d}_{*k*2}R^{e}_{*l*2}R^{f}_{*m*2})_{γ} (C1)

   (R^{f}_{*m*2}R^{e}_{*l*2}R^{d}_{*k*2}C)_{γ}-X⁵-PFPE-X⁵-(CR^{d}_{*k*2}R^{e}_{*l*2}R^{f}_{*m*2})_{γ} (C2)
wherein PFPE and Rf are as defined above and, each independently at each occurrence:
   - X⁵: is a single bond or a 2- to 10-valent organic group;
   - γ: is an integer of 1-9;
   - γ': is an integer of 1-9;
   - R^{d}: is -Z⁴-CR⁸¹_{*p*2}R⁸²_{*q*2}R⁸³_{*r*2;} wherein each independently at each occurrence,
   Z⁴ is O or a divalent organic group;
   R⁸¹ is as defined for R^{d};
   R⁸² is -Y-SiR⁸⁵*ₙ₂*R⁸⁶_{3-n*2*};
   Y is a divalent organic group;
   R⁸⁵ is OH or a hydrolyzable group;
   R⁸⁶ is H or C₁₋₂₀-alkyl;
   *n*2 is an integer of 0-3 for each (-Y-SiR⁸⁵_{*n*2}R⁸⁶_{3-*n*2}) unit;
   R⁸³ is H, OH or C₁₋₂₀-alkyl;
   *p*2 is an integer of 0-3;
   *q*2 is an integer of 0-3;
   *r*2 is an integer of 0-3;
   *(p2+q2+r2)* = 3 in each (-Z⁴-CR⁸¹_{*p*2}R⁸²_{*q*2}R⁸³_{*r*2}); and
   in R^{d}, the number of C atoms which are linearly linked via Z⁴ is ≤ 5;
   - R^{e}: is -Y-SiR⁸⁵*ₙ₂*R⁸⁶₃-_{n*2*};
   - R^{f}: is H, OH or C₁₋₂₀-alkyl;
   - *k2*: is an integer of 0-3;
   - *l*2: is an integer of 0-3;
   - *m*2: is an integer of 0-3; and
   *(k2+12+m2)* = 3 in each (CR^{d}_{*k*2}R^{e}_{*l*2}R^{f}_{*m*2}) , and in the formulae (C1) and (C2), there are at least two groups represented by -Y-SiR⁸⁵.

Preferred embodiments of the invention are as defined in the appended dependent claims and/or in the following detailed description.

### Advantageous Effects of Invention

According to the present invention, it is possible to suppress lubricity on the surface of an electronic device.

### Description of Embodiments

The electronic device of the present invention (also referred to as "the present electronic device" hereinafter) will be described below.

In one embodiment, in the present electronic device, the contact angle of water on at least a part of the surface thereof is preferably Z 100°, and the dynamic friction coefficient is preferably 0.1-0.5.

By having such a surface, the electronic device not only has water-repellency, oil-repellency, and antifouling property (for example, preventing adhesion of fouling such as fingerprints), but can also suppress lubricity. Further, the article may have, for example, hydrolysis resistance, ultraviolet (UV) durability, chemical resistance, high friction durability, heat resistance and moisture-proof property.

The contact angle of water refers to a static contact angle of water on at least a part of the surface of the electronic device, and is a numerical value measured with 2 µL of water in an environment of 21°C and 65% humidity. The contact angle of water is preferably Z 100°, and more preferably Z 110°.

The dynamic friction coefficient is a value measured in accordance with ASTM D4917. The dynamic friction coefficient is preferably Z 0.1, more preferably Z 0.2, and preferably ≤ 0.5, more preferably ≤ 0.4. The dynamic friction coefficient may be, for example, 0.1-0.5, or may be 0.15-0.35.

More preferably, in the present electronic device, the contact angle of water on at least a part of the surface thereof is Z 110°, and the dynamic friction coefficient is 0.15-0.35. The contact angle of water and the dynamic friction coefficient are as defined above.

The contact angle of n-hexadecane on at least a part of the surface thereof is preferably Z 50°, and more preferably Z 60°. The contact angle of n-hexadecane refers to a static contact angle of n-hexadecane on at least a part of the surface of the electronic device, and is a numerical value measured with 2 µL of water in an environment of 21°C and 65% humidity.

The ratio of the contact angle of water on the at least a part of the surface after irradiation with ultraviolet rays of 310 nm at an illumination intensity of 0.63 W/m² for 96 hours to the contact angle of water on the surface (contact angle of water on the surface before ultraviolet irradiation), i.e., value of contact angle after 96 hours of cumulative UV irradiation time/value of contact angle after 0 hours of UV irradiation time, is preferably Z 78%, more preferably Z 80%, still more preferably Z 83%, and particularly preferably Z 85%. The method of measuring the contact angle of water is as described above.

In one embodiment, the present electronic device has a layer (hereinafter also referred to as "surface-treating layer") formed of a fluoro(poly)ether group-containing silane compound (hereinafter referred to as "PFPE-containing silane compound"), described later, on at least a part of the surface thereof. In the PFPE-containing silane compound, the fluoro(poly)ether group has a branched structure. That is, a part of the surface of the present electronic device has a base material and a surface-treating layer formed of the PFPE-containing silane compound on the surface of the base material. The surface-treating layer formed of the PFPE-containing silane compound is preferably provided on the outermost layer of the electronic device.

The base material may be composed of any suitable material such as a glass, a resin (may be a natural or synthetic resin such as a common plastic material, and may be in form of e.g. a plate or a film), a metal (may be a simple substance of a metal such as aluminum, copper, or iron, or a complex such as alloy), a ceramic, a semiconductor (e.g. silicon or germanium), a fiber (e.g. a fabric or a non-woven fabric), a fur, a leather, a wood, a pottery, a stone or an architectural member.

The glass is preferably a sapphire glass, a soda-lime glass, an alkali aluminosilicate glass, a borosilicate glass, a non-alkaline glass, a crystal glass, or a quartz glass, and particularly preferably a chemically strengthened soda-lime glass, a chemically strengthened alkali aluminosilicate glass, and a chemically bound borosilicate glass.

The resin is preferably vinyl chloride resin, acrylic resin, ABS resin (copolymer resin of acrylonitrile, butadiene, and styrene), epoxy resin, phenol resin, nylon, fluororesin, polycarbonate resin, polypropylene, polyethylene resin, polystyrene resin, or silicone rubber.

The base material may be that of which at least a surface portion thereof is made of a material originally having a hydroxyl group. Examples of the material include a glass, in addition, a metal (in particular, a base metal) having a natural oxidized layer or a thermal oxidized layer formed on the surface thereof, ceramics, and a semiconductor. When the hydroxyl groups are present but not sufficient as in the case of e.g. a resin, or when the hydroxyl group is originally absent, the hydroxyl group may be introduced on the surface of the base material, or the number of the hydroxyl group may be increased by subjecting the base material to any pretreatment. Examples of the pretreatment include a plasma treatment (for example, corona discharge) or an ion beam irradiation. The plasma treatment can introduce or increase hydroxyl groups on the surface of the base material, and can also be suitably used for cleaning the surface of the base material (e.g. removing foreign matters). Further, other examples of the pretreatment include a method in which a surface adsorbent having a carbon-carbon unsaturated bond group is formed on the surface of a base material in the form of a monolayer by a Langmuir-Blodgett method (LB method) or a chemical adsorption method in advance, and then the unsaturated bond is cleaved in an atmosphere containing e.g. oxygen or nitrogen.

In one embodiment, the base material may be that of which at least a surface portion thereof is made of a silicone compound having one or more other reactive groups such as Si-H groups, or a material containing an alkoxysilane.

The surface-treating layer is formed, for example, by forming a coating formed of a surface treatment composition containing a PFPE-containing silane compound having a branched structure in the fluoro(poly)ether groups thereof on the surface of the base material, and subjecting the coating to post-treatment as necessary.

The formation of the coating of the surface treatment composition may be performed by applying the surface treatment composition on the surface of the base material so as to coat the surface. The method of coating is not limited. Examples thereof include a wet coating method and a dry coating method.

Examples of the wet coating method include dip coating, spin coating, flow coating, spray coating, roll coating and gravure coating.

Examples of the dry coating method include deposition (usually, vacuum deposition), sputtering and CVD. Specific examples of the deposition method (usually, vacuum deposition) include resistance heating, electron beam, highfrequency heating using microwave and ion beam. Specific examples of the CVD method include plasma-CVD, optical CVD and thermal CVD.

Additionally, coating may also be performed by an atmospheric pressure plasma method.

The coating formation is preferably performed such that the surface treatment composition is present in the coating together with a catalyst for hydrolysis and dehydration condensation. Conveniently, when the wet coating method is used, after diluting the surface treatment composition with a solvent and immediately before application to the surface of the base material, a catalyst may be added to the dilute solution of the surface treatment composition. When the dry coating method is used, the surface treatment composition to which a catalyst has been added may be directly used for deposition (usually, vacuum deposition) treatment or may be used as a substance in the form of a pellet for deposition (usually, vacuum deposition), wherein the substance in the form of a pellet is obtained by impregnating a porous body made of a metal such as iron or copper with the surface treatment composition to which a catalyst has been added.

The catalyst to be used may be any suitable acid or base. The acid catalyst to be used may e.g. acetic acid, formic acid or trifluoroacetic acid. The base catalyst to be used may be e.g. ammonia or an organic amine.

Next, the coating is post-treated as necessary. This post-treatment may be, for example, a treatment in which water supply and dry heating are performed sequentially or simultaneously.

After the coating of the surface treatment composition is formed on the surface of the base material as mentioned above, water is supplied to this coating (hereinafter, referred to as precursor coating). The method for supplying water is not limited, and for example, a method such as dew condensation due to a temperature difference between the precursor coating (and the base material) and the ambient atmosphere or spraying of steam may be used.

The water may be supplied under an atmosphere, for example, at a temperature of 0-250°C, preferably Z 60°C, more preferably Z 100°C, and preferably ≤ 180°C, more preferably ≤ 150°C. Hydrolysis can be promoted by supplying water in such a temperature range. The pressure at this time is not limited but can be conveniently atmospheric pressure.

Then, the precursor coating is heated on the surface of the base material under a dry atmosphere over 60°C. The dry heating method is not limited, and the precursor coating may be disposed together with the base material at a temperature in excess of 60°C, preferably in excess of 100°C, for example at a temperature of ≤ 250°C, preferably at ≤ 180°C, and in an atmosphere of an unsaturated steam pressure. The pressure at this time is not limited but can be conveniently atmospheric pressure.

The above water supply and dry heating may be continuously performed by using superheated steam.

The post-treatment may be performed as described above. It is noted that though the post-treatment may be performed in order to further increase friction durability, it is not essential for production of articles. For example, the surface treatment composition may be applied to the surface of the base material, and then left as it is.

As described above, the surface-treating layer which is a layer derived from the coating of the surface treatment composition is formed on the surface of the base material. The layer derived from the surface treatment composition thus obtained can have, for example, good UV durability, water-repellency, oil-repellency, antifouling property (for example, preventing adhesion of fouling such as fingerprints), chemical resistance, hydrolysis resistance, an effect of suppressing lubricity, high friction durability, heat resistance and moisture-proof property.

The present electronic device will be described below in more detail.

In one embodiment, the electronic device is an electronic device that can be driven by a battery, specifically, a device that can be driven by a rechargeable battery (or a battery pack including a battery), and preferably a device including the battery. The rechargeable battery to be used may be a battery that can be normally used.

In this embodiment, examples of the electronic device include portable information terminals such as mobile phones, smartphones, and tablet terminals; electronic dictionaries, portable music players, audio recorders and players (IC recorders), and watches.

In this embodiment, preferably, the electronic device is a wirelessly rechargeable device. Here, "wirelessly rechargeable" means that charging can be performed between the power transmission side (for example, a charging stand) and the power reception side (electronic device) without using a cable.

In this embodiment, the electronic device has a housing, and has a configuration usually used in the electronic device, such as a battery pack or a board inside the housing. The housing may usually have a configuration (for example, a display, a touch panel or a power switch) that may be provided in the electronic device.

In this embodiment, the shape of the housing is not limited, and may be a shape usually used (for example, a shape having a flat surface in part).

In this embodiment, as the material constituting the housing, for example, the material described above may be used as the base material.

The electronic device preferably has a surface-treating layer formed of a PFPE-containing silane compound described later on at least a part of the surface of the housing. The PFPE-containing silane compound has a branched structure in the fluoropolyether group.

By having the surface-treating layer, the surface of the electronic device of this embodiment can exhibit, for example, good UV durability, water-repellency, oil-repellency, antifouling property (for example, preventing adhesion of fouling such as fingerprints), chemical resistance, hydrolysis resistance, an effect of suppressing lubricity, high friction durability, heat resistance and moisture-proof property. In particular, in the electronic device of this embodiment, it is possible to prevent the surface that comes into contact with the surface-treating layer (for example, the surface of a desk and the charging surface of a charging stand) from being displaced from the surface-treating layer. That is, in the electronic device of this embodiment, it is possible to prevent the relative position between the surface that comes into contact with the surface-treating layer and the surface-treating layer from changing due to any external force (for example, gravity and vibration). For example, when the electronic device is placed on e.g. a desk or a charging stand, it is possible to prevent the electronic device from being displaced from the desk or the charging stand, so that the electronic device can be placed more stably. This eliminates the need to provide the housing with a concavo-convex shape or a rubber sheet to prevent its slippage.

In this embodiment, the surface-treating layer formed of the PFPE-containing silane compound may be provided on the entire area of the housing or may be provided on a part thereof.

In this embodiment, the surface-treating layer formed of the PFPE-containing silane compound is preferably provided on the surface that comes into contact with the charging stand when the electronic device is charged. The surface-treating layer may be provided on the entire area of the surface that comes into contact with the charging stand or may be provided on a part thereof. Since the charging surface of the charging stand is not easily displaced from the surface-treating layer formed of the PFPE-containing silane compound, the electronic device can be charged more efficiently, and the electronic device can be placed more stably.

In one embodiment, the electronic device is a communication device such as a mobile phone or a smartphone. In this embodiment, even when an external force is applied to the electronic device by vibration for e.g. notifying an incoming call, since the surface-treating layer formed of the PFPE-containing silane compound is provided, the displacement in position between the surface-treating layer and a surface that comes into contact with the surface-treating layer (for example, the surface of a desk or the charging surface of a charging stand) is unlikely to occur. That is, when the electronic device is placed on a desk, a charging stand, or the like, it is possible to prevent the electronic device from being displaced therefrom, so that the electronic device can be placed more stably.

The thickness of the surface-treating layer formed of the PFPE-containing silane compound is preferably 1-50 nm, more preferably 1-30 nm, and particularly preferably 1-15 nm. By having the surface-treating layer with such a thickness, the electronic device of this embodiment can exhibit, for example, better UV durability, water-repellency, oil-repellency, antifouling property (for example, preventing adhesion of fouling such as fingerprints), chemical resistance, hydrolysis resistance, an effect of suppressing lubricity, high friction durability, heat resistance and moisture-proof property.

In one embodiment, the housing has a first main surface (front surface) and a second main surface (rear surface) facing the first main surface.

In this embodiment, it is preferable that a display portion or an operation portion such as a display or a touch panel be provided on the first main surface. The display nad touch panel may be those that can be usually used.

In this embodiment, the second main surface is a surface that comes into contact with the charging stand when the electronic device is charged. The surface-treating layer formed of the PFPE-containing silane compound described later is located on the second main surface. The surface-treating layer formed of the PFPE-containing silane compound may be formed on the entire area of the second main surface or may be formed on a part thereof.

That is, the housing has a first main surface and a second main surface facing the first main surface, and has a surface-treating layer on the second main surface. The surface-treating layer is preferably located on the outermost layer of the second main surface.

In this embodiment, examples of the electronic device include communication devices such as a mobile phone and a smartphone.

In one embodiment, the electronic device is a charging stand. The charging stand may be used to charge portable information terminals such as mobile phones, smartphones, and tablet terminals; electronic dictionaries, portable music recorders, audio recorders and players, and watches, and other electronic devices that can be driven by a battery.

The charging stand has a charging surface (a surface on which an electronic device can be charged) on a surface thereof. The charging stand may further include a configuration that a normal charging stand may have, such as a power outlet and a board. These structures are not limited, and those which can be usually used may be used.

In one embodiment, the charging stand may be a device capable of being driven by a rechargeable battery.

The shape of the charging stand is not limited.

The charging surface may be provided on the entire surface of the charging stand or may be provided only on a part thereof.

The surface shape of the charging surface is not limited, and examples thereof include a circular shape, an elliptical shape, a rectangular shape, and a polygonal shape.

The size of the charging surface is not limited as long as the electronic device can be charged. It is also possible to place and charge a plurality of electronic devices on one charging surface. Further, a plurality of charging surfaces may be provided on the surface of the charging stand.

The charging surface is preferably a smooth surface. Here, the term "smooth" refers to smoothness enough for normal use of the charging surface.

Preferably, the charging stand is installed with the charging surface as an upper surface, and the charging surface is installed in a substantially horizontal state. The substantially horizontal state includes not only a horizontal state in a strict sense but also a state in which a slight inclination is allowed, and for example, there may be an inclination of about 3°, and specifically, there may be an inclination of about 1°.

In the above charging stand, the electronic device is preferably charged wirelessly. That is, the electronic device may be charged by being placed on the charging stand (on the charging surface). The charging method may be a method that can be usually used and is not limited, and examples thereof include an electromagnetic induction method, an electrolytic coupling method, and a magnetic field resonance method.

In one embodiment, the surface-treating layer formed of the PFPE-containing silane compound is located on the charging surface. By having the surface-treating layer, the charging surface can exhibit better UV durability, water-repellency, oil-repellency, antifouling property (for example, preventing adhesion of fouling such as fingerprints), chemical resistance, hydrolysis resistance, an effect of suppressing lubricity, high friction durability, heat resistance, and moisture-proof property. By having the surface-treating layer formed of the PFPE-containing silane compound, the charging stand can prevent the electronic device placed on the charging surface from being displaced. That is, the charging stand can place the electronic device more stably, and can more efficiently charge the device that can be driven by a battery. This eliminates the need to provide the charging surface with a concavo-convex shape or a rubber sheet for preventing slippage of an electronic device placed on the charging surface.

In this embodiment, the charging stand has a base material and a surface-treating layer formed of the PFPE-containing silane compound on the surface of the base material. In this embodiment, the base material may be any of the base materials described above, and at least one selected from vinyl chloride resin, acrylic resin, ABS resin, epoxy resin, phenol resin, nylon resin, fluororesin, polycarbonate resin, polypropylene resin, polyethylene resin, polystyrene resin, and silicone rubber is preferably used, and at least one selected from polycarbonate, polyethylene, and silicone rubber is more preferably used.

In this embodiment, the thickness of the surface-treating layer formed of the PFPE-containing silane compound is preferably 1-50 nm, more preferably 1-30 nm, and particularly preferably 1-15 nm.

A set device of the present disclosure will be described below.

The set device of the present disclosure has an electronic device and a charging stand. At least one of the electronic device and the charging stand has a surface-treating layer formed of the PFPE-containing silane compound on at least a part of the surface. The PFPE-containing silane compound will be described later. The electronic device is a device that can be charged by a charging stand. The electronic device can be driven by a battery.

That is, the electronic device has a first main surface and a second main surface facing the first main surface, the charger has a surface (charging surface) for installing (or placing) the electronic device when charging the electronic device, and a surface-treating layer formed of the PFPE-containing silane compound is located on at least one of the first main surface of the electronic device, the second main surface of the electronic device, and the charging surface of the charger. Here, the second main surface of the electronic device is a surface that comes into contact with the charging surface of the charger during charging of the electronic device. Preferably, the surface-treating layer is located on at least one of the second main surface of the electronic device and the charging surface of the charger. The surface-treating layer formed of the PFPE-containing silane compound may be located on both the second main surface of the electronic device and the charging surface of the charger.

The surface-treating layer may be provided on the entire area of the first main surface and the second main surface of the electronic device, or the charging surface of the charger, or may be provided on a part thereof.

The surface-treating layer may be provided on the entire area of the second main surface of the electronic device, or the charging surface of the charger, or may be provided on a part thereof.

In one embodiment, the electronic device is the present electronic device having a surface-treating layer formed of the PFPE-containing silane compound on at least a part of the surface.

In the embodiment, the surface-treating layer is preferably located on at least one of the first main surface and the second main surface of the electronic device, and more preferably located on the second main surface. Here, the second main surface is a surface that comes into contact with the charging surface of the charger when the electronic device is charged by the charger.

In one embodiment, the charging stand is the charging stand of the present disclosure having a surface-treating layer formed of the PFPE-containing silane compound on at least a part of the charging surface.

In one embodiment, the electronic device is the present electronic device having a surface-treating layer formed of the PFPE-containing silane compound on at least a part of the surface, and the charging stand is the charging stand of the present disclosure having a surface-treating layer formed of the PFPE-containing silane compound on at least a part of the charging surface. In this embodiment, both the electronic device and the charging stand can exhibit, for example, better friction durability, UV durability, water-repellency, oil-repellency, hydrolysis resistance, an effect of suppressing lubricity and moisture-proof property. In this embodiment, the displacement of the electronic device that can be driven by a battery and the charging stand is particularly unlikely to occur.

In one embodiment, the set device of the present disclosure has an electronic device and a charging stand, and at least one of the electronic device that can be driven by a battery and the charging stand comprises a surface-treating layer on a surface, and the contact angle of water on the surface is Z 100° and the dynamic friction coefficient on the surface is 0.1-0.5. The methods of measuring the contact angle of water and the dynamic friction coefficient are as defined above.

In this embodiment, the contact angle of water is preferably Z 100°, and more preferably Z 110°.

In this embodiment, the dynamic friction coefficient may be, for example, 0.1-0.5, or 0.15-0.35.

In this embodiment, more preferably, the contact angle of water is Z 110° and the dynamic friction coefficient is 0.15-0.35.

In this embodiment, the ratio of the contact angle of water on the surface after irradiation with ultraviolet rays of 310 nm at an illumination intensity of 0.63 W/m² for 96 hours to the contact angle of water on the surface, i.e., value of contact angle after 96 hours of cumulative UV irradiation time/value of contact angle after 0 hours of UV irradiation time, is preferably Z 78%, more preferably Z 80%, still more preferably Z 83%, and particularly preferably 85%. The method of measuring the contact angle of water is as described above.

In this embodiment, the contact angle of the n-hexadecane on the surface is preferably Z 50°, and more preferably Z 60°. The method of measuring the contact angle of n-hexadecane may be performed in the same manner as described above.

### (PFPE-containing silane compound)

The PFPE-containing silane compound will be described below. The PFPE-containing silane compound has a branched structure in the fluoropolyether part. The surface-treating layer is formed of the PTFE-containing silane compound.

The "2- to 10-valent organic group" as used herein refers to a 2- to 10-valent group containing a carbon atom. Examples of the 2- to 10-valent organic group include, but are not limited to, a 2- to 10-valent group obtained by removing 1-9 hydrogen atoms from a hydrocarbon group. Examples of the divalent organic group include, but are not limited to, a divalent group obtained by removing one hydrogen atom from a hydrocarbon group.

The "hydrocarbon group" as used herein refers to a group containing a carbon atom and a hydrogen atom which is obtained by removing a hydrogen atom from the molecule. Examples of the hydrocarbon group include, but are not limited to, a C₁₋₂₀-hydrocarbon group optionally substituted by one or more substituents, for example, an aliphatic hydrocarbon group and an aromatic hydrocarbon group. The "aliphatic hydrocarbon group" may be linear, branched or cyclic, and may be saturated or unsaturated. The hydrocarbon group may contain one or more ring structures. It is noted that the hydrocarbon group may have, for example, one or more N, O, S, Si, amide, sulfonyl, siloxane, carbonyl or carbonyloxy at the end or in the molecular chain thereof.

As used herein, examples of the substituent of the "hydrocarbon group" include a halogen atom; and one or more groups selected from C₁₋₆-alkyl, C₂₋₆-alkenyl, C₂₋₆-alkynyl, C₃₋₁₀-cycloalkyl, unsaturated C₃₋₁₀-cycloalkyl, 5- to 10-membered heterocyclyl, - 5- to 10-membered unsaturated heterocyclyl -, - C₆₋₁₀-aryl, and 5- to 10-membered heteroaryl, which are optionally substituted by one or more halogen atoms.

The alkyl group and the phenyl group herein are optionally substituted unless otherwise specified. Examples of the substituent for such groups include one or more groups selected from halogen, C₁₋₆-alkyl, C₂₋₆-alkenyl, and C₂₋₆-alkynyl.

The alkylene group herein refers to a group having a - (C_{δ}H_{2δ})- structure, and is optionally substituted, and may be linear or branched unless otherwise specified.

Hereinafter, the PFPE-containing silane compound having a branched structure in the fluoropolyether portion will be described.

Formulae (A1) and (A2):

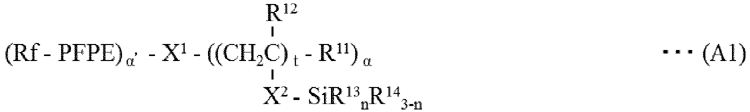

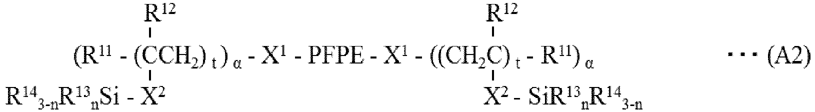

In the formula, Rf each independently is C₁₋₁₆-alkyl optionally substituted by F.

Therein " C₁₋₁₆-alkyl " may be linear or branched, and preferably is linear or branched C₁₋₆-alkyl, in particular C₁₋₃-alkyl, and more preferably linear C₁₋₃-alkyl.

Rf is preferably C₁₋₁₆-alkyl substituted by F, more preferably CF₂H-(C₁₋₁₅-fluoroalkylene) or C₁₋₁₆-perfluoroalkyl, and still more preferably C₁₋₁₆-perfluoroalkyl.

The C₁₋₁₆-perfluoroalkyl may be linear or branched, and preferably is a linear or branched C₁₋₆-perfluoroalkyl, in particular C₁₋₆-perfluoroalkyl, and more preferably linear C₁₋₃-perfluoroalkyl, specifically -CF₃, -CF₂CF₃, or -CF₂CF₂CF₃.

In the formula, PFPE each independently is a group of the formula:

-(OC₆F₁₂)ₐ-(OC₅F₁₀)_{b}-(OC₄F₈)_{c}-(OC₃X^{F}₆)_{d}-(OC₂F₄)ₑ-(OCF₂)_{f}-,

and has at least one branched structure, or is a group of the formula - (R¹⁶-R¹⁷)ⱼ₁-. Each symbol will be described later.

In one embodiment, PFPE each independently is a group represented by:

-(OC₆F₁₂)ₐ-(OC₅F₁₀)_{b}-(OC₄F₈)_{c}-(OC₃X^{F}₆)_{d}-(OC₂F₄)ₑ-(OCF₂)_{f}-

and has at least one branched structure in PFPE. That is, the PFPE has at least one CF₃ end (specifically, -CF₃ or -C₂F₅, more specifically -CF₃). In formula (A1), in PFPE, the oxygen atom at the left end of the formula is bonded to Rf, and the carbon atom at the right end of the formula is bonded to X¹. By having PFPE having such a structure, the layer (for example, surface-treating layer) formed by using a PFPE-containing silane compound (or a surface-treating agent containing a PFPE-containing silane compound) can be further improved in e.g. UV durability, water-repellency, oil-repellency, antifouling property (for example, preventing adhesion of fouling such as fingerprints), chemical resistance, hydrolysis resistance, an effect of suppressing lubricity, high friction durability, heat resistance and moisture-proof property. This embodiment is particularly useful from the viewpoint of the effect of suppressing lubricity and high friction durability.

X^{F} each independently is H, F or Cl, preferably H or F, and more preferably F.

In the formula, *a*-*f* each independently are an integer of 0-200 and (*a+b+c+d+e+f*) Z 1. Preferably, *a*-*f* each independently are an integer of 0-100. Preferably, *(a+b+c+d+e+f)* is Z 5, and more preferably Z 10. Preferably, *(a+b+c+d+e+f)* is 5 200, more preferably ≤ 100, for example, 10-200, and more specifically 10-100. The order of the repeating units in parentheses with a, b, c, d, e, or f is arbitrary.

The PFPE structure preferably has at least 5, more preferably 10, and particularly preferably 20 branched structures.

In the PFPE structure, the number of repeating units having a branched structure is preferably Z 40, more preferably Z 60, and particularly preferably Z 80, with respect to the total number of repeating units (for example, *(a+b+c+d+e+f))* of 100. In the PFPE structure, the number of repeating units having a branched structure may be ≤ 100, for example, ≤ 90, with respect to the total number of repeating units of 100.

In the PFPE structure, the number of repeating units having a branched structure is preferably 40-100, more preferably 60-100, and particularly preferably 80-100, with respect to the total number of repeating units of 100.

Examples of the branched chain in the branched structure include CF₃.

As the repeating unit having a branched structure, examples of -(OC₆F₁₂)- include -(OCF(CF₃)CF₂CF₂CF₂CF₂)-, -(OCF₂CF(CF₃)CF₂CF₂CF₂)-, -(OCF₂CF₂CF(CF₃)CF₂CF₂)-, -(OCF₂CF₂CF₂CF(CF₃)CF₂)-, and -(OCF₂CF₂CF₂CF₂CF(CF₃))-. Examples of -(OC₅F₁₀)- include -(OCF (CF₃)CF₂CF₂CF₂)-, -(OCF₂CF(CF₃)CF₂CF₂)-, -(OCF₂CF₂CF(CF₃)CF₂)-, and -(OCF₂CF₂CF₂CF(CF₃))-. Examples of - (OC₄F₈)- include -(OCF(CF₃)CF₂CF₂)-, -(OCF₂CF(CF₃)CF₂)-, -(OCF₂CF₂CF(CF₃))-, -(OC(CF₃)₂CF₂)-, -(OCF₂C(CF₃)₂)-, -(OCF(CF₃)CF(CF₃))-, -(OCF(C₂F₅)CF₂)-, and -(OCF₂CF(C₂F₅))-. Examples of -(OC₃F₆)-(i.e., in the formula, X^{F} is a fluorine atom) include - (OCF(CF₃)CF₂)- and - (OCF₂CF(CF₃)) -. Examples of-(OC₂F₄)-include - (OCF(CF₃)) -.

The PFPE may include a linear repeating unit as well as the repeating units having a branched structure. Examples of the linear repeating unit include -(OCF₂CF₂CF₂CF₂CF₂CF₂)-, -(OCF₂CF₂CF₂CF₂CF₂)-, -(OCF₂CF₂CF₂CF₂)-, -(OCF₂CF₂CF₂)-, and -(OCF₂CF₂)-.

Preferably, in the PFPE, the repeating units -(OC₆F₁₂)-, -(OC₅F₁₀)-, -(OC₄F₈)-, and-(OC₃F₆)- have a branched structure.

More preferably, the PFPE consists of repeating units OC₆F₁₂, OC₅F₁₀, OC₄F₈, and OC₃F₆ having a branched structure.

In one embodiment, the PFPE is -(OC₃F₆)_{d}- (wherein d is an integer of 1-200, preferably 5-200, more preferably 10-200), and has at least one branched structure in PFPE.

In this embodiment, the PFPE may further contain a linear repeating unit -(OCF₂CF₂CF₂)-.

In the embodiment, the PFPE preferably consists of repeating units OC₃F₆ having a branched structure. The PFPE is more preferably of formula -(OCF₂CF(CF₃))_{d} wherein d is an integer of 1-200, preferably 5-200, and more preferably 10-200.

In another embodiment, PFPE is -(OC₄F₈)_{c}-(OC₃F₆)_{d}-(OC₂F₄)ₑ-(OCF₂)_{f}- (wherein c and d are each independently an integer of 0-30, e and f are each independently an integer of 1-200, preferably 5-200, more preferably 10-200, (c+d+e+f) is Z 5, preferably Z 10, and the order of the repeating units in parentheses with the subscript c, d, e, or f is arbitrary) and has at least one branched structure in PFPE.

In yet another embodiment, PFPE is -(R⁶-R⁷)ⱼ- and has at least one branched structure in PFPE. In the formula, R⁶ is OCF₂ or OC₂F₄, and preferably OC₂F₄, R⁷ is OC₂F₄, OC₃F₆, OC₄F₈, OC₅F₁₀, OC₆F₁₂, or a combination of two or three groups independently selected from these groups. Preferably, R⁷ is OC₂F₄, OC₃F₆ or OC₄F₈, or is OC₃F₆, OC₄F₈, OC₅F₁₀, OC₆F₁₂, or a combination of two or three groups independently selected from these groups, and more preferably a group selected from OC₃F₆ and OC₄F₈. Examples of the combination of two or three groups independently selected from OC₂F₄, OC₃F₆, and OC₄F₈ include, -OC₂F₄OC₃F₆-, -OC₂F₄OC₄F₈-, -OC₃F₆OC₂F₄-, -OC₃F₆OC₃F₆-, - OC₃F₆OC₄F₈-, -OC₄F₈OC₄F₈-, -OC₄F₈OC₃F₆-, -OC₄F₈OC₂F₄-, - OC₂F₄OC₂F₄OC₃F₆-, -OC₂F₄OC₂F₄OC₄F₈-, -OC₂F₄OC₃F₆OC₂F₄-, - OC₂F₄OC₃F₆OC₃F₆-, -OC₂F₄OC₄F₈OC₂F₄-, -OC₃F₆OC₂F₄OC₂F₄-, - OC₃F₆OC₂F₄OC₃F₆-, -OC₃F₆OC₃F₆OC₂F₄-, and -OC₄F₈OC₂F₄OC₂F₄-. j is an integer of Z 2, preferably Z 3, and more preferably Z 5, and is an integer of ≤ 100, and preferably ≤ 50. In the formula, OC₂F₄, OC₃F₆, OC₄F₈, OC₅F₁₀, and OC₆F₁₂ preferably have a branched structure.

More preferably, in the embodiment, PFPE consists of repeating units OC₆F₁₂, OC₅F₁₀, OC₄F₈, and OC₃F₆ having a branched structure.

In one embodiment, PFPE is - (R¹⁶-R¹⁷)ⱼ₁-, wherein R¹⁶ is OCF₂ or OC₂F₄, and preferably OC₂F₄, and R¹⁷ is OC₂F₄, OC₃X^{F}₆, OC₄F₈, OC₅F₁₀, OC₆F₁₂, or a combination of two or three groups independently selected from these groups. X^{F} is as defined above and is preferably F. Preferably, R¹⁷ is OC₂F₄, OC₃F₆, OC₄F₈, or a group selected from OC₃F₆, OC₄F₈, OC₅F₁₀, OC₆F₁₂, or a combination of two or three groups independently selected from these groups. Examples of the combination of two or three groups independently selected from OC₂F₄, OC₃F₆, and OC₄F₈ include, -OC₂F₄OC₃F₆-, -OC₂F₄OC₄F₈-, -OC₃F₆OC₂F₄-, - OC₃F₆OC₃F₆-, -OC₃F₆OC₄F₈-, -OC₄F₈OC₄F₈-, -OC₄F₈OC₃F₆-, -OC₄F₈OC₂F₄-, -OC₂F₄OC₂F₄OC₃F₆-, -OC₂F₄OC₂F₄OC₄F₈-, -OC₂F₄OC₃F₆OC₂F₄-, - OC₂F₄OC₃F₆OC₃F₆-, -OC₂F₄OC₄F₈OC₂F₄-, -OC₃F₆OC₂F₄OC₂F₄-, - OC₃F₆OC₂F₄OC₃F₆-, -OC₃F₆OC₃F₆OC₂F₄-, and -OC₄F₈OC₂F₄OC₂F₄-. j1 is preferably an integer of 2-100; more preferably Z 3, and still more preferably Z 5; and more preferably an integer of ≤ 50. In the formula, OC₂F₄, OC₃F₆, OC₄F₈, OC₅F₁₀, and OC₆F₁₂ may be linear or branched, and are preferably linear. In this embodiment, PFPE is preferably - (OC₂F₄-OC₃F₆)ⱼ₁- or - (OC₂F₄-OC₄F₈)ⱼ₁-. By having such a PFPE structure, the layer (for example, surface-treating layer) formed by using a PFPE-containing silane compound (or a surface-treating agent containing a PFPE-containing silane compound) can be further improved in UV durability, heat resistance, hydrolysis resistance, water-repellency, oil-repellency, friction durability, slip suppression effect, and moisture-proof property.

In the formula, R¹³ each independently is OH or a hydrolyzable group.

As used herein, the "hydrolyzable group" refers to a group capable of undergoing a hydrolysis reaction, that is, a group capable of being removed from the main backbone of compound by a hydrolysis reaction. Examples of the hydrolyzable group include -OR, -OCOR, -O-N=CR₂, -NR₂, -NHR, halogen (wherein R is optionally substituted C₁₋₄-alkyl), preferably -OR (i.e., alkoxy). Examples of R include non-substituted alkyl such as methyl, ethyl, propyl, isopropyl, n-butyl, and isobutyl; and substituted alkyl group such as chloromethyl. Among them, alkyl, in particular non-substituted alkyl is preferred, methyl or ethyl is more preferred. The hydroxyl group may be, but is not limited to, a group generated by hydrolysis of a hydrolyzable group.

In the formula, R¹⁴ each independently is H or C₁₋₂₂-alkyl, and preferably C₁₋₄-alkyl.

In the formula, R¹¹ each independently is H or halogen. The halogen is preferably I, Cl or F, more preferably F.

In the formula, R¹² each independently is H or C₁₋₂₀-alkyl, and preferably C₁₋₆-alkyl, and examples thereof include methyl, ethyl and propyl.

In the formula, n is independently an integer of 0-3, preferably 1-3, and more preferably 3 for each (-SiR¹³*ₙ*R¹⁴_{3-*n*}) unit. In formula (A1) or (A2), at least one n is Z 1. In other words, there is at least one SiR¹³ in the formulae (A1) and (A2). By having such a configuration, the PFPE-containing silane compound can form a surface-treating layer having e.g. good UV durability, water-repellency, oil-repellency, antifouling property (for example, preventing adhesion of fouling such as fingerprints), heat resistance, high friction durability, hydrolysis resistance, chemical resistance and moisture-proof property.

In a preferred embodiment, at least two n are Z 1 in the formula (A1) or (A2). In other words, there are at least two SiR¹³ in the formulae (A1) and (A2). By having such a configuration, the PFPE-containing silane compound can form a surface-treating layer having e.g. better UV durability, water-repellency, oil-repellency, antifouling property (for example, preventing adhesion of fouling such as fingerprints), heat resistance, high friction durability, hydrolysis resistance, chemical resistance and moisture-proof property, in particular, good UV durability, high friction durability and chemical resistance.

Preferably, in formulae (A1) and (A2), n is 2 or 3, and more preferably n is 3. In other words, in the formulae (A1) and (A2), the Si atom is preferably present as -SiR¹³₂R¹⁴ or -SiR¹³₃ and more preferably present as -SiR¹³₃.

In the formula, X¹ each independently is a 2- to 10-valent organic group. X¹ is recognized to be a linker which connects between a fluoropolyether moiety (i.e., an Rf-PFPE moiety or -PFPE- moiety) providing mainly water-repellency and surface lubricity and a silane moiety (i.e., a group in parentheses with α) providing an ability to bind to a base material in the compound represented by the formulae (A1) and (A2). Therefore, X¹ may be any organic group as long as the compound represented by the formulae (A1) and (A2) can stably exist. In the present specification, in the group described as X¹, the left side of the group is bonded to the group represented by PFPE, and the right side thereof is bonded to the group in parentheses with α.

In the formula, α is an integer of 1-9, and α' is an integer of 1-9. These α and α' may vary depending on the valence number of X¹. In the formula (A1), the sum of α and α' is the same as the valence number of X¹. For example, when X¹ is a 10-valent organic group, the sum of α and α' is 10, for example, α and α' may be 9 and 1, α and α' may be 5 and 5, or α and α' may be 1 and 9. When X¹ is a divalent organic group, α and α' are 1. In the formula (A2), α is a value obtained by subtracting 1 from the valence number of X¹.

In one embodiment, X¹ is each independently at each occurrence a 2- to 10-valent organic group containing - CON(R³⁴)-, C₁₋₆-alkylene or OR³⁵.

R³⁴ each independently is H, phenyl or C₁₋₆-alkyl, preferably H or C₁₋₆-alkyl, more preferably H or methyl, and still more preferably H.

R³⁵ is C₁₋₆-alkylene, and preferably C₁₋₃-alkylene.

In one embodiment, X¹ may be, for example, a divalent group of the formula - (R³¹)_{p'}-(X^{a})_{q'}- wherein:
R³¹ is a single bond, - (CH₂)_{s'}- optionally substituted by F, or o-, m-, or p-phenylene, and preferably -(CH₂)_{s'}-optionally substituted by F,
s' is an integer of 1-20, preferably 1-6, more preferably 1-3, and still more preferably 1 or 2,
X^{a} is -(X^{b})_{l'}-,
X^{b} each independently is -O-, -(OR³⁵)ₙ₄-, -S-, o-, m-, or p-phenylene, -C(O)O-, -Si(R³³)₂-, - (Si(R³³)₂O)_{m'}-Si(R³³)₂-, - CON(R³⁴)-, -O-CON(R³⁴)-, -N(R³⁴)- or -(CH₂)_{n'}-,
R³³ each independently is phenyl, C₁₋₆-alkyl, or C₁₋₆-alkoxy, preferably phenyl or C₁₋₆-alkyl, and more preferably methyl,
R³⁴ each independently is H, phenyl, or C₁₋₆-alkyl, preferably H or C₁₋₆-alkyl, more preferably H or methyl, and still more preferably H,
R³⁵ each independently is C₁₋₆-alkylene, and preferably C₁₋₃-alkylene,
n4 each independently is an integer of 1-5, preferably 1-3, and more preferably 1,
m' each independently is an integer of 1-100, and preferably 1-20,
n' each independently is an integer of 1-20, preferably 1-6, and more preferably 1-3,
l' is an integer of 1-10, preferably 1-5, and more preferably 1-3,
p' is 0 or 1,
q' is 0 or 1, and
at least one of p' and q' is 1, and the order of the repeating units in parentheses with p' or q' is arbitrary.

Here, R³¹ and X^{a} (typically, H in R³¹ and X^{a}) are optionally substituted by one or more substituents selected from F, C₁₋₃-alkyl, and C₁₋₃-fluoroalkyl.

In one embodiment, l' is 1.

Preferably, X¹ is -(R³¹)_{p'}-(X^{a} )_{q'}-R³²-. R³² is a single bond, -(CH₂)_{t'}- or o-, m-, or p-phenylene, and preferably - (CH₂)_{t'}-. t' is an integer of 1-20, preferably 2-6, and more preferably 2-3. Here, R³² (typically, H in R³²) is optionally substituted by one or more substituents selected from F, C₁₋₃-alkyl, and C₁₋₃-fluoroalkyl.

Examples of X¹ include the following structure:

-X¹⁰-CON(R³⁴)-X¹¹-,

-X¹⁰-(OR³⁵)ₙ₄-X¹¹-,

and
C₁₋₆-alkylene (preferably propylene) .

When X¹ has the above structure, hydrolysis resistance, friction durability, chemical resistance and moisture-proof property of the layer formed of the PFPE-containing silane compound is further improved.

X¹⁰ each independently is a single bond or a divalent organic group, preferably a single bond, -O-R³⁶-O-, -R³⁶-, or o-, m-, or p-phenylene, and more preferably a single bond, - O-R³⁶-O-, or -R³⁶-.

R³⁶ is C₁₋₂₀-alkylene optionally substituted by F, preferably C₁₋₃-alkylene optionally substituted by F, and still more preferably C₁₋₂-alkylene group optionally substituted by F. The alkylene group may be linear or may have a branched structure.

In one embodiment, the alkylene group optionally substituted by F in X¹⁰ is, for example, C₁₋₃-perfluoroalkylene, C₁₋₃-fluoroalkylene substituted by F, or C₁₋₃-alkylene group having no substituent, and more specifically C₁₋₂-perfluoroalkylene, and C₁₋₂-fluoroalkylene group substituted by F, or C₁₋₂-alkylene having no substituent.

X¹¹ each independently is a single bond, an oxygen atom, or a divalent organic group, and preferably a single bond, an oxygen atom, or C₁₋₂₀-alkylene optionally substituted by F.

In one embodiment, X¹¹ is preferably a single bond or C₁₋₂₀-alkylene optionally substituted by F, more preferably a single bond or C₁₋₆ alkylene having no substituent, still more preferably a single bond or C₁₋₃-alkylene having no substituent, and particularly preferably C₁₋₃-alkylene having no substituent.

The alkylene optionally substituted by F in X¹¹ is preferably C₁₋₆-alkylene optionally substituted by F, and more preferably C₁₋₃-alkylene optionally substituted by F. The alkylene group may be linear or may have a branched structure.

More preferably, the alkylene optionally substituted by F in X¹¹ is preferably C₁₋₆-alkylene having no substituent, and more preferably C₁₋₃-alkylene having no substituent.

R³⁴ each independently is H, phenyl, or C₁₋₆-alkyl, preferably H or C₁₋₆-alkyl, more preferably H or methyl, and still more preferably H.

R³⁵ each independently is C₁₋₆ alkylene, and preferably C₁₋₃-alkylene.

n4 each independently is an integer of 1-5, preferably 1-3, and more preferably 1.

In one embodiment, X¹ is -X¹⁰-CON(R³⁴)-X¹¹-, or C₁₋₆-alkylene (preferably propylene).

In the formula:
R³⁴ is as defined above, and preferably H or C₁₋₆-alkyl, more preferably H or - methyl -, and still more preferably H;
X¹⁰ is as defined above, and preferably a single bond, -R³⁶-, or - o-, m-, or p-phenylene -, more preferably a single bond or -R³⁶-, and still more preferably a single bond;
R³⁶ is as defined above, and preferably - C₁₋₂₀-alkylene - optionally substituted by F, more preferably C₁₋₃-alkylene optionally substituted by F, and still more preferably C₁₋₂-alkylene optionally substituted by F; and
X¹¹ is as defined above, and preferably a single bond or C₁₋₂₀-alkyleneoptionally substituted by F, more preferably a single bond or C₁₋₆-alkylene having no substituent, still more preferably a single bond or C₁₋₃-alkylene having no substituent, and particularly preferably C₁₋₃-alkylene having no substituent.

In the embodiment, X¹ is particularly preferably -X¹⁰-CON(R³⁴)-X¹¹-. In the formula, R³⁴, X¹⁰, and X¹¹ are as defined above.

In the embodiment, X¹⁰ is particularly preferably a single bond and X¹¹ is particularly preferably C₁₋₃-alkylene, and X¹¹ is still more preferably C₁₋₃-alkylene having no substituent.

In one embodiment, X¹⁰ is a single bond and X¹¹ is C₁₋₃-alkylene, and preferably, X¹¹ is C₁₋₃-alkylene having no substituent.

Specific examples of X¹ include:
-CH₂OCH₂-,
-CH₂O(CH₂)₂-,
-CH₂O(CH₂)₃-,
-CH₂O(CH₂)₆-,
-CF₂-CH₂OCH₂-,
-CF₂-CH₂O(CH₂)₂-,
-CF₂-CH₂O(CH₂)₃-,
-CF₂-CH₂O(CH₂)₆-,
-O-CFHCF₂-O-CH₂OCH₂-,
-O-CFHCF₂-O-CH₂O(CH₂)₂-,
-O-CFHCF₂-O-CH₂O(CH₂)₃-,
-O-CFHCF₂-O-CH₂O(CH₂)₆-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CH₂-,
-(CH₂)₂-,
-(CH₂)₃-,
-(CH₂)₄-,
-(CH₂)₅-,
-(CH₂)₆-,
-CF₂-,
-(CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CONH-,
-CONH-CH₂-,
-CONH-(CH₂)₂-,
-CONH-(CH₂)₃-,
-CONH-(CH₂)₆-,
-CF₂-CONH-,
-CF₂-CONH-CH₂- ,
-CF₂-CONH-(CH₂)₂-,
-CF₂-CONH-(CH₂)₃-,
-CF₂-CONH-(CH₂)₆-,
-O-CFHCF₂-O-CONH-,
-O-CFHCF₂-O-CONH-CH₂-,
-O-CFHCF₂-O-CONH-(CH₂)₂-,
-O-CFHCF₂-O-CONH-(CH₂)₃-,
-O-CFHCF₂-O-CONH-(CH₂)₆-,
-CON(CH₃)-,
-CON(CH₃)-CH₂-,
-CON(CH₃)-(CH₂)₂-,
-CON(CH₃)-(CH₂)₃-,
-CON(CH₃)-(CH₂)₆-,
-CON(CH₃)-C₆H₄-,
-CON(Ph)-(CH₂)₃- (wherein Ph is phenyl),
-CON(Ph)-(CH₂)₆- (wherein Ph is phenyl),
-CF₂-CON(CH₃)-,
-CF₂-CON(CH₃)-CH₂-,
-CF₂-CON(CH₃)-(CH₂)₂-,
-CF₂-CON(CH₃)-(CH₂)₃-,
-CF₂-CON(CH₃)-(CH₂)₆-,
-CF₂-CON(CH₃)-C₆H₄-,
-CF₂-CON(Ph)-(CH₂)₃- (wherein Ph is phenyl),
-CF₂-CON(Ph)-(CH₂)₆- (wherein Ph is phenyl),
-CH₂-CON(CH₃)-CH₂-,
-CH₂-CON(CH₃)-(CH₂)₂-,
-CH₂-CON(CH₃)-(CH₂)₃-,
-CH₂O-CONH-(CH₂)₃-,
-CH₂O-CONH-(CH₂)₆-,
-OCH₂-,
-O(CH₂)₃-,
-OCFHCF₂-,
-O-CFHCF₂-O-,
-O-CFHCF₂-O-CH₂-,
-O-CFHCF₂-O-(CH₂)₂-,
-O-CFHCF₂-O-(CH₂)₃-,
-O-CFHCF₂-O-(CH₂)₆-,
-O-CFHCF₂-O-C₆H₄-,
   or

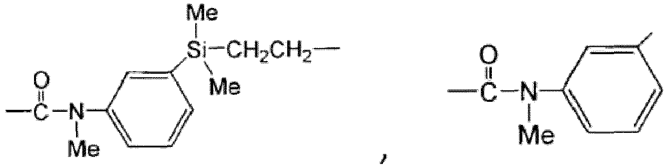

Examples of more preferred X¹ include:

-O-CFHCF₂-O-CONH-,

-O-CFHCF₂-O-CONH-CH₂-,

-O-CFHCF₂-O-CONH-(CH₂)₂-,

-O-CFHCF₂-O-CONH-(CH₂)₃-,

-O-CFHCF₂-O-CONH-(CH₂)₆-,

-CONH-,

-CONH-CH₂-,

-CONH-(CH₂)₂-,

-CONH-(CH₂)₃-,

-CONH-(CH₂)₆-,

-CF₂-CONH-,

-CF₂-CONH-CH₂-,

-CF₂-CONH-(CH₂)₂-,

-CF₂-CONH-(CH₂)₃-,

-CF₂-CONH-(CH₂)₆-,

-O-CFHCF₂-O-CH₂OCH₂-,

-O-CFHCF₂-O-CH₂O(CH₂)₂-,

-O-CFHCF₂-O-CH₂O(CH₂)₃-,

-O-CFHCF₂-O-CH₂O(CH₂)₆-,

-CH₂OCH₂-,

-CH₂O(CH₂)₂-,

-CH₂O(CH₂)₃-,

-CH₂O(CH₂)₆-,

-CF₂-CH₂OCH₂-,

-CF₂-CH₂O(CH₂)₂-,

-CF₂-CH₂O(CH₂)₃-,

-CF₂-CH₂O(CH₂)₆-,

-O-CFHCF₂-O-,

-O-CFHCF₂-O-(CH₂)₂-,

-O-CFHCF₂-O-(CH₂)₃-,

-O-CFHCF₂-O-(CH₂)₆-,

-CH₂-,

-(CH₂)₂-,

-(CH₂₎₃-,

-(CH₂)₆-

-CF₂-,

-(CF₂)₂-,

-CF₂-CH₂-,

-CF₂-(CH₂)₂-,

-CF₂-(CH₂)₃-,

and

-CF₂-(CH₂)₆- .

In yet another embodiment, examples of the X¹ group include the following groups: 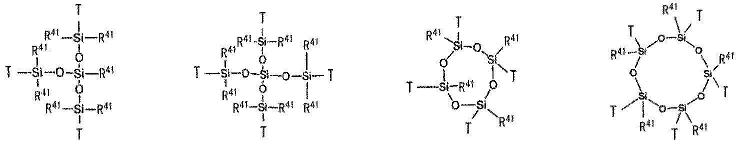 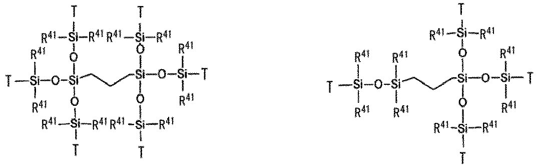 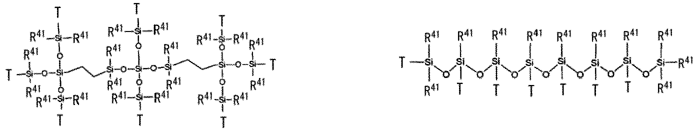 wherein:
R⁴¹ each independently is H, phenyl, C₁₋₆-alkyl, or C₁₋₆-alkoxy, and preferably methyl; and
in each X¹ group, some of T are the following group which binds to PFPE of the main backbone:
   - CH₂O(CH₂)₂-,
   - CH₂O(CH₂)₃-,
   - CF₂O(CH₂)₃-,
   - CH₂-,
   - (CH₂)₂-,
   - (CH₂)₃-,
   - (CH₂)₄-,
   - CONH-(CH₂)₃-,
   - CON(CH₃)-(CH₂)₃-,
   - CON(Ph)-(CH₂)₃- (wherein Ph is phenyl), or 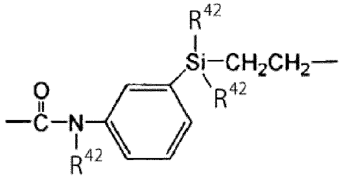
wherein R⁴² each independently is H, C₁₋₆-alkyl, or C₁₋₆-alkoxy, preferably methyl or methoxy, and more preferably methyl,
some of the other T are -(CH₂)_{n"}- (wherein n" is an integer of 2-6) bonded to the group opposite to PFPE which is a main backbone, and the others T are each independently methyl, phenyl, or C₁₋₆-alkoxy or a radical scavenging group or a UV absorbing group, if present.

The radical scavenging group is not limited as long as it can trap a radical generated by light irradiation, and examples thereof include a residue of benzophenones, benzotriazoles, benzoic esters, phenyl salicylates, crotonic acids, malonic esters, organoacrylates, hindered amines, hindered phenols, or triazines.

The UV absorbing group is not limited as long as it can absorb ultraviolet rays, and examples thereof include residues of benzotriazoles, hydroxybenzophenones, esters of substituted and unsubstituted benzoic acid or salicylic acid compounds, acrylate or alkoxycinnamates, oxamides, oxanilides, benzoxazinones, and benzoxazoles.

In a preferred embodiment, examples of the radical scavenging group or the UV absorbing group include:

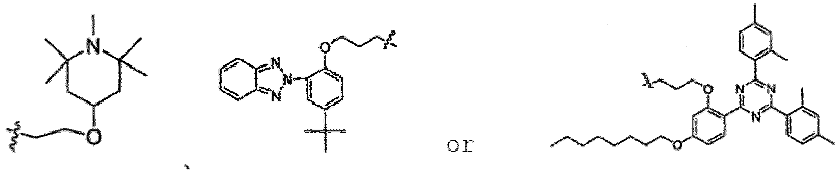

In this embodiment, X¹ (and X³ and X⁵ described below) may be a 3- to 10-valent organic group.

In the formula, X² each independently at each occurrence is a single bond or a divalent organic group. X² is preferably C₁₋₂₀-alkylene, and more preferably -(CH₂)ᵤ-(wherein u is an integer of 0-2).

In the formula, t is each independently an integer of 2-10. In a preferred embodiment, t is an integer of 2-6.

In a preferred embodiment, in the formulae (A1) and (A2), PFPE is each independently a group of the formula - (OCF(CF₃)CF₂)_{d}- (wherein d is an integer of 1-200, preferably 5-200, and more preferably 10-200);
X¹ each independently is a group represented by
   -X^{f}-X¹⁰-CON(R³⁴)-X¹¹-,
   -X^{f}-X¹⁰-(OR³⁵)ₙ₄-X¹¹-, or
   -X^{f}-(C₁₋₆-alkylene) (preferably propylene);
X^{f} each independently is a single bond or C₁₋₆-alkylene, preferably a single bond or C₁₋₄-alkylene, and more preferably a single bond or C₁₋₂-alkylene (for example, methylene), wherein the hydrogen atom in X^{f} is optionally substituted by one or more substituents selected from F, C₁₋₃-alkyl and C₁₋₃-fluoroalkyl, and preferably substituted;
X¹⁰ each independently is a single bond, -O-R³⁶-O-, - R³⁶-, or o-, m-, or p-phenylene, preferably a single bond, - O-R³⁶-O-, or -R³⁶-, more preferably a single bond or -R³⁶-, and still more preferably a single bond;
R³⁶ is C₁₋₂₀-alkylene optionally substituted by F, preferably C₁₋₃-alkylene optionally substituted by F, and still more preferably C₁₋₂-alkylene optionally substituted by F, wherein the alkylene group in R³⁶ may be linear or may have a branched structure;
R³⁴ each independently is H, phenyl, or C₁₋₆-alkyl, preferably H or C₁₋₆-alkyl, more preferably H or methyl, and still more preferably H;
R³⁵ each independently is C₁₋₆-alkylene, and preferably C₁₋₃-alkylene;
n4 is each independently at each occurrence an integer of 1-5, preferably 1-3, and more preferably 1;
X¹¹ each independently is a single bond, an oxygen atom, or C₁₋₂₀-alkylene optionally substituted by F, preferably a single bond or C₁₋₆-alkylene having no substituent, more preferably a single bond or C₁₋₃-alkylene having no substituent, and particularly preferably C₁₋₃-alkylene having no substituent;
X² is -(CH₂)ᵤ-; and
u each independently is an integer of 0-2.

In a preferred embodiment, the compounds represented by the formulae (A1) and (A2) are compounds of the following formulae (A1') and (A2'): 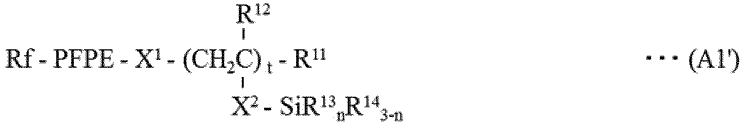 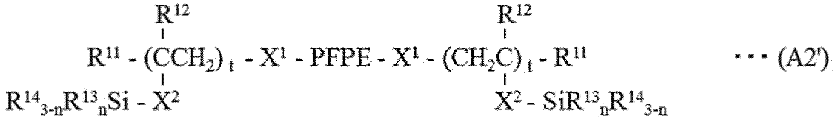 wherein:
PFPE is a group of the formula -(OCF(CF₃)CF₂)_{d}-(wherein d is an integer of 0-200);
Rf each independently is C₁₋₁₆-alkyl optionally substituted by F;
R¹³ each independently is OH or a hydrolyzable group;
R¹⁴ each independently is H or C₁₋₂₂-alkyl;
R¹¹ each independently is H or halogen;
R¹² each independently is or C₁₋₂₀-alkyl;
n is 2 or 3, and preferably 3;
X¹ each independently is -X¹⁰-CONH-X¹¹-, -X¹⁰-(OR³⁵)ₙ₄-X¹¹- (R³⁵ is C₁₋₃-alkylene; n4 is an integer of 1-5, preferably 1-3, and more preferably 1) or C₁₋₆-alkylene (preferably propylene);
X¹⁰ each independently is a single bond, -O-R³⁶-O-, or -R³⁶-;
R³⁶ is C₁₋₃-alkylene optionally substituted by F;
X¹¹ each independently is a single bond, an oxygen atom, or C₁₋₃-alkylene;
X² is - (CH₂)ᵤ-;
u each independently is an integer of 0-2; and
t each independently is an integer of 2-10.

In another embodiment, the compounds of the formulae (A1) and (A2) are compounds of the following formulae (A1') and (A2'): 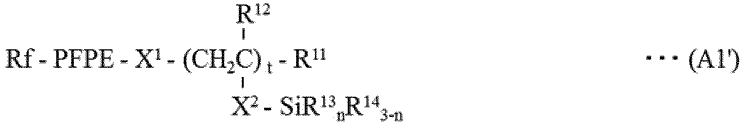 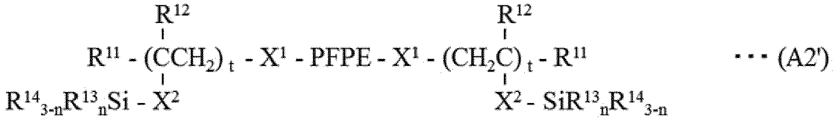 wherein:
PFPE is a group of the formula -(R¹⁶-R¹⁷)ⱼ₁- (wherein R¹⁶ is OCF₂ or OC₂F₄; R¹⁷ is OC₂F₄, OC₃F₆, OC₄F₈, OC₅F₁₀, OC₆F₁₂, or a combination of two or three groups independently selected from these groups; and j1 is an integer of 2-100);
Rf each independently is C₁₋₁₆-alkyl optionally substituted by F;
R¹³ each independently is OH or a hydrolyzable group;
R¹⁴ each independently is H or C₁₋₂₂-alkyl;
R¹¹ each independently is H or halogen;
R¹² each independently is H or C₁₋₂₀-alkyl;
n is 2 or 3, and preferably 3;
X¹ each independently is -X¹⁰-CONH-X¹¹-, -X¹⁰-(OR³⁵)ₙ₄-X¹¹- (R³⁵ is C₁₋₃-alkylene) or a C₁₋₆-alkylene (preferably propylene);
X¹⁰ each independently is a single bond, -O-R³⁶-O-, or -R³⁶-;
R³⁶ is C₁₋₃-alkylene optionally substituted by F;
X¹¹ each independently is a single bond, an oxygen atom, or C₁₋₃-alkylene;
X² is - (CH₂)ᵤ-;
u each independently is an integer of 0-2; and
t each independently is an integer of 2-10.

In another preferred embodiment, the compounds of the formulae (A1) and (A2) are represented by the formulae (A1') and (A2');
PFPE each independently is a group represented by - (R¹⁶-R¹⁷)ⱼ₁-;
R¹⁶ is OCF₂ or OC₂F₄;
R¹⁷ is OC₂F₄, OC₃F₆, OC₄F₈, OC₅F₁₀, OC₆F₁₂, or a combination of two or three groups independently selected from these groups;
j1 is an integer of 2-100; and
Rf, X¹, X², R¹¹-R¹⁴, n, t, α, and α' are as defined above.

The number average molecular weight of the compounds of the formulae (A1) and (A2) is, for example, 1,000-40,000, preferably 1,000-32,000, more preferably 1,000-20,000, and still more preferably 1,000-12,000. The number average molecular weight is a value measured by ¹⁹F-NMR and ¹H-NMR.

In one embodiment, the compounds of the formulae (A1) and (A2) have a number average molecular weight of 1,000-8,000, and preferably 1,000-4,000. By having such a number average molecular weight, a layer (for example, a surface-treating layer) formed by using the compound (or a surface-treating agent containing the compound) has particularly good slip suppression effect and abrasion resistance.

In one embodiment, the compounds of the formulae (A1) and (A2) have a weight average molecular weight Mw of 3,000 to < 6,000, and the molecular weight distribution (Mw/Mn) of the compounds is ≤ 1.2. The weight average molecular weight and the molecular weight distribution are determined, for example, based on gel filtration chromatography (GPC) measurement.

In a preferred embodiment, the compounds of the formulae (A1) and (A2) are compounds of the formula (A1), and more preferably compounds of the formula (A1').

In one embodiment, the compounds of the formulae (A1) and (A2) may be obtained, for example, by introducing a hydroxyl group in the end of a fluoropolyether derivative corresponding to the Rf-PFPE moiety as a raw material, and subjecting it to a Williamson reaction with a compound having an alkyl halide at the end thereof.

Formulae (B1) and (B2):

(Rf-PFPE)_{β'}-X³-(SiR^{a}ₖ₁R^{b}ₗ₁R^{c}ₘ₁)_{β} ··· (B1)

(R^{c}ₘ₁R^{b}ₗ₁R^{a}ₖ₁Si)_{β}-X³-PFPE-X³-(SiR^{a}ₖ₁R^{b}ₗ₁R^{c}ₘ₁)_{β} ··· (B2)

In the formulae (B1) and (B2), Rf and PFPE are as defined for the formulae (A1) and (A2). Here, the "formula (A1)" is to be read as "formula (B1)" and the "X¹ group" is to be read as "X³ group".

In the formula, X³ each independently is a single bond or a 2- to 10-valent organic group. X³ in the compounds of the formulae (B1) and (B2) is recognized to be a linker which connects a fluoropolyether moiety (i.e., an Rf-PFPE moiety or -PFPE- moiety) providing mainly good UV durability, water-repellency, oil-repellency, antifouling property (for example, preventing adhesion of fouling such as fingerprints), chemical resistance, hydrolysis resistance, an effect of suppressing lubricity, high friction durability, heat resistance and moisture-proof property and a silane moiety (specifically, -SiR^{a}ₖ₁R^{b}ₗ₁R^{c}ₘ₁ group) providing an ability to bind to a base material. Therefore, X³ may be a single bond or any organic group as long as the compounds represented by the formulae (B1) and (B2) can stably exist. In the present specification, in the structure described as X³, the left side of the structure is bonded to the group PFPE, and the right side thereof is bonded to the group in parentheses with β.

In the formula, β is an integer of 1-9, and β' is an integer of 1-9. These β and β' may vary depending on the valence number of X³. In the formula (B1), the sum of β and β' is the same as the valence number of X³. For example, when X³ is a 10-valent organic group, the sum of β and β' is 10, for example, β and β' may be 9 and 1, β and β' may be 5 and 5, or β and β' may be 1 and 9. When X³ is a divalent organic group, β and β' are 1. In the formula (B2), β is a value obtained by subtracting 1 from the valence number of X³.

X³ is preferably a 2- to 7-valent, more preferably a 2- to 4-valent, and still more preferably a divalent organic group.

In one embodiment, X³ is a 2- to 4-valent organic group, β is 1-3, and β' is 1.

In another embodiment, X³ is a divalent organic group, β is 1, and β' is 1. In this case, the formulae (B1) and (B2) are represented by the following formulae (B1') and (B2') .

Rf-PFPE-X³-SiR^{a}ₖ₁R^{b}ₗ₁R^{c}ₘ₁ ··· (B1')

R^{c}ₘ₁R^{b}ₗ₁R^{a}ₖ₁Si-X³-PFPE-X³-SiR^{a}ₖ₁R^{b}ₗ₁R^{c}ₘ₁ ··· (B2')

Examples of X³ include the same groups as those described for X¹.

Examples of preferred X³ include:

-X¹⁰-CON(R³⁴)-X¹¹-,

-X¹⁰-(OR³⁵)ₙ₄-X¹¹-,

and
C₁₋₆-alkylene (preferably propylene). In the formula, R³⁴, R³⁵, X¹⁰, X¹¹, and n4 are as defined above.

Specific examples of particularly preferred X³ include:

-O-CFHCF₂-O-CONH-,

-O-CFHCF₂-O-CONH-CH₂-,

-O-CFHCF₂-O-CONH-(CH₂)₂-,

-O-CFHCF₂-O-CONH-(CH₂)₃-,

-O-CFHCF₂-O-CONH-(CH₂)₆-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-O-CFHCF₂-O-CH₂OCH₂- ,

-O-CFHCF₂-O-CH₂O(CH₂)₂-,

-O-CFHCF₂-O-CH₂O(CH₂)₃-,

-O-CFHCF₂-O-CH₂O(CH₂)₆-,

-CH₂OCH₂-,

-CH₂O(CH₂)₂-,

-CH₂O(CH₂)₃-,

-CH₂O(CH₂)₆-,

-CF₂-CH₂-O-CH₂- ,

-CF₂-CH₂-O-(CH₂)₂-,

-CF₂-CH₂-O-(CH₂)₃-,

-CF₂-CH₂-O-(CH₂)₆-,

-O-CFHCF₂-O-,

-O-CFHCF₂-O-(CH₂)₂-,

-O-CFHCF₂-O-(CH₂)₃-,

-O-CFHCF₂-O-(CH₂)₆-,

-CH₂-,

-(CH₂)₂-,

-(CH₂)₃-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

and

-CF₂-(CH₂)₆-.

In a preferred embodiment, X³ is
-X¹⁰-CON(R³⁴)-X¹¹-, or
C₁₋₆-alkylene (preferably propylene) .

In the formula:
R³⁴ is as defined above, and preferably H or C₁₋₆-alkyl, more preferably H or methyl, and still more preferably H;
X¹⁰ is as defined above, and preferably a single bond, -R³⁶-, or o-, m-, or p-phenylene, more preferably a single bond or -R³⁶-, and still more preferably a single bond;
R³⁶ is as defined above, and preferably C₁₋₂₀-alkylene optionally substituted by F, more preferably C₁₋₃-alkylene optionally substituted by F, and still more preferably C₁₋₂-alkylene optionally substituted by F; and
X¹¹ is as defined above, and preferably a single bond or C₁₋₂₀-alkylene optionally substituted by F, more preferably a single bond or C₁₋₆-alkylene having no substituent, still more preferably a single bond or C₁₋₃-alkylene having no substituent, and particularly preferably C₁₋₃-alkylene having no substituent.

In the embodiment, X³ is particularly preferably -X¹⁰-CON (R³⁴)-X¹¹-. In the formula, R³⁴, X¹⁰, and X¹¹ are as defined above.

In the embodiment, X¹⁰ is particularly preferably a single bond and X¹¹ is particularly preferably C₁₋₃-alkylene, and X¹¹ is still more preferably C₁₋₃-alkylene having no substituent.

In one embodiment, examples of X³ include the following structure:
-X^{f}-X¹⁰-CON(R³⁴)-X¹¹-,
-X^{f}-X¹⁰-(OR³⁵)ₙ₄-X¹¹-, and
-X^{f}-(C₁₋₆-alkylene) (preferably propylene).

In the formula, X^{f}, X¹⁰, R³⁴, X¹¹, R³⁵, and n4 are as defined above.

In the formula, R^{a} each independently is -Z³-SiR⁷¹ₚ₁R⁷²_{q1}R⁷³ᵣ₁.

In the formula, Z³ each independently is an oxygen atom or a divalent organic group.

Z³ is preferably a divalent organic group, and does not include a group which forms a siloxane bond together with a Si atom (the Si atom binding to R^{a}) present in the end of the molecular backbone of the formula (B1) or (B2).

Z³ is preferably C₁₋₆-alkylene, - (CH₂)_{g}-O-(CH₂)ₕ-(wherein g is an integer of 1-6, h is an integer of 1-6) or - phenylene-(CH₂)ᵢ- (wherein i is an integer of 0-6), and more preferably C₁₋₃-alkylene. These groups are optionally substituted by, for example, one or more substituents selected from F, C₁₋₆-alkyl, C₂₋₆-alkenyl and C₂₋₆-alkynyl. From the viewpoint of particularly good UV durability, Z³ is more preferably linear or branched alkylene, and still more preferably linear alkylene. The number of carbon atoms constituting the alkylene group for Z³ is preferably 1-6, and more preferably 1-3. The alkylene group is as described above.

In one embodiment, Z³ may be C₁₋₆-alkylene or - phenylene-(CH₂)ᵢ-. When Z³ is a group as described above, light resistance, especially ultraviolet resistance can be further increased. In the formula, i is an integer of 0-6.

In the embodiment, Z³ is preferably C₁₋₆-alkylene, and more preferably C₁₋₃-alkylene.

In one embodiment,
X³ is preferably -X¹⁰-CON(R³⁴)-X¹¹- or C₁₋₆-alkylene (preferably propylene), and more preferably -X¹⁰-CON(R³⁴)-X¹¹-; and
Z³ is preferably C₁₋₆-alkylene or -phenylene-(CH₂)ᵢ-, more preferably C₁₋₆-alkylene, and still more preferably C₁₋₃-alkylene.
R³⁴, X¹⁰, X¹¹, and i are as defined above.

In one embodiment,
X³ is preferably -X¹⁰-CON(R³⁴)-X¹¹- or C₁₋₆-alkylene (preferably propylene), and more preferably -X¹⁰-CON(R³⁴)-X¹¹-; and
Z³ is preferably C₁₋₆-alkylene or -phenylene-(CH₂)ᵢ-, more preferably C₁₋₆-alkylene, and still more preferably C₁₋₃-alkylene.

In the formula:
R³⁴ is H, or C₁₋₆-alkyl, preferably H, or methyl, and more preferably H;
X¹⁰ is a single bond, -R³⁶-, or o-, m-, or p-phenylene, preferably a single bond or -R³⁶-, and more preferably a single bond;
R³⁶ is C₁₋₂₀-alkylene optionally substituted by F, preferably C₁₋₃-alkylene optionally substituted by F, and more preferably C₁₋₂-alkylene optionally substituted by F;
X¹¹ is a single bond or C₁₋₂₀-alkylene optionally substituted by F, preferably a single bond or C₁₋₆-alkylene having no substituent, more preferably a single bond or C₁₋₃-alkylene having no substituent, and particularly preferably C₁₋₃-alkylene having no substituent; and
i is an integer of 0-6.

In the embodiment, X¹⁰ is particularly preferably a single bond and X¹¹ is particularly preferably C₁₋₃-alkylene, and X¹¹ is still more preferably C₁₋₃-alkylene having no substituent. X³ is more preferably -X¹⁰-CON(R³⁴)-X¹¹-.

In one embodiment,
X³ is a group represented by -X^{f}-X¹⁰- (OR³⁵)ₙ₄-X¹¹-;
Z³ is C₁₋₆-alkylene, and still more preferably C₁₋₃-alkylene. In the formula, X^{f}, X¹⁰, X¹¹, R³⁵, and n4 are as defined above.

In the formula, R⁷¹ each independently is R^{a'}. R^{a'} is as defined for R^{a}.

In R^{a}, the number of Si atoms which are linearly connected via the Z³ group is up to five. That is, in R^{a}, when there is at least one R⁷¹, there are two or more Si atoms which are linearly connected via the Z³ group in R^{a}. The number of such Si atoms which are linearly connected via the Z³ group is up to five. It is noted that "the number of Si atoms which are linearly connected via the Z³ group in R^{a"} is equal to the repeating number of -Z³-Si- which are linearly connected in R^{a}.

For example, one example in which Si atoms are connected via the Z³ group in R^{a} is shown below.

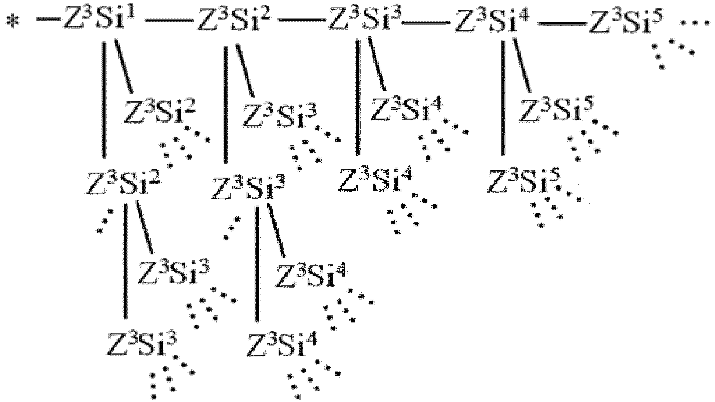

In the formula, * represents a position binding to Si of the main backbone, and ... represents that a predetermined group other than Z³Si binds thereto, that is, all three bonds of the Si atom being ... means the end point of the repeat of Z³Si. The number on the right shoulder of Si means the number of occurrences of Si which is linearly connected via the Z³ group from *. In other words, in the chain in which the repeat of Z³Si is completed at Si², "the number of Si atoms which are linearly connected via the Z³ group in R^{a}" is 2. Similarly, in the chain in which the repeat of Z³Si is completed at Si³, Si⁴ and Si⁵, "the number of Si atoms which are linearly connected via the Z³ group in R^{a}" is 3, 4, and 5, respectively. As seen from the formula, there are a plurality of Z³Si chains in R^{a}, but they need not have the same length and may have arbitrary length.

In a preferred embodiment, as shown below, "the number of Si atoms which are linearly connected via the Z³ group in R^{a}" is 1 (left formula) or 2 (right formula) in all chains.

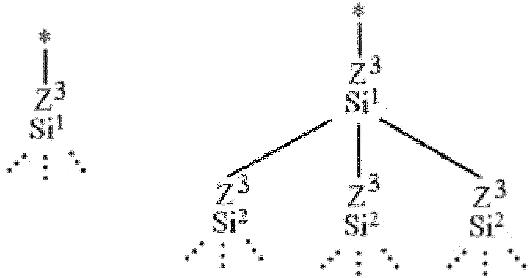

In one embodiment, the number of Si atoms which are linearly connected via the Z³ group in R^{a} is 1 or 2, and preferably 1.

In the formula, R⁷² each independently is OH or a hydrolyzable group. The "hydrolyzable group" is as defined above.

R⁷² is preferably a hydrolyzable group, and more preferably -OR (wherein R is optionally substituted C₁₋₃-alkyl, and more preferably methyl).

In the formula, R⁷³ each independently is H or C₁₋₂₀-alkyl, preferably C₁₋₆-alkyl, and more preferably methyl.

In one embodiment, R⁷³ is C₁₋₂₀-alkylZas defined above.

In the formula, p1 each independently is an integer of 0-3; q1 each independently is an integer of 0-3; and r1 each independently is an integer of 0-3. In each (-Z³-SiR⁷¹ₚ₁R⁷²_{q1}R⁷³ᵣ₁), (p1+q1+r1) = 3, and in the formulae (B1) and (B2), at least one q1 is an integer of 1-3, that is, there is at least one R⁷². By having such a configuration, the PFPE-containing silane compound can form a surface-treating layer capable of being favorably bonded to the surface of a base material or the like. Further, by having such a configuration, the PFPE-containing silane compound can form a surface-treating layer having good UV durability, water-repellency, oil-repellency, antifouling property (for example, preventing adhesion of fouling such as fingerprints), heat resistance, high friction durability, hydrolysis resistance, chemical resistance and moisture-proof property.

In a preferred embodiment, in the formulae (B1) and (B2), there are at least two Si atoms binding to the hydroxyl group or the hydrolyzable group. That is, in the formulae (B1) and (B2), there are at least two -SiR⁷² and/or -SiR^{b}. By having such a configuration, the PFPE-containing silane compound can form a surface-treating layer capable of being favorably bonded to the surface of a base material or the like. Further, by having such a configuration, the PFPE-containing silane compound can form a surface-treating layer having better UV durability, water-repellency, oil-repellency, antifouling property (for example, preventing adhesion of fouling such as fingerprints), heat resistance, high friction durability, hydrolysis resistance, chemical resistance, moisture-proof property, and the like, in particular, good UV durability, high friction durability and chemical resistance.

Preferably, in the formulae (B1) and (B2), there is - SiR⁷²₂ (specifically, -SiR⁷²₂R⁷³ or -SiR⁷²₃) or -SiR^{b}₂ (specifically, -SiR^{a}R^{b}₂, -SiR^{b}₂R^{c}, or -SiR^{b}₃).

In a preferred embodiment, in R^{a}' at the end of R^{a} (R^{a} when there is no R^{a}'), q1 is preferably 2 or 3, and more preferably 3.

In a preferred embodiment, at least one of the ends in R^{a} may be -Si(-Z³-SiR⁷²_{qi}R⁷³ᵣ₁)₂ (specifically, -Si(-Z³-SiR⁷²_{q1}R⁷³ᵣ₁)₂R⁷³) or -Si(-Z³-SiR⁷²_{q1}R⁷³ᵣ₁)₃, and preferably -Si (-Z³-SiR⁷²_{q1}R⁷³ᵣ₁)₃. Here, q1 is an integer of ≥ 1, and preferably q1 is 2 or 3. Here, the sum of q1 and r1 is 3. In the formula, the unit (-Z³-SiR⁷²_{q1}R⁷³ᵣ₁) is preferably (-Z³-SiR⁷²₃). In a still more preferred embodiment, all ends in R^{a} may be -Si (-Z³-SiR⁷²_{q1}R⁷³ᵣ₁)₃, and preferably -Si (-Z³-SiR⁷²₃)₃.

In the formula, R^{b} each independently is OH or a hydrolyzable group.

R^{b} is preferably OH, -OR, -OCOR, -O-N=C(R)₂, -N(R)₂, - NHR, halogen (wherein R is optionally substituted C₁₋₄-alkyl), and more preferably -OR. R includes unsubstituted alkyl such as methyl, ethyl, propyl, isopropyl, n-butyl, and isobutyl; and substituted alkyl such as chloromethyl. Among them, alkyl, in particular non-substituted alkyl is preferred, methyl or ethyl is more preferred. The hydroxyl group may be, but is not limited to, a group generated by hydrolysis of a hydrolyzable group. More preferably, R^{b} is -OR (wherein R is optionally substituted C₁₋₃-alkyl, and more preferably methyl).

In the formula, R^{c} each independently is H or C₁₋₂₀-alkyl, preferably C₁₋₆-alkyl, and still more preferably methyl.

In the formula, k1 each independently is an integer of 0-3; 11 each independently is an integer of 0-3; and m1 each independently is an integer of 0-3. In each (SiR^{a}ₖ₁R^{b}ₗ₁R^{c}ₘ₁), (k1+l1+m1) = 3.

In one embodiment, k1 is preferably 1-3, more preferably 2 or 3, and particularly preferably 3. In this embodiment, q1 is 1-3, preferably 2 or 3, and more preferably 3.

In one embodiment, preferably, k1 is an integer of 1-3 and q1 is 2 or 3, more preferably, k1 is 2 or 3 and q1 is 2 or 3, and still more preferably, k1 is 3 and q1 is 2 or 3.

In one embodiment, preferably, k1 is an integer of 1-3 and q1 is 3, more preferably, k1 is 2 or 3 and q1 is 3, and still more preferably, k1 is 3 and q1 is 3.

In one embodiment, k1 is an integer of 1-3 and Z³ is a divalent organic group. Preferably, Z³ does not include a group which forms a siloxane bond together with a Si atom (the Si atom binding to R^{a}) present at the end of the molecular backbone of the formulae (B1) or (B2). More preferably, Z³ is preferably C₁₋₆-alkylene, - (CH₂)_{g}-O-(CH₂)ₕ-(wherein g is an integer of 1-6, h is an integer of 1-6) or - phenylene-(CH₂)ᵢ- (wherein i is an integer of 0-6), and more preferably C₁₋₃-alkylene.

Examples of preferable PFPE-containing silane compounds of formula (B1) include the following compounds. In the following, Rf is as defined above and d is 5-40.

Rf-(OCF(CF₃)CF₂)_{d}-OCF(CF₃)-CH₂CH₂CH₂- Si(CH₂CH₂SiCH₃(OCH₃)₂)₃,

Rf-(OCF(CF₃)CF₂)_{d}-OCF(CF₃)-CH₂CH₂CH₂- Si(CH₂CH₂CH₂SiCH₃(OCH₃)₂)₃,

Rf-(OCF(CF₃)CF₂)_{d}-OCF(CF₃)-CH₂OCH₂CH₂CH₂- Si(CH₂CH₂SiCH₃(OCH₃)₂)₃,

Rf-(OCF(CF₃)CF₂)_{d}-OCF(CF₃)-CH₂OCH₂CH₂CH₂- Si(CH₂CH₂CH₂SiCH₃(OCH₃)₂)₃,

Rf-(OCF(CF₃)CF₂)_{d}-OCF(CF₃)-CONH-CH₂- Si(CH₂CH₂SiCH₃(OCH₃)₂)₃,

Rf-(OCF(CF₃)CF₂)_{d}-OCF(CF₃)-CONH-CH₂- Si(CH₂CH₂CH₂SiCH₃(OCH₃)₂)₃,

Rf-(OCF(CF₃)CF₂)_{d}-OCF(CF₃)-CONH-CH₂CH₂CH₂- Si(CH₂CH₂SiCH₃(OCH₃)₂)₃,

Rf-(OCF(CF₃)CF₂)_{d}-OCF(CF₃)-CONH-CH₂CH₂CH₂- Si(CH₂CH₂CH₂SiCH₃(OCH₃)₂)₃,

Rf-(OCF(CF₃)CF₂)_{d}-OCF(CF₃)-CH₂CH₂CH₂-Si(CH₂CH₂Si(OCH₃)₃,

Rf-(OCF(CF₃)CF₂)_{d}-OCF(CF₃)-CH₂CH₂CH₂- Si(CH₂CH₂CH₂Si(OCH₃)₃)₃,

Rf-(OCF(CF₃)CF₂)_{d}-OCF(CF₃)-CH₂OCH₂CH₂CH₂- Si(CH₂CH₂Si(OCH₃)₃)₃,

Rf-(OCF(CF₃)CF₂)_{d}-OCF(CF₃)-CH₂OCH₂CH₂CH₂- Si(CH₂CH₂CH₂Si(OCH₃)₃)₃,

Rf-(OCF(CF₃)CF₂)_{d}-OCF(CF₃)-CONH-CH₂-Si(CH₂CH₂Si(OCH₃)₃)₃,

Rf-(OCF(CF₃)CF₂)_{d}-OCF(CF₃)-CONH-CH₂- Si(CH₂CH₂CH₂Si(OCH₃)₃)₃,

Rf-(OCF(CF₃)CF₂)_{d}-OCF(CF₃)-CONH-CH₂CH₂CH₂- Si(CH₂CH₂Si(OCH₃)₃)₃,

Rf-(OCF(CF₃)CF₂)_{d}-OCF(CF₃)-CONH-CH₂CH₂CH₂- Si(CH₂CH₂CH₂Si(OCH₃)₃)₃

The number average molecular weight of the compounds of the formulae (B1) and (B2) may be, for example, a number average molecular weight of 5 × 10² to 1 × 10⁵. Within this range, the number average molecular weight is preferably 1,000-30,000, more preferably 1,000-12,000, and still more preferably 1,000-6,000. In the present disclosure, the number average molecular weight is a value measured by ¹⁹F-NMR.

In a preferred embodiment, in the formulae (B1) and (B2), PFPE is each independently a group of the formula - (OCF(CF₃)CF₂)_{d}-, wherein d is an integer of 1-200, preferably 5-200, and more preferably 10-200;
X³ each independently is -X^{f}-X¹⁰-CON(R³⁴)-X¹¹-, -X^{f}-X¹⁰-(OR³⁵)ₙ₄-X¹¹-, or -X^{f}-(C₁₋₆-alkylene) (preferably propylene), and preferably -X^{f}-X¹⁰-CON(R³⁴)-X¹¹-;
X^{f} each independently is a single bond or C₁₋₆-alkylene, preferably a single bond or C₁₋₄-alkylene, and more preferably a single bond or C₁₋₂-alkylene (for example, methylene), wherein the hydrogen atom in X^{f} is optionally substituted by one or more substituents selected from F, C₁₋₃-alkyl, and C₁₋₃-fluoroalkyl group, and preferably substituted;
X¹⁰ each independently is a single bond, -O-R³⁶-O-, - R³⁶-, or o-, m-, or p-phenylene, preferably a single bond, - O-R³⁶-O-, or -R³⁶-, more preferably a single bond or -R³⁶-, and still more preferably a single bond;
R³⁶ is C₁₋₂₀-alkylene optionally substituted by F, preferably a C₁₋₃-alkylene optionally substituted by F, and still more preferably C₁₋₂-alkylene optionally substituted by F, wherein the alkylene group in R³⁶ may be linear or may have a branched structure;
X¹¹ each independently is a single bond, an oxygen atom, or C₁₋₂₀-alkylene optionally substituted by F, preferably a single bond or C₁₋₆-alkylene having no substituent, more preferably a single bond or C₁₋₃-alkylene having no substituent, and particularly preferably C₁₋₃-alkylene having no substituent;
R³⁴ each independently is H, phenyl, or C₁₋₆-alkyl, preferably H or C₁₋₆-alkyl, more preferably H or methyl, and still more preferably H;
R³⁵ each independently is C₁₋₆-alkylene, and preferably C₁₋₃-alkylene;
n4 each independently is - an integer of 1-5, preferably - 1-3, and more preferably 1;
Z³ is preferably C₁₋₆-alkylene or -phenylene-(CH₂)ᵢ-, more preferably C₁₋₆-alkylene, and still more preferably C₁₋₃-alkylene; and
i is an integer of 0-6.

In one embodiment, the compounds of the formulae (B1) and (B2) have a number average molecular weight of 1,000-8,000, and preferably 1,000-4,000. By having such a number average molecular weight, a layer (for example, a surface-treating layer) formed by using the compound (or a surface-treating agent containing the compound) can be further improved in slip suppression effect and friction durability.

In a preferred embodiment, the compounds the formulae (B1) and (B2) are compounds of the formula (B1).

In one embodiment, the compounds of the formulae (B1) and (B2) may be prepared, for example, by introducing a hydroxyl group in the end of a fluoropolyether derivative corresponding to the Rf-PFPE moiety as a raw material, followed by further introducing a group having an unsaturated bond in the end thereof, and reacting the group having an unsaturated bond with a silyl derivative having a halogen atom, further introducing a hydroxyl group in the end and then a group having an unsaturated bond into the silyl group, and finally reacting the group having an unsaturated bond with a silyl derivative. For example, it may be synthesized as described in WO 2014/069592.

Formulae (C1) and (C2):

(Rf-PFPE)_{γ'}-X⁵-(CR^{d}ₖ₂R^{e}ₗ₂R^{f}ₘ₂)_{γ} ... (C1)

(R^{f}ₘ₂R^{e}ₗ₂R^{d}ₖ₂C)_{γ}-X⁵-PFPE-X⁵-(CR^{d}ₖ₂R^{e}ₗ₂R^{f}ₘ₂)_{γ} ... (C2)

In the formulae (C1) and (C2), Rf and PFPE are as defined for the formulae (A1) and (A2). Here, the "formula (A1)" is to be read as "formula (C1)" and the "X¹ group" is to be read as "X⁵ group".

In the formula, X⁵ each independently is a single bond or a 2- to 10-valent organic group. X⁵ is recognized to be a linker which connects between a fluoropolyether moiety (i.e., an Rf-PFPE moiety or -PFPE- moiety) providing mainly water-repellency, surface lubricity and the like and a moiety (i.e., a group in parentheses with γ) providing an ability to bind to a base material in the compound of the formulae (C1) and (C2). Therefore, X⁵ may be a single bond or any organic group as long as the compounds of the formulae (C1) and (C2) can stably exist. In the present specification, in the group described as X⁵, the left side of the group is bonded to the group represented by PFPE, and the right side thereof is bonded to the group in parentheses with γ.

In the formula, γ is an integer of 1-9, and γ' is an integer of 1-9. These γ and γ' may vary depending on the valence number of X⁵. In the formula (C1), the sum of γ and γ' is the same as the valence number of X⁵. For example, when X⁵ is a 10-valent organic group, the sum of γ and γ' is 10, for example, γ and γ' may be 9 and 1, γ and γ' may be 5 and 5, or γ and γ' may be 1 and 9. When X⁵ is a divalent organic group, γ and γ' are 1. In formula (C2), γ is a value obtained by subtracting 1 from the valence number of X⁵.

X⁵ is preferably a 2- to 7-valent, more preferably a 2- to 4-valent, and still more preferably a divalent organic group.

In one embodiment, X⁵ is a 2- to 4-valent organic group, γ is 1-3, and γ' is 1.

In another embodiment, X⁵ is a divalent organic group, γ is 1, and γ' is 1. In this case, the formulae (C1) and (C2) are of the following formulae (C1') and (C2').

Rf-PFPE-X⁵-CR^{d}ₖ₂R^{e}ₗ₂R^{f}ₘ₂ ··· (C1')

R^{f}ₘ₂R^{e}ₗ₂R^{d}ₖ₂C-X⁵-PFPE-X⁵-CR^{d}ₖ₂R^{e}ₗ₂R^{f}ₘ₂ ··· (C2)

Examples of X⁵ include the same group as those described for X¹.

Examples of preferred X⁵ include:
-X¹⁰-CON(R³⁴)-X¹¹-,
-X¹⁰-(OR³⁵)ₙ₄-X¹¹-, and
C₁₋₆-alkylene (preferably propylene). In the formula, R³⁴, R³⁵, X¹⁰, X¹¹, and n4 are as defined above.

In one embodiment X⁵ is a single bond.

In one embodiment, examples of X⁵ include the following structure:
-X^{f}-X¹⁰-CON(R³⁴)-X¹¹-,
-X^{f}-X¹⁰-(OR³⁵)ₙ₄-X¹¹-, and
-X^{f}-(C₁₋₆-alkylene) (preferably propylene).

In the formula, X^{f}, X¹⁰, R³⁴, X¹¹, R³⁵, and n4 are as defined above.

Examples of particularly preferred X⁵ include:
a single bond;

-O-CFHCF₂-O-CONH-,

-O-CFHCF₂-O-CONH-CH₂-,

-O-CFHCF₂-O-CONH-(CH₂)₂-,

-O-CFHCF₂-O-CONH-(CH₂)₃-,

-O-CFHCF₂-O-CONH-(CH₂)₆-,

-CONH-,

-CONH-CH₂-,

-CONH-(CH₂)₂-,

-CONH-(CH₂)₃-,

-CONH-(CH₂)₆-,

-CF₂-CONH-,

-CF₂-CONH-CH₂-,

-CF₂-CONH-(CH₂)₂-,

-CF₂-CONH-(CH₂)₃-,

-CF₂-CONH-(CH₂)₆-,

-O-CFHCF₂-O-CH₂OCH₂-,

-O-CFHCF₂-O-CH₂O(CH₂)₂-,

-O-CFHCF₂-O-CH₂O(CH₂)₃-,

-O-CFHCF₂-O-CH₂O(CH₂)₆-,

-CH₂OCH₂-,

-CH₂O(CH₂)₂-,

-CH₂O(CH₂)₃-,

-CH₂O(CH₂)₆-,

-CF₂-CH₂OCH₂-,

-CF₂-CH₂O(CH₂)₂-,

-CF₂-CH₂O(CH₂)₃-,

-CF₂-CH₂O(CH₂)₆-,

-O-CFHCF₂-O-,

-O-CFHCF₂-O-(CH₂)₂-,

-O-CFHCF₂-O-(CH₂)₃-,

-O-CFHCF₂-O-(CH₂)₆-,

-CH₂-,

-(CH₂)₂-,

-(CH₂)₃-,

- (CH₂)₆-

-CF₂-,

- (CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

and

-CF₂-(CH₂)₆-.

In a preferred embodiment, X⁵ is
-X¹⁰-CON(R³⁴)-X¹¹-, or
C₁₋₆-alkylene (preferably propylene) .

In the formula:
R³⁴ is as defined above, and preferably H or C₁₋₆-alkyl, more preferably H or methyl, and still more preferably H;
X¹⁰ is as defined above, and preferably a single bond, -R³⁶-, or o-, m-, or p-phenylene, more preferably a single bond or -R³⁶-, and still more preferably a single bond;
R³⁶ is as defined above, and preferably C₁₋₂₀-alkylene optionally substituted by F, more preferably C₁₋₃-alkylene optionally substituted by F, and still more preferably C₁₋₂-alkylene optionally substituted by F; and
X¹¹ is as defined above, and preferably a single bond or C₁₋₂₀-alkylene optionally substituted by F, more preferably a single bond or C₁₋₆-alkylene having no substituent, still more preferably a single bond or C₁₋₃-alkylene having no substituent, and particularly preferably C₁₋₃-alkylene having no substituent.

In the embodiment, X⁵ is particularly preferably -X¹⁰-CON (R³⁴)-X¹¹-. In the formula, R³⁴, X¹⁰, and X¹¹ are as defined above.

In the embodiment, X¹⁰ is particularly preferably a single bond and X¹¹ is particularly preferably a C₁₋₃-alkylene, and X¹¹ is still more preferably C₁₋₃-alkylene having no substituent.

In the formula, R^{d} each independently is -Z⁴-CR⁸¹ₚ₂R⁸²_{q2}R⁸³ᵣ₂.

In the formula, Z⁴ each independently is an oxygen atom or a divalent organic group.

Z⁴ is preferably C₁₋₆-alkylene, - (CH₂)_{g}-O-(CH₂)ₕ-(wherein g is an integer of 0-6, for example, an integer of 1-6, h is an integer of 0-6, for example, of 1-6) or - phenylene-(CH₂)ᵢ- (wherein i is an integer of 0-6), and more preferably C₁₋₃-alkylene. These groups are optionally substituted by, for example, one or more substituents selected from F, C₁₋₆-alkyl, C₂₋₆-alkenyl and C₂₋₆-alkynyl.

In the formula, R⁸¹ each independently is R^{d'}. R^{d'} is as defined for R^{d}.

In R^{d}, the number of C atoms which are linearly linked via the Z⁴ group is up to five. That is, in R^{d}, when there is at least one R⁸¹, there are two or more C atoms which are linearly connected via the Z⁴ group in R^{d}. The number of such C atoms which are linearly connected via the Z⁴ group is up to five. It is noted that "the number of C atoms which are linearly connected via the Z⁴ group in R^{d}" is equal to the repeating number of -Z⁴-C- which are linearly connected in R^{d}.

In a preferred embodiment, as shown below, "the number of C atoms which are linearly connected via the Z⁴ group in R^{d}" is 1 (left formula) or 2 (right formula) in all chains.

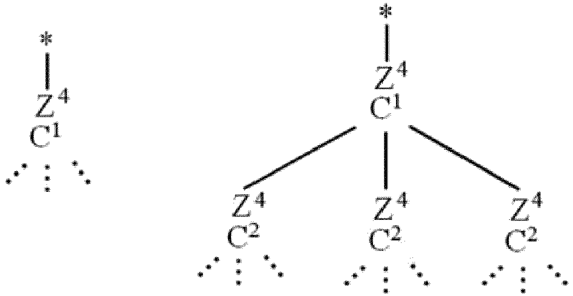

In one embodiment, the number of C atoms which are linearly connected via the Z⁴ group in R^{d} is 1 or 2, and preferably 1.

In the formula, R⁸² each independently at each occurrence represents -Y-SiR⁸⁵ₙ₂R⁸⁶₃₋ₙ₂.

Y each independently is a divalent organic group.

In a preferred embodiment, Y is C₁₋₆-alkylene, -(CH₂)_{g'}-O-(CH₂)_{h'}- (wherein g' is an integer of 0-6, for example, of 1-6, h' is an integer of 0-6, for example, of 1-6) or - phenylene-(CH₂)_{i'}- (wherein i' is an integer of 0-6). These groups are optionally substituted by, for example, one or more substituents selected from F, C₁₋₆-alkyl, C₂₋₆-alkenyl and C₂₋₆-alkynyl.

In one embodiment, Y may be C₁₋₆-alkylene or - phenylene-(CH₂)_{i'}-. When Y is a group as described above, light resistance, especially UV resistance can be further increased. In the formula, i' is an integer of 0-6.

Y is preferably C₁₋₆-alkylene, and more preferably C₂₋₃-alkylene.

In one embodiment, X⁵ is preferably -X¹⁰-CON(R³⁴)-X¹¹-or C₁₋₆-alkylene (preferably propylene), and more preferably - X¹⁰-CON(R³⁴)-X¹¹-; and

Y is preferably C₁₋₆-alkylene or -phenylene-(CH₂)_{i'}-, and more preferably C₁₋₆-alkylene.

R³⁴, X¹⁰, X¹¹ and i' are as defined above.

In one embodiment,
X⁵ is preferably -X¹⁰-CON(R³⁴)-X¹¹- or C₁₋₆-alkylene (preferably propylene), and more preferably -X¹⁰-CON(R³⁴)-X¹¹-; and
Y is preferably C₁₋₆-alkylene or -phenylene-(CH₂)_{i'}-, more preferably C₁₋₆-alkylene, and still more preferably C₂₋₃-alkylene.

In the formula:
R³⁴ is H or C₁₋₆-alkyl, preferably H, or methyl, and more preferably H;
X¹⁰ is a single bond, -R³⁶-, or o-, m-, or p-phenylene, preferably a single bond or -R³⁶-, and more preferably a single bond;
R³⁶ is C₁₋₂₀-alkylene optionally substituted by F, preferably C₁₋₃-alkylene optionally substituted by F, and more preferably C₁₋₂-alkylene optionally substituted by F;
X¹¹ is a single bond or C₁₋₂₀-alkylene optionally substituted by F, preferably a single bond or C₁₋₆-alkylene having no substituent, more preferably a single bond or C₁₋₃-alkylene having no substituent, and particularly preferably C₁₋₃-alkylene having no substituent; and
i' is an integer of 0-6.

In the embodiment, X¹⁰ is particularly preferably a single bond and X¹¹ is particularly preferably C₁₋₃-alkylene, and X¹¹ is still more preferably C₁₋₃-alkylene having no substituent. More preferably, X⁵ is -X¹⁰-CON(R³⁴)-X¹¹-.

R⁸⁵ each independently is OH or a hydrolyzable group. The "hydrolyzable group" is as defined above.

R⁸⁵ is preferably -OR (wherein R is optionally substituted C₁₋₃-alkyl, more preferably methyl or ethyl, and particularly methyl).

R⁸⁶ each independently is H or C₁₋₂₀-alkyl, preferably C₁₋₆-alkyl, and more preferably methyl.

n2 independently represents an integer of 0-3, preferably of 1-3, more preferably 2 or 3, and particularly preferably 3 for each (-Y-SiR⁸⁵ₙ₂R⁸⁶₃₋ₙ₂) unit.

R⁸³ each independently is H, OH, or C₁₋₂₀-alkyl, and preferably H or C₁₋₂₀-alkyl. The alkyl group is preferably C₁₋₆-alkyl, and more preferably methyl.

In the formula, p2 each independently is an integer of 0-3; q2 each independently is an integer of 0-3; and r2 each independently is an integer of 0-3. In each (-Z⁴-CR⁸¹ₚ₂R⁸²_{q2}R⁸³ᵣ₂), (p2+q2+r2) = 3.

In the formula, R^{e} each independently is -Y-SiR⁸⁵ₙ₂R⁸⁶₃₋ₙ₂. Here, Y, R⁸⁵, R⁸⁶, and n2 are as described in R⁸².

In the formula, R^{f} each independently is H, OH, or C₁₋₂₀-alkyl, and preferably H or C₁₋₂₀-alkyl. The alkyl group is preferably C₁₋₆-alkyl, and more preferably methyl.

In the formula, k2 each independently is an integer of 0-3; 12 each independently is an integer of 0-3; and m2 each independently is an integer of 0-3. The sum of (k2+l2+m2) = 3.

In the formulae (C1) and (C2), there is at least one group -Y-SiR⁸⁵. By having such a configuration, the PFPE-containing silane compound can form a surface-treating layer having good UV durability, water-repellency, oil-repellency, antifouling property (for example, preventing adhesion of fouling such as fingerprints), heat resistance, high friction durability, hydrolysis resistance and chemical resistance, moisture-proof property.

In a preferred embodiment, in the formulae (C1) and (C2), there are two or more groups -Y-SiR⁸⁵. Specifically, there are two or more groups -Y-SiR⁸⁵ₙ₂R⁸⁶₃₋ₙ₂ (n2 is an integer of 1-3). Preferably, in the formulae (C1) and (C2), there are at least two groups -Y-SiR⁸⁵ₙ₂R⁸⁶₃₋ₙ₂ in which n2 is ≥ 2. That is, preferably, in the formulae (C1) and (C2), there are at least two groups -Y-SiR⁸⁵₂R⁸⁶ or -Y-SiR⁸⁵₃. By having such a configuration, the PFPE-containing silane compound can form a surface-treating layer having better UV durability, water-repellency, oil-repellency, antifouling property (for example, preventing adhesion of fouling such as fingerprints), heat resistance, high friction durability, hydrolysis resistance, chemical resistance, moisture-proof property, and the like, in particular, good UV durability, high friction durability and chemical resistance.

In one embodiment, in the formulae (C1) and (C2), n2 is an integer of 1-3 and at least one q2 is preferably 2 or 3 or at least one 12 is preferably 2 or 3. That is, in the formula, there are preferably at least two -Y-SiR⁸⁵ₙ₂R⁸⁶₃₋ₙ₂ groups.

In the formulae (C1) and (C2), the unit (-Y-SiR⁸⁵ₙ₂R⁸⁶₃₋ₙ₂) is preferably (-Y-SiR⁸⁵₂R⁸⁶) or (-Y-SiR⁸⁵₃), and more preferably (-Y-SiR⁸⁵₃).

In a preferred embodiment, in R^{d}' at the end of R^{d} (R^{d} when there is no R^{d}'), q2 is preferably ≥ 2, for example, 2 or 3, and more preferably 3. In this embodiment, more preferably q2 is 2 or more, for example 2 or 3, and n2 is an integer of 2 or 3, still more preferably q2 is 2 or more, for example 2 or 3, and n2 is 3, and particularly preferably q2 is 3 and n2 is 3.

In a preferred embodiment, at least one of the ends of R^{d} may be -C(-Y-SiR⁸⁵ₙ₂R⁸⁶₃₋ₙ₂)₂ (specifically, -C(-Y-SiR⁸⁵ₙ₂R⁸⁶₃₋ₙ₂)₂R⁸³) or -C(-Y-SiR⁸⁵ₙ₂R⁸⁶₃₋ₙ₂)₃, and preferably -C(-Y-SiR⁸⁵ₙ₂R⁸⁶₃₋ₙ₂)₃. In the formula, the unit (-Y-SiR⁸⁵ₙ₂R⁸⁶₃₋ₙ₂) is (-Y-SiR⁸⁵₂R⁸⁶) or (-Y-SiR⁸⁵₃), and preferably (-Y-SiR⁸⁵₃). In a still more preferred embodiment, all ends in R^{d} may be -C(-Y-SiR⁸⁵ₙ₂R⁸⁶₃₋ₙ₂)₃ and n2 may be an integer of 2 or 3, and preferably -C(-Y-SiR⁸⁵₃)₃.

In a more preferred embodiment, the end of groups represented by (CR^{d}ₖ₂R^{e}ₗ₂R^{f}ₘ₂) is C(-Y-SiR⁸⁵ₙ₂R⁸⁶₃₋ₙ₂)₂R⁸³, C(-Y-SiR⁸⁵ₙ₂R⁸⁶₃₋ₙ₂)₂R^{f}, or C(-Y-SiR⁸⁵ₙ₂R⁸⁶₃₋ₙ₂)₃, preferably C(-Y-SiR⁸⁵ₙ₂R⁸⁶₃₋ₙ₂)₂R^{f} or C(-Y-SiR⁸⁵ₙ₂R⁸⁶₃₋ₙ₂)₃, and more preferably C(-Y-SiR⁸⁵ₙ₂R⁸⁶₃₋ₙ₂)₃. Here, n2 is an integer of 1-3. In the formula, the unit (-Y-SiR⁸⁵ₙ₂R⁸⁶₃₋ₙ₂) is preferably (-Y-SiR⁸⁵₃). In a still more preferred embodiment, all ends in the group may be -C(-Y-SiR⁸⁵ₙ₂R⁸⁶₃₋ₙ₂)₃, and preferably -C(-Y-SiR⁸⁵₃)₃.

In one embodiment, there are 1-3 R^{e} (i.e., 12 is an integer of 1-3), preferably 2-3 R^{e} (i.e., l2 is 2 or 3), and more preferably three R^{e} (i.e., 12 is 3). In this embodiment, n2 is 2 or 3, and preferably 3. More preferably, 12 is 2 or 3 and n2 is 2 or 3, and still more preferably, 12 is 3 and n2 is 3.

In one embodiment, there are 1-3 R^{e} (i.e., 12 is an integer of 1-3), preferably 2-3 R^{e} (i.e., l2 is 2 or 3), and more preferably three R^{e} (i.e., 12 is 3). In this embodiment, R^{e} is (-Y-SiR⁸⁵₂R⁸⁶) or (-Y-SiR⁸⁵₃), and preferably (-Y-SiR⁸⁵₃). More preferably, 12 is 2 or 3, and R^{e} is (-Y-SiR⁸⁵₂R⁸⁶) or (-Y-SiR⁸⁵₃), and still more preferably, 12 is 3 and R^{e} is (-Y-SiR⁸⁵₃).

In one embodiment, at least one k2 is 2 or 3, and preferably 3. In this embodiment, in R^{d}' at the end of R^{d} (R^{d} when there is no R^{d}'), there are two or more R⁸² (i.e., q2 is 2 or more), for example, there are two or three R⁸² (i.e., q2 is 2 or 3), and R⁸² is (-Y-SiR⁸⁵₂R⁸⁶) or (-Y-SiR⁸⁵₃), and preferably, (-Y-SiR⁸⁵₃). More preferably, there are three R⁸² (i.e., q2 is 3) and R⁸² is (-Y-SiR⁸⁵₂R⁸⁶) or (-Y-SiR⁸⁵₃), and particularly preferably, there are three R⁸² (i.e., q2 is 3) and R⁸² is (-Y-SiR⁸⁵₃).

In one embodiment, k2 is 2 or 3, and preferably 3. In this embodiment, in R^{d}' at the end of R^{d} (R^{d} when there is no R^{d}'), there are two or three R⁸² and R⁸² is (-Y-SiR⁸⁵₂R⁸⁶) or (-Y-SiR⁸⁵₃). More preferably, there are two or three R⁸² and R⁸² is (-Y-SiR⁸⁵₃), and particularly preferably, there are three R⁸² and R⁸² is (-Y-SiR⁸⁵₃).

Examples of the PFPE-containing silane compound of the preferable formula (C1) include the following compounds. In the following, Rf is as defined above (for example, CF₃CF₂CF₂), and d is 5-40.

Rf- (OCF(CF₃)CF₂)_{d}OCF(CF₃)CONHCH₂C(CH₃)(CH₂CH₂CH₂Si(OCH₃)₃)₂,

Rf-(OCF(CF₃)CF₂)_{d}OCF(CF₃)CONHCH₂C(CH₂CH₂CH₂Si(OCH₃)₃)₃,

Rf- (OCF(CF₃)CF₂)_{d}OCF(CF₃)CH₂OCH₂C(CH₃)(CH₂CH₂CH₂Si(OCH₃)₃)₂,

Rf-(OCF(CF₃)CF₂)_{d}OCF(CF₃)CH₂OCH₂C(CH₂CH₂CH₂Si(OCH₃)₃)₃,

Rf- (OCF(CF₃)CF₂)_{d}OCF(CF₃)CH₂OCH₂C(CH₃)(CH₂OCH₂CH₂CH₂Si(OCH₃)₃)₂,

Rf-(OCF(CF₃)CF₂)_{d}OCF(CF₃)CH₂OCH₂C(CH₂OCH₂CH₂CH₂Si(OCH₃)₃)₃,

Rf-(OCF(CF₃)CF₂)_{d}OCF(CF₃)-CH₂CH₂CH₂- C(CH₃)(CH₂CH₂CH₂Si(OCH₃)₃)₂,

Rf-(OCF(CF₃)CF₂)_{d}OCF(CF₃)-CH₂CH₂CH₂-C(CH₂CH₂CH₂Si(OCH₃)₃)₃

The number average molecular weight of the compounds represented by the formulae (C1) and (C2) may be, for example, a number average molecular weight of 5 × 10² to 1 × 10⁵. Within this range, the number average molecular weight is preferably 1,000-30,000, more preferably 1,000-12,000, and still more preferably 1,000-6,000. In the present disclosure, the number average molecular weight is a value measured by ¹⁹F-NMR.

In one embodiment, the compounds of the formulae (C1) and (C2) have a number average molecular weight of 1,000-8,000, and preferably 1,000-4,000. By having such a number average molecular weight, a layer (for example, a surface-treating layer) formed by using the compound (or a surface-treating agent containing the compound) can be further improved in slip suppression effect and abrasion resistance.

In one embodiment,
PFPE is each independently a group of the formula - (OCF(CF₃)CF₂)_{d}- wherein d is an integer of 1-200, preferably 5-200, and more preferably 10-200;
X⁵ is a single bond, -X^{f}-X¹⁰-CON(R³⁴)-X¹¹-, -X^{f}-X¹⁰-(OR³⁵)ₙ₄-X¹¹-, or -X^{f}-(C₁₋₆-alkylene) (preferably propylene);
X^{f} each independently is a single bond or C₁₋₆-alkylene, preferably a single bond or C₁₋₄-alkylene, and more preferably a single bond or C₁₋₂-alkylene (for example, methylene), wherein the hydrogen atom in X^{f} is optionally substituted by one or more substituents selected from F, C₁₋₃-alkyl and C₁₋₃-fluoroalkyl, and preferably substituted;
X¹⁰ each independently is a single bond, -O-R³⁶-O-,-R³⁶-, or o-, m-, or p-phenylene, preferably a single bond,-O-R³⁶-O-, or -R³⁶-, more preferably a single bond or -R³⁶-, and still more preferably a single bond;
R³⁶ is C₁₋₂₀-alkylene optionally substituted by F, preferably C₁₋₃-alkylene optionally substituted by F, and still more preferably C₁₋₂-alkylene optionally substituted by F, wherein the alkylene group in R³⁶ may be linear or may have a branched structure;
X¹¹ each independently is a single bond, an oxygen atom, or C₁₋₂₀-alkylene optionally substituted by F, preferably a single bond or C₁₋₆-alkylene having no substituent, more preferably a single bond or C₁₋₃-alkylene having no substituent, and particularly preferably C₁₋₃-alkylene having no substituent;
R³⁴ each independently is H, phenyl, or C₁₋₆-alkyl, preferably H or C₁₋₆-alkyl, more preferably H or methyl, and still more preferably H;
R³⁵ each independently is C₁₋₆-alkylene, and preferably C₁₋₃-alkylene;
n4 each independently is an integer of 1-5, preferably of 1-3, and more preferably 1;
Y each independently is -(CH₂)_{g'}-O-(CH₂)_{h'}- (wherein g' is an integer of 0-6, h' is an integer of 0-6, for example of 1-6) or C₁₋₆-alkylene (preferably C₂₋₃-alkylene) ;
12 is 3; and
n2 is 3.

In the embodiment, g' may be 0.

In one embodiment,
PFPE is each independently a group represented by the formula -(OCF(CF₃)CF₂)_{d}- wherein d is an integer of 1-200, preferably 5-200, and more preferably 10-200);
X⁵ is a single bond;
Y each independently is - (CH₂)_{g'}-O-(CH₂)_{h'}- (wherein g' is an integer of 0-6, for example, g' is 0, h' is an integer of 0-6, for example, of 1-6) or C₁₋₆-alkylene (preferably C₂₋₃-alkylene);
12 is 3; and
n2 is 3.

In a preferred embodiment, in the formulae (C1) and (C2),
PFPE each independently is a group of the formula-(OCF(CF₃)CF₂)_{d}- wherein d is an integer of 1-200, preferably 5-200, and more preferably 10-200);
X⁵ each independently is -X^{f}-X¹⁰-CON(R³⁴)-X¹¹-, -X^{f}-_{X}10-(OR³⁵)ₙ₄-X¹¹-, or -X^{f}-(C₁₋₆-alkylene) (preferably propylene), and preferably -X^{f}-X¹⁰-CON(R³⁴)-X¹¹-;
X^{f} each independently is a single bond or C₁₋₆-alkylene, preferably a single bond or C₁₋₄-alkylene, and more preferably a single bond or C₁₋₂-alkylene (for example, methylene), wherein the hydrogen atom in X^{f} is optionally substituted by one or more substituents selected from F, C₁₋₃-alkyl and C₁₋₃-fluoroalkyl, and preferably substituted;
X¹⁰ each independently is a single bond, -O-R³⁶-O-,-R³⁶-, or o-, m-, or p-phenylene, preferably a single bond,-O-R³⁶-O-, or -R³⁶-, more preferably a single bond or -R³⁶-, and still more preferably a single bond;
R³⁶ is C₁₋₂₀-alkylene optionally substituted by F, preferably C₁₋₃-alkylene optionally substituted by F, and still more preferably C₁₋₂-alkylene optionally substituted by F, wherein the alkylene group in R³⁶ may be linear or may have a branched structure;
X¹¹ each independently is a single bond, an oxygen atom, or C₁₋₂₀-alkylene optionally substituted by F, preferably a single bond or C₁₋₆-alkylene having no substituent, more preferably a single bond or C₁₋₃-alkylene having no substituent, and particularly preferably C₁₋₃-alkylene having no substituent;
R³⁴ each independently is H, phenyl, or C₁₋₆-alkyl, preferably H or C₁₋₆-alkyl, more preferably H or methyl, and still more preferably H;
R³⁵ each independently is C₁₋₆-alkylene, and preferably C₁₋₃-alkylene;
n4 each independently is an integer of 1-5, preferably of 1-3, and more preferably 1; and
Y is C₁₋₆-alkylene, and preferably C₂₋₃-alkylene.

In a preferred embodiment, the compounds of the formulae (C1) and (C2) are compounds of the formula (C1).

In one embodiment, the PFPE-containing silane compound of formula (C1) or (C2) may be produced by combining known methods.

In one embodiment, the PFPE-containing silane compound is a compound of the formula (B1), (B2), (C1) or (C2).

In the embodiment, the formula (B1) is preferably of the formula (B1").

Rf-PFPE-X³-SiR^{a}ₖ₁R^{b}ₗ₁R^{c}ₘ₁ (B1")

In the formula (B1"):
Rf each independently is CF₂H-(C₁₋₁₅-fluoroalkylene) or C₁₋₁₆-perfluoroalkyl, and preferably C₁₋₁₆-perfluoroalkyl;
PFPE is -(OC₃F₆)_{d}- and has at least one branched structure in PFPE, and preferably -(OCF₂CF(CF3))_{d};
d is an integer of 1-200, preferably 5-200, and more preferably 10-200;
X³ is -X^{f}-X¹⁰-CON(R³⁴)-X¹¹-, -X^{f}-X¹⁰-(OR³⁵)ₙ₄-X¹¹-, or -X^{f}-(C₁₋₆-alkylene) (preferably propylene), and preferably -X^{f}-X¹⁰-CON(R³⁴)-X¹¹-;
X^{f} each independently is a single bond or C₁₋₆-alkylene, preferably a single bond or C₁₋₄-alkylene, and more preferably a single bond or C₁₋₂-alkylene (for example, methylene), wherein the hydrogen atom in X^{f} is optionally substituted by one or more substituents selected from F, C₁₋₃-alkyl and C₁₋₃-fluoroalkyl, and preferably substituted;
X¹⁰ each independently is a single bond, -O-R³⁶-O-,-R³⁶-, or o-, m-, or p-phenylene, preferably a single bond,-O-R³⁶-O-, or -R³⁶-, more preferably a single bond or -R³⁶-, and still more preferably a single bond;
R³⁶ is C₁₋₂₀-alkylene optionally substituted by F, preferably C₁₋₃-alkylene optionally substituted by F, and still more preferably C₁₋₂-alkylene optionally substituted by F, wherein the alkylene group in R³⁶ may be linear or may have a branched structure;
X¹¹ each independently is a single bond, an oxygen atom, or C₁₋₂₀-alkylene optionally substituted by F, preferably a single bond or C₁₋₆-alkylene having no substituent, more preferably a single bond or C₁₋₃-alkylene having no substituent, and particularly preferably C₁₋₃-alkylene having no substituent;
R³⁴ each independently is H, phenyl, or C₁₋₆-alkyl, preferably H or C₁₋₆-alkyl, more preferably H or methyl, and still more preferably H;
R³⁵ each independently is C₁₋₆-alkylene, and preferably C₁₋₃-alkylene;
n4 each independently is an integer of 1-5, preferably of 1-3, and more preferably 1;
R^{a} each independently is -Z³-SiR⁷¹ₚ₁R⁷²_{q1}R⁷³ᵣ₁;
Z³ is preferably C₁₋₆-alkylene or -phenylene-(CH₂)ᵢ-, more preferably C₁₋₆-alkylene, and still more preferably C₁₋₃-alkylene;
R⁷² is a hydrolyzable group, and more preferably -OR (wherein R is optionally substituted C₁₋₃-alkyl, and more preferably methyl);
p1 is 0, q1 is 3, and r1 is 0; and
k1 is 3 and l1 and m1 are 0.

In the embodiment, X³ may be a group represented by-X^{f}-X¹⁰-(OR³⁵)ₙ₄-X¹¹-. In the formula, X^{f}, X¹⁰, X¹¹, R³⁵, and n4 are as defined above.

In the embodiment, the formula (B2) is preferably of the formula (B2").

R^{c}ₘ₁R^{b}ₗ₁R^{a}ₖ₁Si-X³-PFPE-X³-SiR^{a}ₖ₁R^{b}ₗ₁R^{c}ₘ₁ (B2")

In the formula (B2"), each symbol is as defined in the formula (B1").

In the embodiment, the formula (C1) is preferably of the formula (C1").

Rf-PFPE-X⁵-CR^{d}ₖ₂R^{e}ₗ₂R^{f}ₘ₂ (C1")

In the formula (C1");
Rf each independently is CF₂H-(C₁₋₁₅-fluoroalkylene) or C₁₋₁₆-perfluoroalkyl, and preferably C₁₋₁₆-perfluoroalkyl;
PFPE is -(OC₃F₆)_{d}- and has at least one branched structure in PFPE, and preferably -(OCF₂CF(CF₃))_{d};
d is an integer of 1-200, preferably 5-200, and more preferably 10-200;
X⁵ is -X^{f}-X¹⁰-CON(R³⁴)-X¹¹-, -X^{f}-X¹⁰-(OR³⁵)ₙ₄-X¹¹-, or -X^{f}-(C₁₋₆-alkylene) (preferably propylene), and preferably -X^{f}-X¹⁰-CON(R³⁴)-X¹¹-;
X^{f} each independently is a single bond or C₁₋₆-alkylene, preferably a single bond or C₁₋₄-alkylene, and more preferably a single bond or C₁₋₂-alkylene (for example, methylene), wherein the hydrogen atom in X^{f} is optionally substituted by one or more substituents selected from F, C₁₋₃-alkyl and C₁₋₃-fluoroalkyl, and preferably substituted;
X¹⁰ each independently is a single bond, -O-R³⁶-O-,-R³⁶-, or o-, m-, or p-phenylene, preferably a single bond,-O-R³⁶-O-, or -R³⁶-, more preferably a single bond or -R³⁶-, and still more preferably a single bond;
R³⁶ is C₁₋₂₀-alkylene optionally substituted by F, preferably C₁₋₃-alkylene optionally substituted by F, and still more preferably C₁₋₂-alkylene optionally substituted by F, wherein the alkylene group in R³⁶ may be linear or may have a branched structure;
X¹¹ each independently is a single bond, an oxygen atom, or C₁₋₂₀-alkylene optionally substituted by F, preferably a single bond or C₁₋₆-alkylene having no substituent, more preferably a single bond or C₁₋₃-alkylene having no substituent, and particularly preferably C₁₋₃-alkylene having no substituent;
R³⁴ each independently is H, phenyl, or C₁₋₆-alkyl, preferably H or C₁₋₆-alkyl, more preferably H or methyl, and still more preferably H;
R³⁵ each independently is C₁₋₆-alkylene, and preferably C₁₋₃-alkylene;
n4 each independently is an integer of 1-5, preferably of 1-3, and more preferably 1;
k2 is 0, 12 is 3, and m2 is 0;
R^{e} is -Y-SiR⁸⁵ₙ₂R⁸⁶₃₋ₙ₂;
Y is C₁₋₆-alkylene, and preferably C₂₋₃-alkylene;
R⁸⁵ each independently is OH or a hydrolyzable group, and preferably -OR (wherein R is optionally substituted C₁₋₃-alkyl, more preferably methyl or ethyl, and particularly methyl); and
n2 is 3.

In the embodiment, the formula (C2) is preferably of the formula (C2").

R^{f}ₘ₂R^{e}ₗ₂R^{d}ₖ₂C-X⁵-PFPE-X⁵-CR^{d}ₖ₂R^{e}ₗ₂R^{f}ₘ₂ (C2")

In the formula (C2"), each symbol is as defined in the formula (C1").

In one embodiment, the PFPE-containing silane compound is a compound of formula (C1) (C2).

In the embodiment, preferably, the compound of formula (C1) is a compound of formula (C1") and the compound of formula (C2) is a compound of formula (C2").

In a preferred embodiment, the PFPE-containing silane compound is a compound of formula (B1) or (C1).

More preferably, the PFPE-containing silane compound is a compound of formula (C1).

In the embodiment, preferably, the compound of formula (C1) is a compound of formula (C1").

Methods suitable for producing PFPE-containing silane compounds are described below by way of example.

In one embodiment, a method suitable for producing the PFPE-containing silane compound of formula (C1) or (C2) and including the following steps will be described.
Step (3):
a step of reacting a compound of formula (c1-3) or (c2-3): 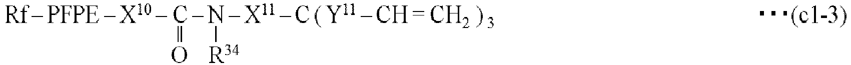 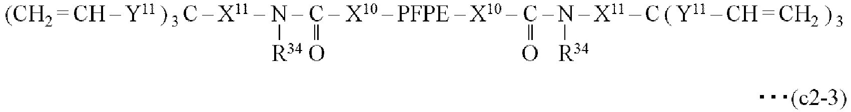 wherein:
Rf each independently is C₁₋₁₆-alkyloptionally substituted by F;
PFPE is (-OCF(CF₃)CF₂-)_{d};
d is an integer of 2-200;
X¹⁰ each independently is a single bond or a divalent organic group;
R³⁴ each independently is H or C₁₋₆-alkyl;
X¹¹ each independently is a single bond or a divalent organic group; and
Y¹¹ each independently is a single bond or a divalent organic group,
with HSiM'₃,
wherein:
   M' each independently is halogen or C₁₋₆-alkoxy, and, optionally,
   a compound of the formula: R⁸⁵ᵢL'
   wherein:
      R⁸⁵ each independently ais OH or a hydrolyzable group;
      L' is a group capable of binding to R⁸⁵; and
      i is an integer of 1-3,
         and/or
      a compound of the formula: R^{86'}ⱼL"
      wherein:
         R^{86'} is C₁₋₂₂-alkyl;
         L" is a group capable of binding to R^{86'}; and
         j is an integer of 1-3,

It is noted that -X¹⁰-C(O)N(R³⁴)-X¹¹- corresponds to X⁵ in the formulae (C1) and (C2) and -Y¹¹-CH₂CH₂- corresponds to Y in the formulae (C1) and (C2).

In the embodiment, preferably, the compound of formula (c1-3) or (c2-3) is produced by a method including the following steps (1) and (2).
Step (1):
   a step of reacting a compound of formula (c1-1) or (c2-1):

   Rf-PFPE-X¹⁰-C(O)OH (c1-1)

   HOC(O)-X¹⁰-PFPE-X¹⁰-C(O)OH (c2-1)

   wherein:
   Rf, PFPE, and X¹⁰ are as defined above,
   with SOM₂,
   wherein M each independently is Cl or F,
   to obtain a compound of formula (c1-2) or (c2-2): 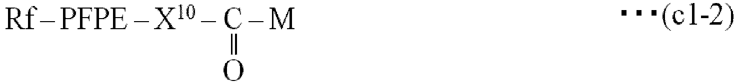 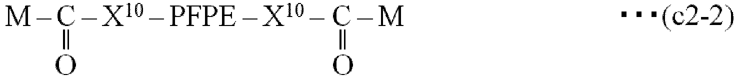 wherein:
      Rf, PFPE, X¹⁰, and M are as defined above; and
Step (2) :
   a step of reacting the compound of formula (c1-2) or (c2-2) with a compound of the formula:

   HN(R³⁴)-X¹¹-C(Y¹¹-CH=CH₂)₃,

   wherein R³⁴, X¹¹, and Y¹¹ are as defined above,
   to obtain a compound of formula (c1-3) or (c2-3): 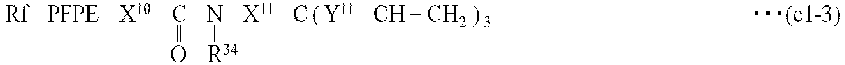 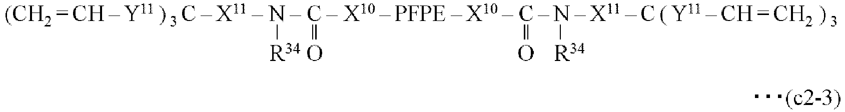
   wherein Rf, PFPE, X¹⁰, R³⁴, and X¹¹ are as defined above.

The above producing method will be described in detail below.

### Step (1):

In formula (c1-1) or (c2-1), Rf is as defined above.

In formula (c1-1) or (c2-1), PFPE is as defined above, and is preferably -(OC₃F₆)_{d}-, and more preferably-(OCF(CF₃)CF₂)_{d}-. In the formula, d is an integer of 1-200, preferably 5-200, and more preferably 10-200.

In formula (c1-1) or (c2-1), X¹⁰ each independently is a single bond or a divalent organic group, preferably a single bond or C₁₋₆-alkylene optionally substituted by F, and more preferably C₁₋₃-alkylene optionally substituted by F.

The compound of formula (c1-1) or (c2-1) is commercially available, or may be produced from a commercially available compound using conventional techniques in the art.

In SOM₂ used in step (1), M each independently is Cl or F, and preferably a chlorine atom. The compound is commercially available, or may be produced from a commercially available compound using conventional techniques in the art.

The amount of SOM₂ used in step (1) is preferably ≥ 1 mol per mol of the terminal COOH group (as the total amount when two or more compounds are used; the same applies below) of the compound of formula (c1-1) and/or (c2-1).

The reaction of step (1) is preferably carried out in the presence of a suitable catalyst in a suitable solvent.

Examples of the suitable catalyst include N,N-dimethylformamide (DMF).

The suitable solvent is not limited as long as it does not adversely affect the reaction, and examples thereof include 1,3-bis(trifluoromethyl)benzene, perfluorobutyl ethyl ether, and perfluorohexyl methyl ether.

The reaction temperature in such a reaction is usually, but not limited to, 0-150°C, and preferably 80-100°C, and the reaction time is usually, but not limited to, 30-600 minutes, and preferably 60-120 minutes, and the reaction pressure is, but not limited to, -0.2 to 1 MPa (gauge pressure), and is conveniently atmospheric pressure.

### Step (2):

In the compound: HN(R³⁴)-X¹¹-C(Y¹¹-CH=CH₂)₃ used in step (2), X¹¹ is a single bond or a divalent organic group, preferably a single bond or C₁₋₆-alkylene optionally substituted by F, and more preferably C₁₋₃-alkylene.

In the formula, R³⁴ each independently is H, phenyl or C₁₋₆-alkyl, preferably H or C₁₋₆-alkyl, more preferably H or methyl, and still more preferably H.

In the formula, Y¹¹ each independently is a single bond or a divalent organic group. Y¹¹ is preferably C₁₋₆-alkylene, and more preferably C₁₋₃-alkylene.

Specific examples of the compound: HN(R³⁴)-X¹¹-C(Y¹¹-CH=CH₂)₃ used in step (2) include H₂NCH₂C(CH₂-CH=CH₂)₃, H₂NCH₂CH₂C(CH₂-CH=CH₂)₃, and H₂NCH₂CH₂CH₂C(CH₂-CH=CH₂)₃.

The amount of the compound of the formula: HN(R³⁴)-X¹¹-C(Y¹¹-CH=CH₂)₃ is preferably ≥ 1 mol per mol of the terminal-C(O)M group of the compound of formula (c1-2) and/or (c2-2).

The reaction of step (2) is preferably carried out in the presence of a suitable catalyst in a suitable solvent.

Examples of suitable catalyst include triethylamine and diisopropylethylamine.

The suitable solvent is not limited as long as it does not adversely affect the reaction. Examples of the suitable solvent include 1,3-bis(trifluoromethyl)benzene, perfluorobutyl ethyl ether, and perfluorohexyl methyl ether.

The reaction temperature in such a reaction is usually, but not limited to, 0-100°C, and preferably 0-40°C, and the reaction time is usually, but not limited to, 30-600 minutes, and preferably 60-120 minutes, and the reaction pressure is, but not limited to, -0.2 to 1 MPa (gauge pressure), and is conveniently atmospheric pressure.

### Step (3):

In step (3), the compound of formula (c1-3) or (c2-3) is reacted with HSiM'₃ and, optionally, a compound of the formula R⁸⁵ᵢL', and/or a compound of the formula R^{86'}ⱼL".

The compound of formula (c1-3) or (c2-3) is preferably the compound obtained in the step (2).

In the compound: HSiM'₃ used in step (3), M' each independently is halogen or C₁₋₆-alkoxy, preferably halogen, and more preferably Cl.

In the compound of the formula: R⁸⁵ᵢL' used in step (3), R⁸⁵ is as described in the formulae (C1) and (C2); L' is a group capable of binding to R⁸⁵; and i is an integer of 1-3.

In the compound of the formula: R^{86'}ⱼL" used in step (3), R^{86'} is C₁₋₂₂-alkyl; L" is a group capable of binding to R^{86'}; and j is an integer of 1-3.

The "group capable of binding to R⁸⁵" and the "group capable of binding to R^{86'}" represented by L' and L" above are capable of binding to R⁸⁵ and R^{86'}, respectively, and R⁸⁵ and R^{86'} are not limited as long as R⁸⁵ and R^{86'} can leave from these groups in the above reaction, and examples thereof include a hydrogen atom, lithium, and sodium. The "group capable of binding to R⁸⁵" and the "group capable of binding to R^{86'}" may be a group which may have a plurality of R⁸⁵ or R^{86'} groups, for example, =CH₂, ≡CH. Those skilled in the art can select an appropriate group capable of binding to R⁸⁵ and a group capable of binding to R^{86'} depending on the conditions such as the type of compound to be reacted, the solvent, and the temperature.

The amount of HSiM'₃ used in step (3) may be Z 1 mol, but is preferably 2 mol, per mol of the terminal -CH=CH₂ group of the compound of formula (c1-3) and/or (c2-3).

When the compound represented by R⁸⁵ᵢL' is used in step (3), the use amount thereof may vary depending on the amount of R⁸⁵ group to be introduced, and such amount can be appropriately determined by those skilled in the art.

When the compound represented by R^{86'}ⱼL" is used in step (3), the use amount thereof may vary depending on the amount of R^{86'} group to be introduced, and such amount can be appropriately determined by those skilled in the art.

In the reaction of step (3), firstly, the terminal-CH=CH₂ group of the compound of formula (c1-3) and/or (c2-3) is reacted with HSiM'₃ to convert its end to the -CH₂CH₂SiM'₃ group. Then, this terminal -CH₂CH₂SiM'₃ group is reacted with the compound represented by R⁸⁵ᵢL' and/or the compound represented by R^{86'}ⱼL" to replace M' with R⁸⁵ or R^{86'}. It is noted that the compound represented by R⁸⁵ᵢL' and the compound represented by R^{86'}ⱼL" may be reacted simultaneously or separately.

However, in one embodiment of the present disclosure, HSiM'₃, the compound represented by R⁸⁵ᵢL', and the compound represented by R^{86'}ⱼL" may be used as a compound of HSi(R⁸⁵ᵢ)(R⁸⁶'ⱼ) (in this case, i+j is 3). The compound represented by HSi (R⁸⁵ᵢ)(R^{86'}ⱼ) may be produced by those skilled in the art using conventional techniques in the art.

In another embodiment, the total amount of the compound represented by R⁸⁵ᵢL' and/or the compound represented by R^{86'}ⱼL" in step (3) is set to ≥ 3 mol per mol of the terminal -CH=CH₂ group of the compound of formula (c1-3) and/ or (c2-3). According to such an embodiment, substantially all M' of the terminal -CH₂CH₂SiM'₃ produced in the reaction of the step (3) can be replaced with R⁸⁵ or R^{86'}.

The reaction in step (3) is preferably carried out in the presence of a suitable catalyst in a suitable solvent.

Examples of suitable catalyst include Pt, Pd, and Rh. The catalyst is preferably Pt. Such catalyst may be in any form, for example in the form of a complex.

The suitable solvent is not limited as long as it does not adversely affect the reaction, and examples thereof include 1,3-bis(trifluoromethyl)benzene, perfluorobutyl ethyl ether, and perfluorohexyl methyl ether.

The reaction temperature in such a reaction is usually, but not limited to, 0-100°C, and preferably 50-80°C, and the reaction time is usually, but not limited to, 30-600 minutes, and preferably 60-240 minutes, and the reaction pressure is, but not limited to, -0.2 to 1 MPa (gauge pressure), and is conveniently atmospheric pressure.

The reaction of step (3) is preferably carried out in the presence of a suitable rearrangement preventing agent.

Examples of the suitable rearrangement preventing agent include carboxylic acid compounds. The carboxylic acid compound may include (a) a carboxylic acid, (b) a carboxylic acid anhydride, (c) a silylated carboxylic acid, and/or (d) a substance that produces the carboxylic acid compounds (i.e., (a), (b) or (c)) in the reaction of step (3). These carboxylic acid compounds may be used alone or in combination of two or more.

When the rearrangement preventing agent contains (a) the carboxylic acid, any carboxylic acid having a carboxyl group may be used. Examples of the suitable carboxylic acid include saturated carboxylic acids, unsaturated carboxylic acids, monocarboxylic acids, and dicarboxylic acids. Specific examples of the suitable carboxylic acid include a saturated monocarboxylic acid such as formic acid, acetic acid, propionic acid, n-butyric acid, isobutyric acid, hexanoic acid, cyclohexanoic acid, lauric acid, and stearic acid; a saturated dicarboxylic acid such as oxalic acid and adipic acid; an aromatic carboxylic acid such as benzoic acid and p-phthalic acid; a carboxylic acid in which the hydrogen atom on the carbon of the hydrocarbon group of these carboxylic acids has been substituted by a halogen atom or an organosilyl group, such as chloroacetic acid, dichloroacetic acid, trifluoroacetic acid, para-chlorobenzoic acid, and trimethylsilylacetic acid; an unsaturated fatty acid such as acrylic acid, methacrylic acid, and oleic acid; and compounds having a hydroxy group, a carbonyl group or an amino group in addition to the carboxyl group, namely, a hydroxy acid such as lactic acid, a keto acid such as acetoacetic acid, an aldehyde acid such as glyoxylic acid, and an amino acid such as glutamic acid.

Examples of (b) the carboxylic acid anhydride include acetic acid anhydride, propionic acid anhydride, and benzoic acid anhydride. These carboxylic acid anhydrides may be those generated in the reaction system of step (3), and include acetyl chloride, butyryl chloride, benzoyl chloride, and other carboxylic acid halides; carboxylic acid metal salts such as zinc acetate and thallium acetate; and carboxylic esters decomposable by light or heat, such as (2-nitrobenzyl)propionate.

Examples of (c) the silylated carboxylic acid include trialkylsilylated carboxylic acids, such as trimethylsilyl formate, trimethylsilyl acetate, triethylsilyl propionate, trimethylsilyl benzoate, and trimethylsilyl trifluoroacetate; and di-, tri-, or tetracarboxysilylates, such as dimethyldiacetoxysilane, diphenyldiacetoxysilane, methyltriacetoxysilane, ethyltriacetoxysilane, vinyltriacetoxysilane, di-t-butoxydiacetoxysilane, and silicon tetrabenzoate.

The rearrangement preventing agent is used in an amount of, for example, 0.001-20 wt.%, for example 0.01-5 wt.%, or 0.01-1 wt.%. Those skilled in the art can select the amount of using the rearrangement preventing agent depending on the compound to be reacted, an agent, a solvent, and other conditions. The rearrangement preventing agent is commercially available as DOW CORNING (registered trademark) ETS 900 or XIAMETER (registered trademark) OFS-1579 Silane available from Dow Corning Corporation of Midland, MI.

In a preferred embodiment, the PFPE is -(OCF(CF₃)CF₂)_{d}-(wherein d is an integer of 1-200, preferably 5-200, more preferably 10-200), and in the production method, the compound of formula (c1-3) is reacted in step (3). More preferably, in the production method, in step (1), the compound of formula (c1-2) is produced from the compound of formula (c1-1); in step (2), the compound of formula (c1-3) is produced from the compound of formula (c1-2), and in step (3), the compound of formula (c1-3) is reacted. The operation in each step is as described above.

In one embodiment, the present disclosure provides a method for producing a fluoro(poly)ether group-containing silane compound, which includes the following steps (1)-(3).
Step (1):
   a step of reacting a compound of formula (c1-1) or (c2-1):

      Rf-PFPE-X¹⁰-C(O)OH (c1-1)

      HOC(O)-X¹⁰-PFPE-X¹⁰-C(O)OH (c2-1)

      wherein Rf, PFPE, and X¹⁰ are as defined above,
      with SOM₂,
      wherein M is as defined above,
      to obtain a compound of formula (c1-2) or (c2-2): 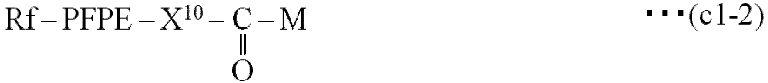 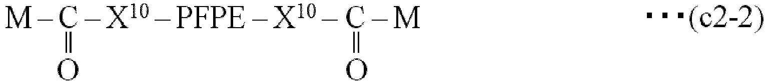
      wherein:
         Rf, PFPE, X¹⁰ and M are as defined above;
Step (2) :
   a step of reacting the compound of formula (c1-2) or (c2-2) with a compound of the formula:

      HN(R³⁴)-X¹¹-C(Y¹¹-CH=CH₂)₃,
   wherein R³⁴, X¹¹, and Y¹¹ are as defined above,
   to obtain a compound of formula (c1-3) or (c2-3): 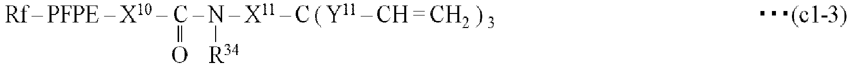 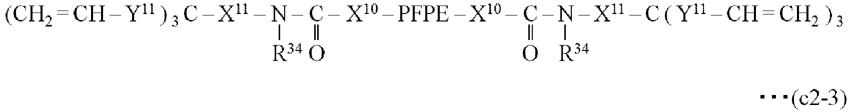
   wherein Rf, PFPE, X¹⁰, R³⁴, and X¹¹ are as defined above; and
Step (3):
   a step of reacting the compound of formula (c1-3) or (c2-3): 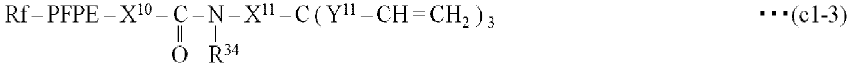 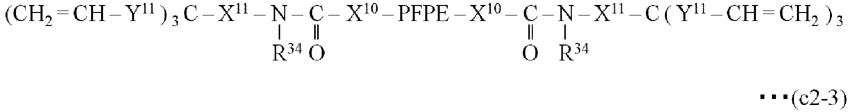
   with HSiM'₃,
   and, optionally,
   a compound of the formula: R⁸⁵ᵢL'
      and/or
   a compound of the formula: R^{86'}ⱼL"
   wherein M', R⁸⁵, L', i, R^{86'}, L", and j are as defined above.

The present disclosure further provides a compound of formula (c1-2) or (c2-2): 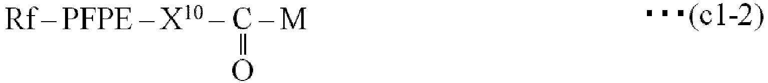 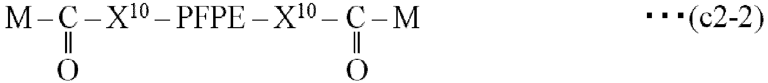 that is, an intermediate in the production method.

In the formula, Rf, PFPE, X¹⁰, and M are as defined above.

Preferably, the intermediate is a compound of formula (c1-2) .

The present disclosure still further provides a compound of formula (c1-3) or (c2-3): 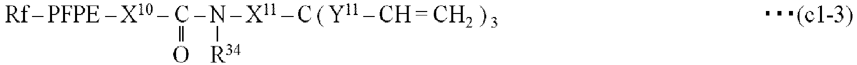 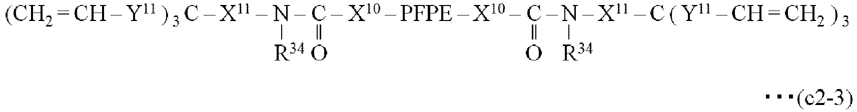 that is, an intermediate in the production method.

In the formula, Rf, PFPE, X¹⁰, R³⁴, X¹¹, and Y¹¹ are as defined above.

Preferably, the intermediate is a compound offormula (c1-3) .

### (surface-treating agent)

The PFPE-containing silane compound may be used as a surface-treating agent.

The surface-treating agent can contribute to the formation of a surface-treating layer having good UV durability, water-repellency, oil-repellency, antifouling property (for example, preventing adhesion of fouling such as fingerprints), chemical resistance, hydrolysis resistance, an effect of suppressing lubricity, high friction durability, heat resistance and moisture-proof property.

The surface-treating agent may be diluted with a solvent. Examples of the solvent include:
a fluorine atom-containing solvent selected from perfluorohexane, CF₃CF₂CHCl₂, CF₃CH₂CF₂CH₃, CF₃CHFCHFC₂F₅, 1,1,1,2,2,3,3,4,4,5,5,6,6-tridecafluorooctane, 1,1,2,2,3,3,4-heptafluorocyclopentane (ZEORORA H (trade name), etc.), C₄F₉OCH₃, C₄F₉OC₂H₅, CF₃CH₂OCF₂CHF₂, C₆F₁₃CH=CH₂, C₆F₁₃OCH₃, xylene hexafluoride, perfluorobenzene, methyl pentadecafluoroheptyl ketone, trifluoroethanol, pentafluoropropanol, hexafluoroisopropanol, HCF₂CF₂CH₂OH, methyl trifluoromethanesulfonate, trifluoroacetic acid, and CF₃O(CF₂CF₂O)ₘ₁(CF₂O)ₙ₁CF₂CF₃ (wherein m1 and n1 are each independently an integer of 0-1000, the order of the repeating units in parentheses with m1 or n1 is arbitrary, with the proviso that (m1+n1) is Z 1), 1,1-dichloro-2,3,3,3-tetrafluoro-1-propene, 1,2-dichloro-1,3,3,3-tetrafluoro-1-propene, 1,2-dichloro-3,3,3-trifluoro-1-propene, 1,1-dichloro-3,3,3-trifluoro-1-propene, 1,1,2-trichloro-3,3,3-trifluoro-1-propene, and 1,1,1,4,4,4-hexafluoro-2-butene. These solvents may be used alone or as a mixture of two or more compounds.

The content of moisture contained in the solvent is preferably ≤ 20 ppm by mass. The content of moisture may be measured using the Karl Fischer method. With such a content of moisture, the storage stability of the surface-treating agent can be improved.

The surface-treating agent may contain other components in addition to the PFPE-containing silane compound of formula (A1), (A2), (B1), (B2), (C1), or (C2). Examples of the other components include a (non-reactive) fluoropolyether compound which may be also understood as fluorine-containing oils, preferably perfluoro(poly)ether compounds (hereinafter, referred to as "the fluorine-containing oil"), (non-reactive) silicone compounds which may be also understood as silicone oils (hereinafter referred to as "silicone oil"), catalysts, lower alcohols, transition metals, halide ions, and compounds containing an atom having an unshared electron pair in a molecular structure.

Examples of the fluorine-containing oil include a compound of formula (1) (a perfluoro(poly)ether compound):

Rf⁵-(OC₄F₈)_{a'}-(OC₃F₆)_{b'}-(OC₂F₄)_{c'}-(OCF₂)_{d'}-Rf⁶ (1)

In the formula, Rf⁵ is C₁₋₁₆-alkyl optionally substituted by F (preferably C₁₋₁₆-perfluoroalkyl), Rf⁶ is H, F or C₁₋₁₆-alkyl optionally substituted by F (preferably C₁₋₁₆-perfluoroalkyl, and more preferably, Rf⁵ and Rf⁶ each independently are C₁₋₃-perfluoroalkyl.

a', b', c', and d' represent the repeating number of each of four repeating units of perfluoro(poly)ether which constitute a main backbone of the polymer, and are each independently an integer of 0-300, and (a'+b'+c'+d') is Z 1, preferably 1-300, and more preferably 20-300. The order of the repeating units in parentheses with the subscript a', b', c', or d' is arbitrary. There is at least one branched structure in the repeating units. That is, the repeating units have at least one CF₃ end (specifically, -CF₃, -C₂F₅, etc., more specifically -CF₃). Regarding the repeating unit having a branched structure, examples of -(OC₄F₈)- include-(OCF(CF₃)CF₂CF₂) , - (OCF₂CF(CF₃)CF₂)-, - (OCF₂CF₂CF(CF₃))-,-(OC(CF₃)₂CF₂)-, - (OCF₂C(CF₃)₂)-, - (OCF (CF₃)CF(CF₃))-,-(OCF(C₂F₅)CF₂)-, and - (OCF₂CF(C₂F₅))-; and examples of-(OC₃F₆)- include - (OCF(CF₃)CF₂)- and - (OCF₂CF(CF₃))-; and examples of -(OC₂F₄)- include - (OCF(CF₃)) -.

Examples of the perfluoro(poly)ether compound of formula (1) include a compound the following formulae (1a) and (1b) (may be one compound or a mixture of two or more compounds).

Rf⁵-(OCF(CF₃)CF₂)_{b"}-Rf⁶ (1a)

Rf⁵-(OC₄F₈)_{a"}-(OC₃F₆)_{b"}-(OCF (CF₃))_{c"}-(OCF₂)_{d"}-Rf⁶ (1b)

In these formulae, Rf⁵ and Rf⁶ are as defined above; in formula (1a), b" is an integer of 1-100; and in formula (1b), a" and b" each independently are an integer of 1-30, and c" and d" each independently are an integer of 1-300. The order of the repeating units in parentheses with the subscript a", b", c", or d" is arbitrary. -(OC₄F₈)- and-(OC₃F₆)- have a branched structure.

The fluorine-containing oil may have a number average molecular weight of 1,000-30,000. In particular, the number average molecular weight of the compound of formula (1a) is preferably 2,000-8,000. By having such a number average molecular weight, good friction durability can be obtained. In one embodiment, the number average molecular weight of the compound of formula (1b) is preferably 3,000-8,000, and in another embodiment it is 8,000-30,000.

In the surface-treating agent, the fluorine-containing oil may be contained in an amount of, for example, 0-500 parts by mass (pbm), preferably 0-100 pbm, more preferably 1-50 pbm, and still more preferably 1-5 pbm based on 100 pbm of the PFPE-containing silane compound.

From the other point of view, the fluorine-containing oil may be a compound of the general formula Rf'-F (wherein Rf' is C₅₋₁₆-perfluoroalkyl). In addition, the fluorine-containing oil may be a chlorotrifluoroethylene oligomer. The compound represented by Rf'-F and the chlorotrifluoroethylene oligomer are preferable in that the compound shows high affinity to the above-mentioned perfluoro(poly)ether group-containing silane compound in which Rf is C₁₋₁₆-perfluoroalkyl.

The fluorine-containing oil contributes to improving the surface lubricity of the surface-treating layer.

Examples of the silicone oil include a linear or cyclic silicone oil having ≤ 2,000 siloxane bonds. The linear silicone oil may be so-called a straight silicone oil and a modified silicon oil. Examples of the straight silicone oil include dimethylsilicone oil, methylphenylsilicone oil, and methylhydrogensilicone oil. Examples of the modified silicone oil include that which is obtained by modifying a straight silicone oil with alkyl, aralkyl, polyether, higher fatty acid ester, fluoroalkyl, amino, epoxy, carboxyl, alcohol, or the like. Examples of cyclic silicone oil include cyclic dimethylsiloxane oil.

The silicone oil may be contained in the surface-treating agent, for example, at 0-50 pbm, and preferably 0-5 pbm based on 100 pbm of the PFPE-containing silane compound (as the total mass when two or more compounds are used; the same applies below).

The silicone oil contributes to improving the surface lubricity of the surface-treating layer.

Examples of the catalyst include an acid (for example, acetic acid and trifluoroacetic acid), a base (for example, ammonia, triethylamine and diethylamine), and a transition metal (for example, Ti, Ni and Sn).

The catalyst facilitates the hydrolysis and dehydration condensation of the fluorine-containing silane compound to facilitate the formation of the surface-treating layer.

Examples of the lower alcohol as the other component include alcohol compounds having 1-6 carbon atoms.

Examples of the transition metal include platinum, ruthenium, and rhodium.

Examples of the halide ion include chloride ion.

Examples of the compounds containing an atom having an unshared electron pair in the molecular structure include diethylamine, triethylamine, aniline, pyridine, hexamethylphosphoramide, N,N-diethylacetamide, N,N-diethylformamide, N,N-dimethylacetamide, N-methylformamide, N,N-dimethylformamide, N-methylpyrrolidone, tetramethylurea, dimethylsulfoxide (DMSO), tetramethylenesulfoxide, methylphenylsulfoxide, and diphenylsulfoxide. Among these compounds, it is preferable to use dimethyl sulfoxide or tetramethylene sulfoxide.

In addition to the above, examples of the other component include tetraethoxysilane, methyltrimethoxysilane, 3-aminopropyltrimethoxysilane, 3-glycidoxypropyltrimethoxysilane, and methyltriacetoxysilane.

In addition to the above, examples of the other component include a compound (E) having a fluoro(poly)ether group and a carboxylic acid group in the molecular structure. In the compound (E), the fluoro(poly)ether group contains at least one fluorine atom. By containing such a compound (E), the reaction with glass is facilitated, so that the surface-treating layer can be formed in a shorter time.

Examples of the compound (E) include compounds of the following formula (E1) or (E2), and specifically, a compound of formula (E1).

Rf¹-PFPE¹-X^{f1}-COOH (E1)

HOOC-X^{f1}-PFPE¹-X^{f1}-COOH (E2)

In the formulae (E1) and (E2),
Rf¹ each is C₁₋₁₆-alkyl optionally substituted by F. Therein, the "C₁₋₁₆-alkyl " may be linear or branched, and preferably is linear or branched C₁₋₆-alkyl, in particular C₁₋₃-alkyl, and more preferably linear C₁₋₃-alkyl.

Rf¹ is preferably C₁₋₁₆-alkyl substituted by F, more preferably CF₂H-(C₁₋₁₅-fluoroalkylene) or C₁₋₁₆-perfluoroalkyl, and still more preferably C₁₋₁₆-perfluoroalkyl.

The C₁₋₁₆-perfluoroalkyl group may be linear or branched, and preferably a linear or branched C₁₋₆-perfluoroalkyl, in particular C₁₋₃-perfluoroalkyl, and more preferably linear C₁₋₃-perfluoroalkyl, specifically -CF₃,-CF₂CF₃, or -CF₂CF₂CF₃.

In the formulae (E1) and (E2),
PFPE¹ each independently is a group represented by: -(OC₆F₁₂)ₐ₁-(OC₅F₁₀)_{b1}-(OC₄F₈)_{c1}-(OC₃X^{F}₆)_{d1}-(OC₂F₄)ₑ₁-(OCF₂)_{f1}- and has at least one branched structure in PFPE¹. That is, the PFPE¹ has at least one CF₃ end (specifically, -CF₃, -C₂F₅, etc., more specifically -CF₃). In the formula (E1), in the PFPE¹, the oxygen atom at the left end of the formula is bonded to the Rf¹ group, and the carbon atom at the right end of the formula is bonded to the X^{f1} group.

X^{F} each independently is H, F or Cl, preferably H or F, and more preferably F.

In the formula, a1-f1 each independently are an integer of 0-200, and (a1+b1+c1+d1+e1+f1) is ≥1. Preferably, a1-f1 are each independently an integer of 0-100. Preferably, (a1+b1+c1+d1+e1+f1) is Z 5, and more preferably Z 10. Preferably, (a1+b1+c1+d1+e1+f1) is ≤ 200, more preferably 5 100, for example, 10-200, and more specifically 10-100. The order of the repeating units in parentheses with a1, b1, c1, d1, e1, or f1 is arbitrary.

PFPE¹ preferably has at least 5, more preferably 10, and particularly preferably 20 branched structures.

In the structure of PFPE¹, the number of repeating units having a branched structure is preferably Z 40, more preferably Z 60, and particularly preferably Z 80, with respect to the total number of repeating units (for example, the sum (a1+b1+c1+d1+e1+f1)) of 100. In the structure of PFPE¹, the number of repeating units having a branched structure may be ≤ 100, for example, ≤ 90, with respect to the total number of repeating units of 100.

In the structure of PFPE¹, the number of repeating units having the branched structure is preferably 40-100, more preferably 60-100, and particularly preferably 80-100, with respect to the total number of repeating units of 100.

Examples of the branched chain in the branched structure include CF₃.

Regarding the repeating unit having a branched structure, examples of -(OC₆F₁₂)- include -(OCF(CF₃)CF₂CF₂CF₂CF₂)-, -(OCF₂CF(CF₃)CF₂CF₂CF₂)-, -(OCF₂CF₂CF(CF₃)CF₂CF₂)-, -(OCF₂CF₂CF₂CF(CF₃)CF₂)-, and -(OCF₂CF₂CF₂CF₂CF(CF₃))-. Examples of -(OC₅F₁₀)- include -(OCF(CF₃)CF₂CF₂CF₂)-, -(OCF₂CF(CF₃)CF₂CF₂)-, -(OCF₂CF₂CF(CF₃)CF₂)-, and -(OCF₂CF₂CF₂CF(CF₃))-. Examples of -(OC₄F₈)- include -(OCF(CF₃)CF₂CF₂)-, -(OCF₂CF(CF₃)CF₂)-, -(OCF₂CF₂CF(CF₃))-, -(OC(CF₃)₂CF₂)-, -(OCF₂C(CF₃)₂)-, -(OCF(CF₃)CF(CF₃))-, -(OCF(C₂F₅)CF₂)-, and -(OCF₂CF(C₂F₅))-. Examples of -(OC₃F₆)- (i.e., in the formula, X^{F} is F) include -(OCF(CF₃)CF₂)- and -(OCF₂CF(CF₃))-. Examples of-(OC₂F₄)-include -(OCF(CF₃))-.

The PFPE¹ may include a linear repeating unit as well as a repeating unit having a branched structure. Examples of the linear repeating unit include -(OCF₂CF₂CF₂CF₂CF₂CF₂)-,-(OCF₂CF₂CF₂CF₂CF₂)-, -(OCF₂CF₂CF₂CF₂)-, -(OCF₂CF₂CF₂)-, and-(OCF₂CF₂)-.

Preferably, in the PFPE¹, the repeating units-(OC₆F₁₂)-, -(OC₅F₁₀)-, -(OC₄F₈)-, and-(OC₃F₆)- have a branched structure.

More preferably, the PFPE¹ consists of repeating units OC₆F₁₂, OC₅F₁₀, OC₄F₈, and OC₃F₆ having a branched structure.

In one embodiment, the PFPE¹ is -(OC₃F₆)_{d1} - (wherein d1 is an integer of 1-200, preferably 5-200, more preferably 10-200), and has at least one branched structure in PFPE¹.

In this embodiment, PFPE¹ may further contain a linear repeating unit -(OCF₂CF₂CF₂)-.

In the embodiment, the PFPE¹ preferably consists of a repeating unit OC₃F₆ having a branched structure. The PFPE¹ is more preferably represented by the formula:-(OCF₂CF(CF₃))_{d1}. In the formula, d1 is an integer of 1-200, preferably 5-200, and more preferably 10-200.

In another embodiment, PFPE¹ is -(OC₄F₈)_{c1}-(OC₃F₆)_{d1}-(OC₂F₄)ₑ₁-(OCF₂)_{f1}- (wherein c1 and d1 each independently are an integer of 0-30, e and f each independently are an integer of 1-200, preferably 5-200, more preferably 10-200, (c1+d1+e1+f1) is Z 5, preferably Z 10, and the order of the repeating units in parentheses with the subscript c1, d1, e1, or f1 is arbitrary) and has at least one branched structure in PFPE¹.

In yet another embodiment, PFPE¹ is a group represented by -(R⁶¹-R⁶²)ⱼ₁- and has at least one branched structure in PFPE. In the formula, R⁶¹ is OCF₂ or OC₂F₄, and preferably OC₂F₄. In the formula, R⁶² is OC₂F₄, OC₃F₆, OC₄F₈, OC₅F₁₀, OC₆F₁₂, or a combination of two or three groups independently selected from these groups. Preferably, R⁶² is selected from OC₂F₄, OC₃F₆, and OC₄F₈, or is selected from OC₃F₆, OC₄F₈, OC₅F₁₀, and OC₆F₁₂, or is a combination of two or three groups independently selected from these groups, and more preferably a group selected from OC₃F₆ and OC₄F₈. Examples of the combination of two or three groups independently selected from OC₂F₄, OC₃F₆, and OC₄F₈ include-OC₂F₄OC₃F₆-, -OC₂F₄OC₄F₆-, -OC₃F₆OC₂F₄-, -OC₃F₆OC₃F₆-, -OC₃F₆OC₄F₆-, -OC₄F₈OC₄F₈-, -OC₄F_{B}OC₃F₆-, -OC₄F₈OC₂F₄-, -OC₂F₄OC₂F₄OC₃F₆-,-OC₂F₄OC₂F₄OC₄F₈-, -OC₂F₄OC₃F₆OC₂F₄-, -OC₂F₄OC₃F₆OC₃F₆-,-OC₂F₄OC₄F₈OC₂F₄-, -OC₃F₆OC₂F₄OC₂F₄-, -OC₃F₆OC₂F₄0C₃F₆-,-OC₃F₆OC₃F₆OC₂F₄-, and -OC₄F₈OC₂F₄OC₂F₄-. j1 is ≥ 2, preferably ≥ 3, more preferably Z 5, and is an integer of ≤ 100, and preferably ≤ 50. In the formula, OC₂F₄, OC₃F₆, OC₄F₈, OC₅F₁₀, and OC₆F₁₂ preferably have a branched structure.

More preferably, in the embodiment, PFPE¹ consists of repeating units OC₆F₁₂, OC₅F₁₀, OC₄F₈, and OC₃F₆ having a branched structure.

In the formulae (E1) and (E2),
X^{f1} each independently is a single bond or C₁₋₆-alkylene, preferably a single bond or C₁₋₄-alkylene, and more preferably a single bond or C₁₋₂-alkylene (for example, methylene). The hydrogen atoms in X^{f1} are optionally substituted, preferably substituted, by one or more substituents selected from F, C₁₋₃-alkyl and C₁₋₃-fluoroalkyl. X^{f1} may be linear or branched, and is preferably linear.

It is preferable that Rf¹ and PFPE¹ each have the same structure as Rf or PFPE in the PFPE-containing silane compound contained in the surface-treating agent.

The compound (E) is preferably a compound of formula (E1) .

In the surface-treating agent, the ratio of the present PFPE-containing silane compound to the compound of formula (E) may be, for example, (99.9:0.1)-(85.0:15.0), (99.9:0.1)-(90.0:10.0), (99.9:0.1)-(95.0:5.0) in molar ratio.

In one embodiment, the surface-treating agent does not contain the other components: fluorine-containing oils, silicone oils, catalysts, lower alcohols, transition metals, halide ions, and compounds containing an atom having an unshared electron pair in the molecular structure.

In one embodiment, the surface-treating agent contains a PFPE-containing silane compound of formula (B1), (B2), (C1) or (C2).

In one embodiment, the surface-treating agent contains a PFPE-containing silane compound of formula (C1) or (C2).

In one embodiment, the surface-treating agent contains a PFPE-containing silane compound of formula (C1).

In one embodiment, the surface-treating agent contains a PFPE-containing silane compound of formula (B1) or (C1), and preferably a PFPE-containing silane compound (C1).

In one embodiment, the surface-treating agent contains a PFPE-containing silane compound of formula (C1) and does not contain fluorine-containing oil (for example, the content of the fluorine-containing oil is ≤ 1 pbm, more specifically 0 pbm, based on 100 pbm of the surface-treating agent) which is the other component.

The present surface-treating agent is impregnated into a porous material, such as a porous ceramic material, a metal fiber, such as a flocculated steel wool to obtain a pellet. The pellet may be used, for example, in vacuum deposition.

### Examples

The present invention will be described in more detail through the following Examples.

### (Synthesis Example 1)

To a four necked flask of 200 mL equipped with a reflux condenser, a thermometer, and a stirrer, 32 g of perfluoropolyether modified carboxylic acid represented by the average compositional formula CF₃CF₂CF₂O[CF(CF₃)CF₂O]₂₂CF(CF₃)COOH, 16 g of 1,3-bis(trifluoromethyl)benzene, 0.13 g of N,N-dimethylformamide, and 2.17 g of thionyl chloride were charged, and the mixture was stirred at 90°C for 1 hour under a nitrogen gas flow. Subsequently, volatile content was distilled off under reduced pressure, 16 g of 1,3-bis(trifluoromethyl)benzene, 1.35 g of triethylamine, and 1.73 g of NH₂CH₂C(CH₂CH=CH₂)₃ were charged, and the mixture was stirred under a nitrogen gas flow at room temperature for 6 hours. Subsequently, 30 g of perfluorohexane, 10 g of acetone, and 20 g of 3 mol/L hydrochloric acid were added and stirred for 30 minutes, and thereafter the perfluorohexane phase was separated using a separating funnel. Thereafter, the separated perfluorohexane phase was filtered, and then the volatile content was distilled off under reduced pressure to give 29.6 g of the perfluoropolyether group-containing allyl compound (A) of the following formula having an allyl group at the end.
· Perfluoropolyether group-containing allyl compound (A) :

   CF₃CF₂CF₂O[CF(CF₃)CF₂O]₂₂CF(CF₃)CONHCH₂C(CH₂CH=CH₂)₃

### (Synthesis Example 2)

To a four necked flask of 200 mL equipped with a reflux condenser, a thermometer, and a stirrer, 29 g of the perfluoropolyether group-containing allyl compound (A) having an allyl group at the end synthesized in Synthesis Example 1, 35 ml of 1,3-bis(trifluoromethyl)benzene, and 6.7 g of trichlorosilane were charged, and the mixture was stirred at 5°C for 30 minutes under a nitrogen gas flow. Subsequently, 0.3 ml of a xylene solution containing 2% of a Pt complex of 1,3-divinyl-1,1,3,3-tetramethyldisiloxane was added, and then the temperature was raised to 60°C and the mixture was stirred for 6 hours. Thereafter, the volatile content was distilled off under reduced pressure. Subsequently, 30 ml of 1,3-bis(trifluoromethyl)benzene was added and stirred at 55°C for 10 minutes, and then a mixed solution of 0.73 g of methanol and 16.8 g of trimethyl orthoformate was added and stirred at this temperature for 2 hours. Thereafter, the volatile content was distilled off under reduced pressure to give 30.1 g of the following perfluoropolyether group-containing silane compound (B) having a trimethylsilyl group at the end.
· Perfluoropolyether group-containing silane compound (B)

   CF₃CF₂CF₂O[CF(CF₃)CF₂O]₂₂CF(CF₃)CONHCH₂C[CH₂CH₂CH₂Si(OCH₃)₃ ]₃

### (Synthesis Example 3)

To a four necked flask of 200 mL equipped with a reflux condenser, a thermometer, and a stirrer, 32 g of perfluoropolyether modified carboxylic acid represented by the average compositional formula CF₃CF₂CF₂O[CF(CF₃)CF₂O]₂₈CF(CF₃)COOH, 16 g of 1,3-bis(trifluoromethyl)benzene, 0.10 g of N,N-dimethylformamide, and 1.69 g of thionyl chloride were charged, and the mixture was stirred at 90°C for 1 hour under a nitrogen gas flow. Subsequently, volatile content was distilled off under reduced pressure, 16 g of 1,3-bis(trifluoromethyl)benzene, 1.05 g of triethylamine, and 1.36 g of NH₂CH₂C(CH₂CH=CH₂)₃ were charged, and the mixture was stirred under a nitrogen gas flow at room temperature for 6 hours. Subsequently, 30 g of perfluorohexane, 10 g of acetone, and 20 g of 3 mol/L hydrochloric acid were added and stirred for 30 minutes, and thereafter the perfluorohexane phase was separated using a separating funnel. Thereafter, the separated perfluorohexane phase was filtered, and then the volatile content was distilled off under reduced pressure to give 29.2 g of the perfluoropolyether group-containing allyl compound (C) of the following formula having an allyl group at the end.
· Perfluoropolyether group-containing allyl compound (C) :

   CF₃CF₂CF₂O[CF(CF₃)CF₂O]₂₈CF(CF₃)CONHCH₂C(CH₂CH=CH₂)₃

### (Synthesis Example 4)

To a four necked flask of 200 mL equipped with a reflux condenser, a thermometer, and a stirrer, 29 g of the perfluoropolyether group-containing allyl compound (C) having an allyl group at the end synthesized in Synthesis Example 3, 35 ml of 1,3-bis(trifluoromethyl)benzene, and 5.2 g of trichlorosilane were charged, and the mixture was stirred at 5°C for 30 minutes under a nitrogen gas flow. Subsequently, 0.23 ml of a xylene solution containing 2% of a Pt complex of 1,3-divinyl-1,1,3,3-tetramethyldisiloxane was added, and then the temperature was raised to 60°C and the mixture was stirred for 6 hours. Thereafter, the volatile content was distilled off under reduced pressure. Subsequently, 30 ml of 1,3-bis(trifluoromethyl)benzene was added and stirred at 55°C for 10 minutes, and then a mixed solution of 0.57 g of methanol and 13.1 g of trimethyl orthoformate was added and stirred at this temperature for 2 hours. Thereafter, the volatile content was distilled off under reduced pressure to give 29.6 g of the following perfluoropolyether group-containing silane compound (D) having a trimethylsilyl group at the end.
· Perfluoropolyether group-containing silane compound (D)

   CF₃CF₂CF₂O[CF(CF₃)CF₂O]₂₈CF(CF₃)CONHCH₂C[CH₂CH₂CH₂Si(OCH₃)₃ ]₃

### (Synthesis Example 5)

To a four necked flask of 200 mL equipped with a reflux condenser, a thermometer, and a stirrer, 32 g of perfluoropolyether modified carboxylic acid represented by the average compositional formula CF₃CF₂CF₂O[CF(CF₃)CF₂O]₁₁CF(CF₃)COOH, 16 g of 1,3-bis(trifluoromethyl)benzene, 0.23 g of N,N-dimethylformamide, and 3.81 g of thionyl chloride were charged, and the mixture was stirred at 90°C for 1 hour under a nitrogen gas flow. Subsequently, volatile content was distilled off under reduced pressure, 16 g of 1,3-bis(trifluoromethyl)benzene, 2.43 g of triethylamine, and 3.04 g of NH₂CH₂C(CH₂CH=CH₂)₃ were charged, and the mixture was stirred under a nitrogen gas flow at room temperature for 6 hours. Subsequently, 30 g of perfluorohexane, 10 g of acetone, and 20 g of 3 mol/L hydrochloric acid were added and stirred for 30 minutes, and thereafter the perfluorohexane phase was separated using a separating funnel. Thereafter, the separated perfluorohexane phase was filtered, and then the volatile content was distilled off under reduced pressure to give 29.4 g of the perfluoropolyether group-containing allyl compound (E) of the following formula having an allyl group at the end.
· Perfluoropolyether group-containing allyl compound (E) :

   CF₃CF₂CF₂O[CF(CF₃)CF₂O]₁₁CF(CF₃)CONHCH₂C(CH₂CH=CH₂)₃

### (Synthesis Example 6)

To a four necked flask of 200 mL equipped with a reflux condenser, a thermometer, and a stirrer, 29 g of the perfluoropolyether group-containing allyl compound (E) having an allyl group at the end synthesized in Synthesis Example 5, 29.0 ml of 1,3-bis(trifluoromethyl)benzene, and 11.8 g of trichlorosilane were charged, and the mixture was stirred at 5°C for 30 minutes under a nitrogen gas flow. Subsequently, 0.8 ml of a xylene solution containing 2% of a Pt complex of 1,3-divinyl-1,1,3,3-tetramethyldisiloxane was added, and then the temperature was raised to 60°C and the mixture was stirred for 6 hours. Thereafter, the volatile content was distilled off under reduced pressure. Subsequently, 29.0 ml of 1,3-bis(trifluoromethyl)benzene was added and stirred at 55°C for 10 minutes, and then a mixed solution of 1.30 g of methanol and 29.2 g of trimethyl orthoformate was added and stirred at this temperature for 2 hours. Thereafter, the volatile content was distilled off under reduced pressure to give 30.0 of the following perfluoropolyether group-containing silane compound (F) having a trimethylsilyl group at the end.
· Perfluoropolyether group-containing silane compound (F)

   CF₃CF₂CF₂O[CF(CF₃)CF₂O]₁₁CF(CF₃)CONHCH₂C[CH₂CH₂CH₂Si(OCH₃)₃ ]₃

### (Example 1)

The compound (B) obtained in Synthesis Example 2 was dissolved in hydrofluoroether (Novec HFE7200 manufactured by 3M Co., Ltd.) to a concentration of 20 wt% to prepare a surface-treating agent.

### (Example 2)

A surface-treating agent was prepared in the same manner as in Example 1 except that the compound (D) obtained in Synthesis Example 4 was used instead of the compound (B).

### (Example 3)

A surface-treating agent was prepared in the same manner as in Example 1 except that the compound (F) obtained in Synthesis Example 6 was used instead of the compound (B).

### (Example 4)

A surface-treating agent was prepared in the same manner as in Example 1 except that the compound (G) was used instead of the compound (B).
·

   Compound (G) CF₃CF₂CF₂O[CF(CF₃)CF₂O]₂₈CF(CF₃)CONHCH₂CH₂CH₂Si(OCH₃)₃

### (Example 5)

A surface-treating agent was prepared in the same manner as in Example 1 except that the compound (H) was used instead of the compound (B).
·

   Compound (H) CF₃CF₂CF₂O[CF(CF₃)CF₂O]₂₂CF(CF₃)CH₂OCH₂CH₂CH₂Si[CH₂CH₂CH₂Si (OCH₃)₃]₃

### (Example 6)

A surface-treating agent was prepared in the same manner as in Example 1 except that the compound (I) was used instead of the compound (B).
·

   Compound (I) CF₃CF₂CF₂O[CF(CF₃)CF₂O]₂₂CF(CF₃)C[OCH₂CH₂CH₂Si(OCH₃)₃][CH₂C H₂CH₂Si(OCH₃)₃]₂

### (Comparative Examples 1 and 2)

Surface-treating agents were prepared in the same manner as in Example 1 except that the control compound 1 or 2 was used instead of the compound (B).
·

   Control compound 1 CF₃CF₂CF₂O(CF₂CF₂CF₂O)₃₀CF₂CF₂CONHCH₂C[CH₂CH₂CH₂Si(OCH₃)₃]₃
·

   Control compound 2 CF₃O(CF₂CF₂O)₂₂(CF₂O)₂₃CF₂CONHCH₂C[CH₂CH₂CH₂Si(OCH₃)₃]₃

### <Evaluation>

The surface-treating agents prepared in Examples 1-6 and Comparative Examples 1 and 2 were vacuum-deposited on chemically strengthened glass ("Gorilla" glass manufactured by Corning, thickness 0.7 mm). The processing condition for the vacuum deposition was a pressure of 3.0 × 10⁻³ Pa, a 5 nm silicon dioxide layer was formed on the surface of the chemically strengthened glass, and then 4 mg of a surface-treating agent (i.e., it contains 0.8 mg of any of compound (B), compound (D), compound (F), compound (G), compound (H), compound (I), or control compounds 1, 2) was deposited per sheet of the chemically strengthened glass (55 mm × 100 mm). Next, the chemically strengthened glass with a deposition coating was allowed to stand for 30 minutes in an atmosphere at a temperature of 150°C and then allowed to cool to room temperature to form a surface-treating layer.

### (Evaluation of water-repellency)

The static contact angle was measured using a contact angle measurement apparatus (manufactured by Kyowa Interface Science Co., Ltd.). The static contact angle of water was measured with 2 µL of water. The results are shown in the table below.

**[Table 1]**

| | | Water |
|---|---|---|
| Example 1 | Contact angle (degrees) | 115 |
| Example 2 | Contact angle (degrees) | 115 |
| Example 3 | Contact angle (degrees) | 114 |
| Example 4 | Contact angle (degrees) | 114 |
| Example 5 | Contact angle (degrees) | 114 |
| Example 6 | Contact angle (degrees) | 114 |
| Comparative Example 1 | Contact angle (degrees) | 114 |
| Comparative Example 2 | Contact angle (degrees) | 114 |

### (UV resistance evaluation)

With respect to the surface-treating layer formed above, the static contact angles of water before and after UV irradiation were measured. UV irradiation was performed using a UVB-313 lamp (manufactured by Q-Lab Corporation, 0.63 W/m² irradiance at 310 nm), with the black panel temperature of the base material being 63°C and the distance between the lamp and the surface-treating layer being 5 cm. The static contact angle of water was measured for 2 µL of water by using a contact angle measurement apparatus (manufactured by Kyowa Interface Science Co., Ltd.).

Firstly, as an initial evaluation, the static contact angle of water was measured after the surface-treating layer was formed and before UV irradiation (UV irradiation time of 0 hours). Thereafter, the static contact angle of water was measured for each surface-treating layer after UV irradiation for a predetermined time. The evaluation was performed up to a cumulative irradiation time of 96 hours. The results are shown in Table 2. Table 3 shows the ratio of the contact angle value after the cumulative UV irradiation time of 96 hours to the contact angle value after the UV irradiation time of 0 hours (value of contact angle after 96 hours of cumulative UV irradiation time/value of contact angle after 0 hours of UV irradiation time).

**[Table 2]**

| Cumulative UV irradiation time (hours) | | 0 | 24 | 48 | 72 | 96 |
|---|---|---|---|---|---|---|
| Example 1 | Contact angle (degrees) | 115 | 115 | 112 | 110 | 98 |
| Example 2 | Contact angle (degrees) | 115 | 115 | 113 | 111 | 100 |
| Example 3 | Contact angle (degrees) | 114 | 114 | 111 | 108 | 95 |
| Example 4 | Contact angle (degrees) | 114 | 114 | 111 | 107 | 92 |
| Example 5 | Contact angle (degrees) | 114 | 114 | 111 | 107 | 93 |
| Example 6 | Contact angle (degrees) | 114 | 114 | 111 | 107 | 94 |
| Comparative Example 1 | Contact angle (degrees) | 114 | 114 | 111 | 105 | 86 |
| Comparative Example 2 | Contact angle (degrees) | 114 | 114 | 98 | 83 | 70 |

**[Table 3]**

| Cumulative UV irradiation time (hours) | | 0 | 24 | 48 | 72 | 96 |
|---|---|---|---|---|---|---|
| Example 1 | Ratio of contact angle(%) | 100.0 | 100.0 | 97.4 | 95.7 | 85.2 |
| Example 2 | Ratio of contact angle(%) | 100.0 | 100.0 | 98.3 | 96.5 | 87.0 |
| Example 3 | Ratio of contact angle(%) | 100.0 | 100.0 | 97.4 | 94.7 | 83.3 |
| Example 4 | Ratio of contact angle(%) | 100.0 | 100.0 | 97.4 | 93.9 | 80.7 |
| Example 5 | Ratio of contact angle(%) | 100.0 | 100.0 | 97.4 | 93.9 | 81.6 |
| Example 6 | Ratio of contact angle(%) | 100.0 | 100.0 | 97.4 | 93.9 | 82.4 |
| Comparative Example 1 | Ratio of contact angle(%) | 100.0 | 100.0 | 97.4 | 92.1 | 75.4 |
| Comparative Example 2 | Ratio of contact angle(%) | 100.0 | 100.0 | 86.0 | 72.8 | 61.4 |

### · Surface lubricity evaluation (measurement of dynamic friction coefficient)

The dynamic friction coefficient (-) of the base material having the surface-treating layer on the surface formed above was measured in accordance with ASTM D4917 using paper as a friction block using a surface measuring instrument (manufactured by Labthink Instruments Co. Ltd., FPT-1) .

Specifically, the base material having the surface-treating layer was disposed horizontally, paper (2 cm × 2 cm) serving as a friction block was brought into contact with the exposed upper surface of the surface-treating layer, and a load of 200 gf was applied thereon. Thereafter, the paper serving as a friction block was moved in parallel at a speed of 200 mm/sec under the load, and the dynamic friction coefficient was measured. The results are shown in the table below.

**[Table 4]**

| | Dynamic friction coefficient (-) |
|---|---|
| Example 1 | 0.26 |
| Example 2 | 0.23 |
| Example 3 | 0.28 |
| Example 4 | 0.22 |
| Example 5 | 0.24 |
| Example 6 | 0.23 |
| Comparative Example 1 | 0.07 |
| Comparative Example 2 | 0.03 |

As described above, by using the surface-treating agents of Examples 1-6, surface-treating layers having a high dynamic friction coefficient, that is, surface-treating layers with suppressed lubricity on the surface were obtained.

### Industrial Applicability

The present disclosure can be suitably used for various electronic devices, particularly electronic devices requiring slip suppression on the surface thereof.

## Claims

1. An electronic device comprising a surface-treating layer formed on at least a part of a surface thereof, the surface-treating layer being formed of a compound which is a fluoro(poly)ether group-containing silane compound of any of the formulae (A1), (A2), (B1), (B2), (C1) or (C2): 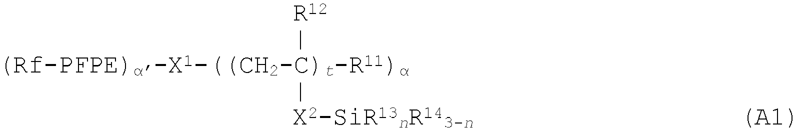 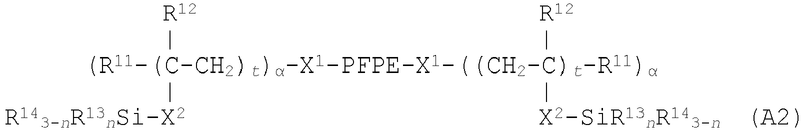
wherein, each independently at each occurrence:
PFPE is -(OC₃F₆)*_{d}-* wherein the repeating unit-(OC₃F₆)- has a branched structure, and d is an integer of 1-200;
Rf is C₁₋₁₆-alkyl optionally substituted by F;
X¹ is a 2- to 10-valent organic group;
α is an integer of 1-9;
α' is an integer of 1-9;
R¹¹ is H or halogen;
R¹² is H or C₁₋₂₀-alkyl;
X² is C₁₋₂₀-alkylene;
R¹³ is OH or a hydrolyzable group;
R¹⁴ is H or C₁₋₂₂-alkyl;
n is an integer of 0-3 for each (-SiR¹³*ₙ*R¹⁴_{3-*n*}) unit;
t is an integer of 2-10;
in the formulae (A1) and (A2), at least one n is an integer of 1-3;
(Rf-PFPE)_{β'}-X³-(SiR^{a}₃)_{β} (B1)
(R^{a}₃Si)_{β}-X³-PFPE-X³-(SiR^{a}₃)_{β} (B2)
wherein Rf is as defined above and, each independently at each occurrence:
PFPE is a group of the formula:
- (OC₆F₁₂)ₐ-(OC₅F₁₀)_{b}-(OC₄F₈)_{c}-(OC₃X^{F}₆)_{d}-(OC₂F₄)ₑ-(OCF₂)_{f}-
and has at least one branched structure,
wherein *a-f* each independently are an integer of 0-200 and (*a+b+c+d+e+f*) ≥ 1, and the order of the respective repeating units in parentheses with *a, b, c,* d, e or f is arbitrary, and X^{F} each independently is H, F or Cl;
or is a group of the formula:
-(R¹⁶-R¹⁷)_{*j*1}-
wherein R¹⁶ is OCF₂ or OC₂F₄; R¹⁷ is a group selected from OC₂F₄, OC₃X^{F}₆, OC₄F₈, OC₅F₁₀, and OC₆F₁₂, or is a combination of two or three groups independently selected from these groups; *j*1 is an integer of 2-100; and X^{F} each independently is H, F or Cl;
X³ is a single bond or a 2- to 10-valent organic group;
β is an integer of 1-9;
β' is an integer of 1-9;
R^{a} is -Z³-SiR⁷²_{q1}R⁷³ᵣ₁; wherein, each independently at each occurrence,
Z³ is a divalent organic group which does not include a group forming a siloxane bond together with an Si atom;
R⁷² is OH or a hydrolyzable group;
R⁷³ is H or C₁₋₂₀-alkyl;
*q*1 is an integer of 1-3;
*r*1 is an integer of 0-2; and
(*q*1+*r*1) = 3 in each (-Z³-SiR⁷²_{*q*1}R⁷³_{*r*i});
Rf-PFPE-X⁵-CR^{e}₃ (C1)
R^{e}₃C-X⁵-PFPE-X⁵-CR^{e}₃ (C2)
wherein PFPE and Rf are as defined for formulae (B1) and (B2) and, each independently at each occurrence:
X⁵ is a divalent organic group of the formula - (R³¹)_{*p*'}-((X^{b})*_{l'}*)*_{q'}*- wherein, each independently at each occurence,
R³¹ is a single bond, -(CH₂)_{s'}- optionally substituted by one or more F wherein s' is an integer of 1-20, or o-, m- or p-phenylene,
X^{b} is -O-, -(OR³⁵)*ₙ₄-,* -S-, o-, m- or p-phenylene, -C(O)O-, -Si(R³³)₂-, -(Si(R³³)₂O)*_{m'}*-Si(R³³)₂-, -CON(R³⁴)-, -O-CON (R³⁴)-, -N(R³⁴)- or -(CH₂)*_{n'}*-, wherein
R³³ is phenyl, C₁₋₆-alkyl or C₁₋₆-alkoxy,
R³⁴ is H, phenyl or C₁₋₆-alkyl,
R³⁵ is C₁₋₆-alkylene,
*n4* is an integer of 1-5,
m' is an integer of 1-100,
*n'* is an integer of 1-20,
*l'* is an integer of 1-10,
*p*' is 0 or 1,
*q'* is 0 or 1, and
at least one of *p*' and *q*' is 1, and the order of the respective repeating units in parentheses with *p*' or *q'* is arbitrary;
R^{e} is -Y-SiR⁸⁵_{*n*2}R⁸⁶_{3-*n*2};
Y each independently is C₁₋₆-alkylene or -phenylene-(CH₂)_{i'}- wherein i' is an integer of 0-6;
R⁸⁵ is OH or a hydrolyzable group;
R⁸⁶ is H or C₁₋₂₀-alkyl; and
n2 is an integer of 1-3 for each (-Y-SiR⁸⁵_{*n*2}R⁸⁶_{3-*n*2}) unit.

2. The electronic device of claim 1, wherein in the formulae (A1) and (A2), there are at least two SiR¹³.

3. The electronic device of claim 1 or 2, wherein X¹ is -X¹⁰-CON(R³⁴)-X¹¹-, -X¹⁰-(OR³⁵)ₙ₄-X¹¹- or C₁₋₆ alkylene, wherein
X¹⁰ each independently is a single bond or a divalent organic group, preferably a single bond, -O-R³⁶-O-, -R³⁶-, or an o-, m-, or p-phenylene group, and more preferably a single bond, -O-R³⁶-O-, or -R³⁶-; R³⁶ is C₁₋₂₀-alkylene optionally substituted by one or more F;
X¹¹ each independently is a single bond, O, or a divalent organic group, and preferably a single bond, an oxygen atom, or C₁₋₂₀-alkylene optionally substituted by one or more F;
R³⁴ each independently is H, phenyl or C₁₋₆-alkyl;
R³⁵ each independently is C₁₋₆-alkylene, preferably C₁₋₃-alkylene; and
n4 is an integer of 1-5.

4. The electronic device of any of claims 1-3, wherein X³ is -X¹⁰-CON(R³⁴)-X¹¹-, -X¹⁰-(OR³⁵)ₙ₄-X¹¹- or C₁₋₆-alkylene, wherein
X¹⁰ each independently is a single bond or a divalent organic group, preferably a single bond, -O-R³⁶-O-, -R³⁶-, or an o-, m-, or p-phenylene group, and more preferably a single bond, -O-R³⁶-O-, or -R³⁶-; R³⁶ is C₁₋₂₀-alkylene optionally substituted by one or more F;
X¹¹ each independently is a single bond, O, or a divalent organic group, and preferably a single bond, an oxygen atom, or C₁₋₂₀-alkylene optionally substituted by one or more F;
R³⁴ each independently is H, phenyl or C₁₋₆-alkyl;
R³⁵ each independently is C₁₋₆-alkylene, preferably C₁₋₃-alkylene; and
n4 is an integer of 1-5.

5. The electronic device of any of claims 1-4, wherein X⁵ is -X¹⁰-CON(R³⁴)-X¹¹-, -X¹⁰-(OR³⁵)ₙ₄-X¹¹- or C₁₋₆-alkylene, wherein
X¹⁰ each independently is a single bond or a divalent organic group, preferably a single bond, -O-R³⁶-O-, -R³⁶-, or an o-, m-, or p-phenylene group, and more preferably a single bond, -O-R³⁶-O-, or -R³⁶-; R³⁶ is C₁₋₂₀-alkylene optionally substituted by one or more F;
X¹¹ each independently is a single bond, O, or a divalent organic group, and preferably a single bond, an oxygen atom, or C₁₋₂₀-alkylene optionally substituted by one or more F;
R³⁴ each independently is H, phenyl or C₁₋₆-alkyl;
R³⁵ each independently is C₁₋₆-alkylene, preferably C₁₋₃-alkylene; and
n4 is an integer of 1-5.

6. The electronic device of any of claims 1-5, wherein - (OC₃X^{F}₆)_{d}- in formulae (B1), (B2), (C1) and (C2) is -(OC₃F₆)_{d}-.

7. The electronic device of any of claims 1-6, wherein -(OC₃F₆)_{d}- in formulae (Al) an (A2) and -(OC₃X^{F}₆)_{d}- in formulae (B1), (B2), (C1) and (C2) is -(OCF(CF₃)CF₂)_{d}- or -(OCF₂CF(CF₃))_{d}-, and d is an integer of 1-200.

8. The electronic device of any of claims 1-7, which is capable of being driven by a rechargeable battery.

9. The electronic device of any of claims 1-8, which is a mobile phone or a smartphone.

10. The electronic device of claim 8 or 9, which has a first main surface and a second main surface facing the first main surface, and has a surface-treating layer on the second main surface.

11. An electronic device, which is a charging stand, and comprises a surface-treating layer formed on at least a part of a surface thereof, the surface-treating layer being formed of a compound which is a fluoro(poly)ether group-containing silane compound of any of the formulae (Al), (A2), (B1), (B2), (C1) or (C2): 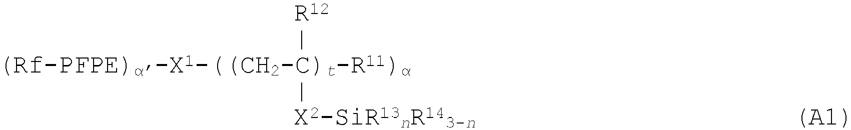 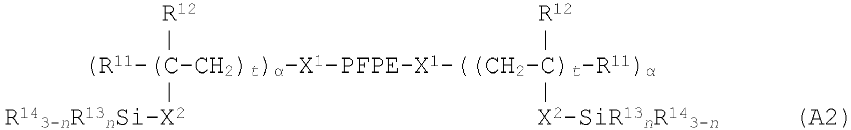
wherein, each independently at each occurrence:
PFPE is a group of the formula:
- (OC₆F₁₂)ₐ-(OC₅F₁₀)_{b}-(OC₄F₈)_{c}-(OC₃X^{F}₆)_{d}-(OC₂F₄)ₑ-(OCF₂)_{f}-
and has at least one branched structure,
wherein *a-f* each independently are an integer of 0-200 and (*a*+*b*+*c*+*d*+*e*+*f*) ≥ 1, and the order of the respective repeating units in parentheses with *a, b, c,* d, e or f is arbitrary, and X^{F} each independently is H, F or Cl;
or is a group of the formula:
- (R¹⁶-R¹⁷-)_{*j*1}-
wherein R¹⁶ is OCF₂ or OC₂F₄; R¹⁷ is a group selected from OC₂F₄, OC₃X^{F}₆, OC₄F₈, OC₅F₁₀, and OC₆F₁₂, or is a combination of two or three groups independently selected from these groups; *j*1 is an integer of 2-100; and X^{F} each independently is H, F or Cl; 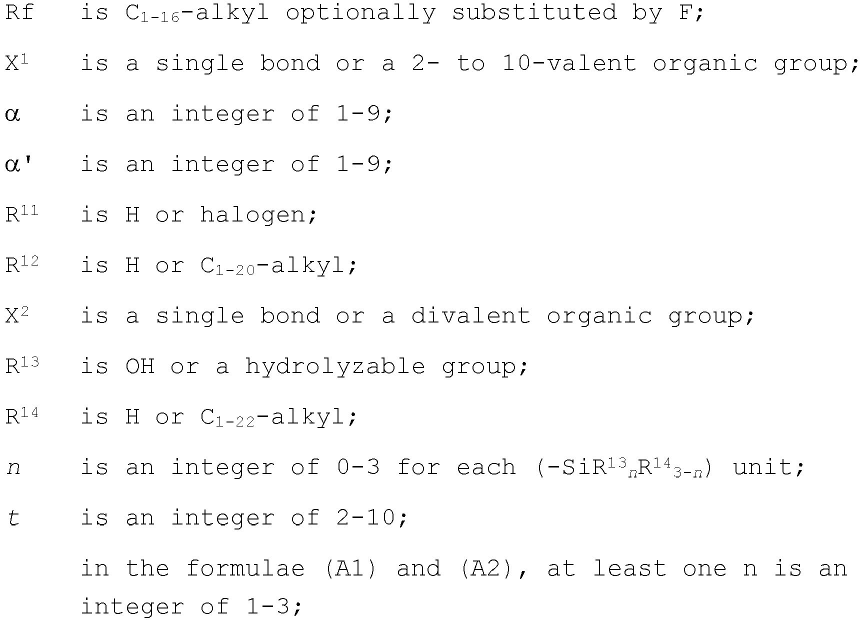
(Rf-PFPE)_{β'}-X³-(SiR^{a}_{*k*1}R^{b}_{*l*1}R^{c}_{*m*1})_{β} (B1)
(R^{c}_{*m*1}R^{b}_{*l*1}R^{a}_{*k*1}Si)_{β}-X³-PFPE-X³-(SiR^{a}_{*k*1}R^{b}_{*l*1}R^{c}_{*m*1})_{β} (B2)
wherein PFPE and Rf are as defined above and, each independently at each occurrence: 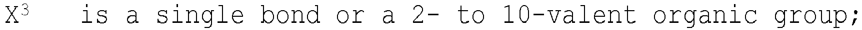
β is an integer of 1-9;
β' is an integer of 1-9;
R^{a} is -Z³-SiR⁷¹ₚ₁R⁷²_{q1}R⁷³ᵣ₁; wherein, each independently at each occurrence,
Z³ is O or a divalent organic group;
R⁷¹ is as defined for R^{a};
R⁷² is OH or a hydrolyzable group;
R⁷³ is H or C₁₋₂₀-alkyl;
*p*1 is an integer of 0-3;
*q*1 is an integer of 0-3;
*r*1 is an integer of 0-3;
(*p*1+*q*1+*r*1) = 3 in each (-Z³-SiR⁷¹_{*p*1}R⁷²_{*q*1}R⁷³_{*r*1}); and
in R^{a}, the number of Si atoms which are linearly linked via Z³ is ≤ 5;
R^{b} is OH or a hydrolyzable group;
R^{c} is H or C₁₋₂₀-alkyl;
*k*1 is an integer of 0-3;
*l*1 is an integer of 0-3;
*m*1 is an integer of 0-3;
in each (SiR^{a}_{*k*1}R^{b}_{*l*1}R^{c}_{*m*1}), (*k*1+*l*1+*m*1) = 3, and in the formulae (B1) and (B2), at least one *q*1 is an integer of 1-3;
(Rf-PFPE)_{γ'}-X⁵-(CR^{d}_{*k*2}R^{e}_{*l*2}R^{f}_{*m*2})_{γ} (C1)
(R^{f}_{*m*2}R^{e}_{*l*2}R^{d}_{*k*2}C)_{γ}-X⁵-PFPE-X⁵-(CR^{d}_{*k*2}R^{e}_{*l*2}R^{f}_{*m*2})_{γ} (C2)
wherein PFPE and Rf are as defined above and, each independently at each occurrence:
X⁵ is a single bond or a 2- to 10-valent organic group;
y is an integer of 1-9;
y' is an integer of 1-9;
R^{d} is -Z⁴-CR⁸¹_{*p*2}R⁸²_{*q*2}R⁸³_{*r*2}; wherein each independently at each occurrence,
Z⁴ is O or a divalent organic group;
R⁸¹ is as defined for R^{d};
R⁸² is -Y-SiR⁸⁵_{*n*2}R⁸⁶_{3-*n*2};
Y is a divalent organic group;
R⁸⁵ is OH or a hydrolyzable group;
R⁸⁶ is H or C₁₋₂₀-alkyl;
n2 is an integer of 0-3 for each (-Y-SiR⁸⁵_{*n*2}R⁸⁶_{3-*n*2}) unit;
R⁸³ is H, OH or C₁₋₂₀-alkyl;
p2 is an integer of 0-3;
*q2* is an integer of 0-3;
r2 is an integer of 0-3;
(*p*2+*q*2+*r*2) = 3 in each (-Z⁴-CR⁸¹_{*p*2}R⁸²_{*q*2}R⁸³_{*r*2}); and
in R^{d}, the number of C atoms which are linearly linked via Z⁴ is ≤ 5;
R^{e} is -Y-SiR⁸⁵_{*n*2}R⁸⁶_{3-*n*2};
R^{f} is H, OH or C₁₋₂₀-alkyl;
*k2* is an integer of 0-3;
12 is an integer of 0-3;
m2 is an integer of 0-3; and
(*k*2+*l*2+*m*2) = 3 in each (CR^{d}_{*k*2}R^{e}_{*l*2}R^{f}_{*m*2}), and in the formulae (C1) and (C2), there are at least two groups represented by -Y-SiR⁸⁵.

12. The electronic device of any of claims 1-11, comprising a surface-treating layer on a surface, wherein
- the contact angle of water on the surface is ≥ 100°, measured as a static contact angle with 2 µl of water in an environment of 21°C and 65% humidity, and
- the dynamic friction coefficient on the surface, measured according to ASTM D4917, is 0.1-0.5.

13. The electronic device of claim 12, wherein the contact angle of water is ≥ 110° and the dynamic friction coefficient is 0.15-0.35.

14. The electronic device of any of claims 1-13, wherein PFPE in the formulae (A1), (A2), (B1), (B2), (C1) and (C2) is -(OCF₂CF(CF₃))*_{d}*- wherein d is an integer of 1-200.

## Patentansprüche

1. Elektronische Vorrichtung, umfassend eine Oberflächenbehandlungsschicht, die auf mindestens einem Teil einer Oberfläche davon ausgebildet ist, wobei die Oberflächenbehandlungsschicht aus einer Verbindung gebildet ist, die eine Fluor(poly)ethergruppen-haltige Silanverbindung einer der Formeln (A1), (A2), (B1), (B2), (C1) oder (C2) ist: 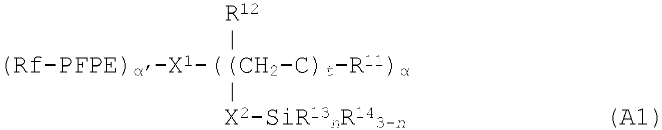 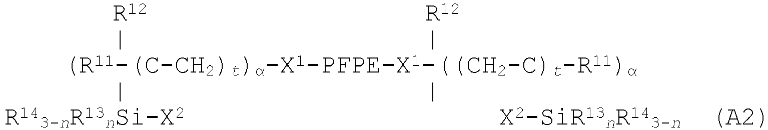
worin, jeweils unabhängig bei jedem Auftreten:
PFPE -(OC₃F₆)*_{d}*- ist, worin die Wiederholungseinheit - (OC₃F₆)- eine verzweigte Struktur aufweist und d eine ganze Zahl von 1-200 ist;
Rf C₁₋₁₆-Alkyl ist, das gegebenenfalls mit F substituiert ist;
X¹ eine 2- bis 10-wertige organische Gruppe ist;
α eine ganze Zahl von 1-9 ist;
α' eine ganze Zahl von 1-9 ist;
R¹¹ H oder Halogen ist;
R¹² H oder C₁₋₂₀-Alkyl ist;
X² C₁₋₂₀-Alkylen ist;
R¹³ OH oder eine hydrolysierbare Gruppe ist;
R¹⁴ H oder C₁₋₂₂-Alkyl ist;
n eine ganze Zahl von 0-3 für jede (-SiR¹³*ₙ*R¹⁴_{3-*n*})-Einheit ist;
t eine ganze Zahl von 2-10 ist;
in den Formeln (A1) und (A2), mindestens ein n eine ganze Zahl von 1-3 ist;
(Rf-PFPE)_{β'}-X³-(SiR^{a}₃)_{β} (B1)
(R^{a}₃Si)_{β}-X³-PFPE-X³-(SiR^{a}₃)_{β} (B2)
worin Rf wie oben definiert ist und, jeweils unabhängig bei jedem Auftreten:
PFPE eine Gruppe der Formel:
- (OC₆F₁₂)ₐ-(OC₅F₁₀)_{b}-(OC₄F₈)_{c}-(OC₃X^{F}₆)_{d}-(OC₂F₄)ₑ-(OCF₂)_{f}-
ist und mindestens eine verzweigte Struktur aufweist,
worin *a-f* jeweils unabhängig eine ganze Zahl von 0-200 sind und *(a+b+c+d+e+f)* ≥ 1, und die Reihenfolge der jeweiligen Wiederholungseinheiten in den Klammern mit *a, b, c,* d, e oder f beliebig ist und X^{F} jeweils unabhängig H, F oder Cl ist;
oder eine Gruppe der Formel
-(R¹⁶-R¹⁷)_{*j*1}-
ist, worin R¹⁶ OCF₂ oder OC₂F₄ ist; R¹⁷ eine Gruppe ist, ausgewählt aus OC₂F₄, OC₃X^{F}₆, OC₄F₈, OC₅F₁₀ und OC₆F₁₂, oder eine Kombination aus zwei oder drei Gruppen ist, die unabhängig aus diesen Gruppen ausgewählt sind; *j*1 eine ganze Zahl von 2-100 ist; und X^{F} jeweils unabhängig H, F oder Cl ist;
X³ eine Einfachbindung oder eine 2- bis 10-wertige organische Gruppe ist;
β eine ganze Zahl von 1-9 ist;
β' eine ganze Zahl von 1-9 ist;
R^{a} -Z³-SiR⁷²_{q1}R⁷³ᵣ₁ ist; worin, jeweils unabhängig bei jedem Auftreten,
Z³ eine zweiwertige organische Gruppe ist, die keine Gruppe enthält, die zusammen mit einem Si-Atom eine Siloxanbindung bildet;
R⁷² OH oder eine hydrolysierbare Gruppe ist;
R⁷³ H oder C₁₋₂₀-Alkyl ist;
q1 eine ganze Zahl von 1-3 ist;
r1 eine ganze Zahl von 0-2 ist; und
(*q*1+*r*1) = 3 in jedem (-Z³-SiR⁷²_{*q*1}R⁷³_{*r*1});
Rf-PFPE-X⁵-CR^{e}₃ (C1)
R^{e}₃C-X⁵-PFPE-X⁵-CR^{e}₃ (C2)
worin PFPE und Rf wie für die Formeln (B1) und (B2) definiert sind und, jeweils bei jedem Auftreten:
X⁵ eine zweiwertige organische Gruppe der Formel-(R³¹)*_{p'}*-((X^{b})*_{l'}*)*_{q'}-* ist, worin, jeweils unabhängig bei jedem Auftreten,
R³¹ eine Einfachbindung, -(CH₂)_{s'}-, das gegebenenfalls mit einem oder mehreren F substituiert ist, worin s' eine ganze Zahl von 1-20 ist, oder o-, m- oder p-Phenylen ist,
X^{b} -O-, -(OR³⁵)_{*n*4}-, -S-, o-, m- oder p-Phenylen, -C(O)O-, -Si(R³³)₂-, -(Si(R³³)₂O)*_{m'}*-Si(R³³)₂-, -CON(R³⁴)-, -O-CON(R³⁴)-, -N(R³⁴)- oder -(CH₂)*_{n'}-*ist, worin
R³³ Phenyl, C₁₋₆-Alkyl oder C₁₋₆-Alkoxy ist,
R³⁴ H, Phenyl oder C₁₋₆-Alkyl ist,
R³⁵ C₁₋₆-Alkylen ist,
*n4* eine ganze Zahl von 1-5 ist,
m' eine ganze Zahl von 1-100 ist,
n' eine ganze Zahl von 1-20 ist,
*l*' eine ganze Zahl von 1-10 ist,
p' 0 oder 1 ist,
*q'* 0 oder 1 ist, und
mindestens eines von p' und q' 1 ist und die Reihenfolge der jeweiligen Wiederholungseinheiten in den Klammern mit p' oder q' beliebig ist;
R^{e} -Y-SiR⁸⁵_{*n*2}R⁸⁶_{3-*n*2} ist;
Y jeweils unabhängig C₁₋₆-Alkylen oder -Phenylen-(CH₂)_{i'}- ist, worin i' eine ganze Zahl von 0-6 ist;
R⁸⁵ OH oder eine hydrolysierbare Gruppe ist;
R⁸⁶ H oder C₁₋₂₀-Alkyl ist; und
n2 eine ganze Zahl von 1-3 für jede (-Y-SiR⁸⁵_{*n*2}R⁸⁶_{3-*n*2}) -Einheit ist.

2. Elektronische Vorrichtung gemäß Anspruch 1, worin, in den Formeln (A1) und (A2), mindestens zwei SiR¹³ vorhanden sind.

3. Elektronische Vorrichtung gemäß Anspruch 1 oder 2, worin X¹ -X¹⁰-CON(R³⁴)-X¹¹-, -X¹⁰-(OR³⁵)ₙ₄-X¹¹- oder C₁₋₆-Alkylen ist, worin
X¹⁰ jeweils unabhängig eine Einfachbindung oder eine zweiwertige organische Gruppe, vorzugsweise eine Einfachbindung, -O-R³⁶-O-, -R³⁶- oder eine o-, m-, oder p-Phenylengruppe, und bevorzugter eine Einfachbindung, -O-R³⁶-O- oder -R³⁶- ist;
R³⁶ C₁₋₂₀-Alkylen ist, das gegebenenfalls mit einem oder mehreren F substituiert ist;
X¹¹ jeweils unabhängig eine Einfachbindung, O oder eine zweiwertige organische Gruppe, vorzugsweise eine Einfachbindung, ein Sauerstoffatom oder C₁₋₂₀-Alkylen ist, das gegebenenfalls mit einem oder mehreren F substituiert ist;
R³⁴ jeweils unabhängig H, Phenyl oder C₁₋₆-Alkyl ist;
R³⁵ jeweils unabhängig C₁₋₆-Alkylen, vorzugsweise C₁₋₃-Alkylen ist; und
n4 eine ganze Zahl von 1-5 ist.

4. Elektronische Vorrichtung gemäß einem der Ansprüche 1-3, worin X³-X¹⁰-CON(R³⁴)-X¹¹-, -X¹⁰-(OR³⁵)₄-X¹¹- oder C₁₋₆-Alkylen ist, worin
X¹⁰ jeweils unabhängig eine Einfachbindung oder eine zweiwertige organische Gruppe, vorzugsweise eine Einfachbindung, -O-R³⁶-O-, -R³⁶- oder eine o-, m- oder p-Phenylengruppe und bevorzugter eine Einfachbindung, -O-R³⁶-O- oder -R³⁶- ist;
R³⁶ C₁₋₂₀-Alkylen ist, das gegebenenfalls mit einem oder mehreren F substituiert ist;
X¹¹ jeweils unabhängig eine Einfachbindung, O oder eine zweiwertige organische Gruppe und vorzugsweise eine Einfachbindung, ein Sauerstoffatom oder C₁₋₂₀-Alkylen ist, das gegebenenfalls mit einem oder mehreren F substituiert ist;
R³⁴ jeweils unabhängig H, Phenyl oder C₁₋₆-Alkyl ist;
R³⁵ jeweils unabhängig C₁₋₆-Alkylen, vorzugsweise C₁₋₃-Alkylen ist; und
n4 eine ganze Zahl von 1-5 ist.

5. Elektronische Vorrichtung gemäß einem der Ansprüche 1-4, worin X⁵ -X¹⁰-CON(R³⁴)-X¹¹-, -X¹⁰-(OR³⁵)₄-X¹¹- oder C₁₋₆-Alkylen ist, worin
X¹⁰ jeweils unabhängig eine Einfachbindung oder eine zweiwertige organische Gruppe, vorzugsweise eine Einfachbindung, -O-R³⁶-O-, -R³⁶- oder eine o-, m- oder p-Phenylengruppe und bevorzugter eine Einfachbindung, -O-R³⁶-O- oder -R³⁶- ist;
R³⁶ C₁₋₂₀-Alkylen ist, das gegebenenfalls mit einem oder mehreren F substituiert ist;
X¹¹ jeweils unabhängig eine Einfachbindung, O oder eine zweiwertige organische Gruppe und vorzugsweise eine Einfachbindung, ein Sauerstoffatom oder C₁₋₂₀-Alkylen ist, das gegebenenfalls mit einem oder mehreren F substituiert ist;
R³⁴ jeweils unabhängig H, Phenyl oder C₁₋₆-Alkyl ist;
R³⁵ jeweils unabhängig C₁₋₆-Alkylen, vorzugsweise C₁₋₃-Alkylen ist; und
n4 eine ganze Zahl von 1-5 ist.

6. Elektronische Vorrichtung gemäß einem der Ansprüche 1-5, worin -(OC₃X^{F}₆)_{d}- in den Formeln (B1), (B2), (C1) und (C2) -(OC₃F₆)_{d}- ist.

7. Elektronische Vorrichtung gemäß einem der Ansprüche 1-6, worin -(OC₃F6)_{d}- in den Formeln (A1) und (A2) und - (OC₃X^{F}₆)_{d}- in den Formeln (B1), (B2), (C1) und (C2) - (OCF(CF₃)CF₂)_{d}- oder -(OCF₂CF(CF₃))_{d}- ist und d eine ganze Zahl von 1-200 ist.

8. Elektronische Vorrichtung gemäß einem der Ansprüche 1-7, die mit einer wiederaufladbaren Batterie betrieben werden kann.

9. Elektronische Vorrichtung gemäß einem der Ansprüche 1-8, die ein Mobiltelefon oder ein Smartphone ist.

10. Elektronische Vorrichtung gemäß Anspruch 8 oder 9, die eine erste Hauptoberfläche und eine zweite Hauptoberfläche, die der ersten Hauptoberfläche zugewandt ist, und eine Oberflächenbehandlungsschicht auf der zweiten Hauptoberfläche aufweist.

11. Elektronische Vorrichtung, die eine Ladestation ist und eine Oberflächenbehandlungsschicht umfasst, die auf mindestens einem Teil einer Oberfläche davon ausgebildet ist, wobei die Oberflächenbehandlungsschicht aus einer Verbindung gebildet ist, die eine Fluor(poly)ethergruppenhaltige Silanverbindung einer der Formeln (A1), (A2), (B1), (B2), (C1) oder (C2) ist: 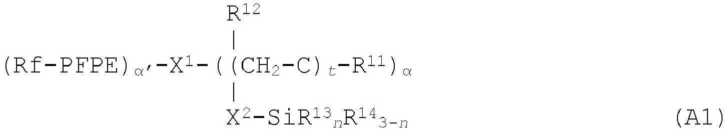 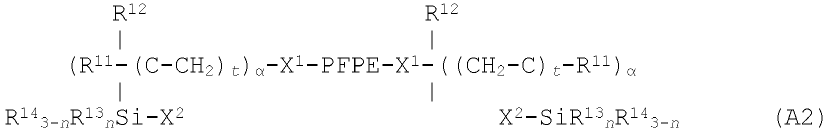
worin, jeweils unabhängig bei jedem Auftreten:
PFPE eine Gruppe der Formel:
- (OC₆F₁₂)ₐ-(OC₅F₁₀)_{b}-(OC₄F₈)_{c}-(OC₃X^{F}₆)_{d}-(OC₂F₄)ₑ-(OCF₂)_{f}-
ist und mindestens eine verzweigte Struktur aufweist,
worin *a-f* jeweils unabhängig eine ganze Zahl von 0-200 sind und (*a*+*b*+*c*+*d*+*e*+*f*) ≥ 1, und die Reihenfolge der jeweiligen Wiederholungseinheiten in den Klammern mit *a, b, c,* d, e oder f beliebig ist, und X^{F} jeweils unabhängig H, F oder Cl ist;
oder eine Gruppe der Formel:
-(R¹⁶-R¹⁷)_{*j*1}-
ist, worin R¹⁶OCF₂ oder OC₂F₄ ist; R¹⁷ eine Gruppe ist, ausgewählt aus OC₂F₄, OC₃X^{F}₆, OC₄F₈, OC₅F₁₀ und OC₆F₁₂, oder eine Kombination aus zwei oder drei Gruppen ist, die unabhängig aus diesen Gruppen ausgewählt sind; *j*1 eine ganze Zahl von 2-100 ist; und X^{F} jeweils unabhängig H, F oder Cl ist;
Rf C₁₋₁₆-Alkyl ist, das gegebenenfalls mit F substituiert ist;
X¹ eine Einfachbindung oder eine 2- bis 10-wertige organische Gruppe ist;
α eine ganze Zahl von 1-9 ist;
α' eine ganze Zahl von 1-9 ist;
R¹¹ H oder Halogen ist;
R¹² H oder C₁₋₂₀-Alkyl ist;
X² eine Einfachbindung oder eine zweiwertige organische Gruppe ist;
R¹³ OH oder eine hydrolysierbare Gruppe ist;
R¹⁴ H oder C₁₋₂₂-Alkyl ist;
n eine ganze Zahl von 0-3 für jede (-SiR¹³*ₙ*R¹⁴_{3-*n*})-Einheit ist;
t eine ganze Zahl von 2-10 ist;
in den Formeln (A1) und (A2), mindestens ein n eine ganze Zahl von 1-3 ist;
(Rf-PFPE)_{β'}-X³-(SiR^{a}_{*k*1}R^{b}_{*l*1}R^{c}_{*m*1})_{β} (B1)
(R^{c}_{*m*1}R^{b}_{*l*1}R^{a}_{*k*1}Si)_{β}-X³-PFPE-X³-(SiR^{a}_{*k*1}R^{b}_{*l*1}R^{c}_{*m*1})_{β} (B2)
worin PFPE und Rf wie oben definiert sind und, jeweils unabhängig bei jedem Auftreten:
X³ eine Einfachbindung oder eine 2- bis 10-wertige organische Gruppe ist;
β eine ganze Zahl von 1-9 ist;
β' eine ganze Zahl von 1-9 ist;
R^{a} -Z³-SiR⁷¹ₚ₁R⁷²_{q1}R⁷³ᵣ₁ ist; worin, jeweils unabhängig bei jedem Auftreten,
Z³ O oder eine zweiwertige organische Gruppe ist;
R⁷¹ wie für R^{a} definiert ist;
R⁷² OH oder eine hydrolysierbare Gruppe ist;
R⁷³ H oder C₁₋₂₀-Alkyl ist;
*p*1 eine ganze Zahl von 0-3 ist;
*q*1 eine ganze Zahl von 0-3 ist;
r1 eine ganze Zahl von 0-3 ist;
(*p*1+*q*1+*r*1) = 3 in jedem (-Z³-SiR⁷¹_{*p*1}R⁷²_{*q*1}R⁷³_{*r*1}); und
in R^{a}, die Anzahl der Si-Atome, die linear über Z³ verbunden sind ≤ 5 ist;
R^{b} OH oder eine hydrolysierbare Gruppe ist;
R^{c} H oder C₁₋₂₀-Alkyl ist;
*k*1 eine ganze Zahl von 0-3 ist;
*l*1 eine ganze Zahl von 0-3 ist;
*m*1 eine ganze Zahl von 0-3 ist;
in jedem (SiR^{a}_{*k*1}R^{b}_{*l*1}R^{c}_{*m*1}), (*k*1+*l*1+*m*1) = 3, und in den Formeln (B1) und (B2), mindestens ein *q*1 eine ganze Zahl von 1-3 ist;
(Rf-PFPE)_{γ}'-X⁵-(CR^{d}_{*k*2}R^{e}_{*l*2}R^{f}_{*m*2})_{γ} (C1)
(R^{f}_{*m*2}R^{e}_{*l*2}R^{d}_{*k*2}C)_{γ}-X⁵-PFPE-X⁵-(CR^{d}_{*k*2}R^{e}_{*l*2}R^{f}_{*m*2})_{γ} (C2)
worin PFPE und Rf wie oben definiert sind und, jeweils unabhängig bei jedem Auftreten:
X⁵ eine Einfachbindung oder eine 2- bis 10-wertige organische Gruppe ist;
y eine ganze Zahl von 1-9 ist;
y' eine ganze Zahl von 1-9 ist;
R^{d} -Z⁴-CR⁸¹_{*p*2}R⁸²_{*q*2}R⁸³_{*r*2} ist; worin, jeweils unabhängig bei jedem Auftreten,
Z⁴ O oder eine zweiwertige organische Gruppe ist;
R⁸¹ wie für R^{d} definiert ist;
R⁸² -Y-SiR⁸⁵_{*n*2}R⁸⁶_{3-*n*2} ist;
Y eine zweiwertige organische Gruppe ist;
R⁸⁵ OH oder eine hydrolysierbare Gruppe ist;
R⁸⁶ H oder C₁₋₂₀-Alkyl ist;
n2 eine ganze Zahl von 0-3 für jede (-Y-SiR⁸⁵_{*n*2}R⁸⁶_{3-*n*2}) -Einheit ist;
R⁸³ H, OH oder C₁₋₂₀-Alkyl ist;
p2 eine ganze Zahl von 0-3 ist;
*q2* eine ganze Zahl von 0-3 ist;
*r*2 eine ganze Zahl von 0-3 ist;
(*p*2+*q*2+*r*2) = 3 in jedem (-Z⁴-CR⁸¹_{*p*2}R⁸²_{*q*2}R⁸³_{*r*2}); und
in R^{d}, die Anzahl der C-Atome, die linear über Z⁴ verbunden sind, ≤ 5 ist;
R^{e} -Y-SiR⁸⁵_{*n*2}R⁸⁶_{3-*n*2} ist;
R^{f} H, OH oder C₁₋₂₀-Alkyl ist;
*k2* eine ganze Zahl von 0-3 ist;
12 eine ganze Zahl von 0-3 ist;
m2 eine ganze Zahl von 0-3 ist; und
(*k*2+*l*2+*m*2) = 3 in jedem (CR^{d}_{*k*2}R^{e}_{*l*2}R^{f}_{*m*2}), und es in den Formeln (C1) und (C2) mindestens zwei Gruppen gibt, die durch -Y-SiR⁸⁵ dargestellt sind.

12. Elektronische Vorrichtung gemäß einem der Ansprüche 1-11, umfassend eine Oberflächenbehandlungsschicht auf einer Oberfläche, worin
- der Wasserkontaktwinkel auf der Oberfläche, gemessen als statischer Kontaktwinkel mit 2 µl Wasser in einer Umgebung von 21 °C und 65 % Luftfeuchtigkeit, ≥ 100° beträgt und
- der dynamische Reibungskoeffizient auf der Oberfläche, gemessen gemäß ASTM D4917, 0,1-0,5 beträgt.

13. Elektronische Vorrichtung gemäß Anspruch 12, worin der Wasserkontaktwinkel ≥ 110° beträgt und der dynamische Reibungskoeffizient 0,15-0,35 beträgt.

14. Elektronische Vorrichtung gemäß einem der Ansprüche 1-13, worin PFPE in den Formeln (A1), (A2), (B1), (B2), (C1) und (C2) - (OCF₂CF(CF₃))*_{d}*- ist, worin d eine ganze Zahl von 1-200 ist.

## Revendications

1. Dispositif électronique comprenant une couche de traitement de surface formée sur au moins une partie de sa surface, la couche de traitement de surface étant formée d'un composé qui est un composé silane contenant un groupe fluoro(poly)éther de l'une quelconque des formules (A1), (A2), (B1), (B2), (C1) ou (C2) : 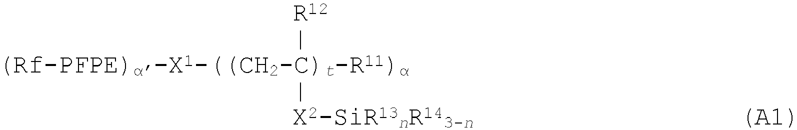 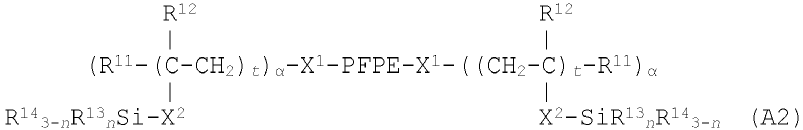
dans lequel, chacun indépendamment à chaque occurrence :
PFPE est -(OC₃F₆)*_{d}*- dans lequel l'unité de répétition -(OC₃F₆)- présente une structure ramifiée, et d est un nombre entier de 1 à 200 ;
Rf est un alkyle en C₁₋₁₆ facultativement substitué par F ;
X¹ est un groupe organique divalent à décavalent ;
α est un nombre entier de 1 à 9 ;
α' est un nombre entier de 1 à 9 ;
R¹¹ est H ou un halogène ;
R¹² est H ou un alkyle en C₁₋₂₀ ;
X² est un alkylène en C₁₋₂₀ ;
R¹³ est OH ou un groupe hydrolysable ;
R¹⁴ est H ou un alkyle en C₁₋₂₂ ;
*n* est un nombre entier de 0 à 3 pour chaque unité (-SiR¹³*ₙ*R¹⁴_{3-*n*}) ;
*t* est un nombre entier de 2 à 10 ;
dans les formules (A1) et (A2), au moins un n est un nombre entier de 1 à 3 ;
(Rf-PFPE)_{β'}-X'-(SiR^{a}₃)_{β} (B1)
(R^{a}3Si)_{β}-X³-PFPE-X³-(SiR^{a}₃)_{β} (B2)
dans lequel Rf est tel que défini ci-dessus et, chacun indépendamment à chaque occurrence :
PFPE est un groupe de la formule :
-(OC₆F₁₂)ₐ-(OC₅F₁₀)_{b}-(OC₄F₈)_{c}-(OC₃X^{F}₆)_{d}-(OC₂F₄)ₑ-(OCF₂)_{f}- et présente au moins une structure ramifiée,
dans lequel *a-f* sont chacun indépendamment un nombre entier de 0 à 200 et (*a*+*b*+*c*+*d*+*e*+*f*) ≥ 1, et l'ordre des unités de répétition respectives entre parenthèses avec a, *b, c, d, e* ou *f* est arbitraire, et X^{F} est chacun indépendamment H, F ou CI ;
ou est un groupe de la formule :
-(R¹⁶-R¹⁷)_{*j*1}-
dans lequel R¹⁶est OCF₂ ou OC₂F₄ ; R¹⁷ est un groupe sélectionné parmi OC₂F₄, OC₃X^{F}₆, OC₄F₈, OC₅F₁₀, et OC₆F₁₂, ou est une combinaison de deux ou trois groupes indépendamment sélectionnés parmi ces groupes ; j1 est un nombre entier de 2 à 100 ; et X^{F} est chacun indépendamment H, F ou CI ;
X³ est une liaison simple ou un groupe organique divalent à décavalent ;
β est un nombre entier de 1 à 9 ;
β' est un nombre entier de 1 à 9 ;
R^{a} est -Z³-SiR⁷²_{q1}R⁷³ᵣ₁ ; dans lequel, chacun indépendamment à chaque occurrence,
Z³ est un groupe organique divalent qui n'inclut pas de groupe formant une liaison siloxane conjointement avec un atome de Si ;
R⁷² est OH ou un groupe hydrolysable ;
R⁷³ est H ou un alkyle en C₁₋₂₀ ;
q1 est un nombre entier de 1 à 3 ;
r1 est un nombre entier de 0 à 2 ; et
(*q*1+*r*1) = 3 dans chaque (-Z³-SiR⁷²_{*q*1}R⁷³_{*r*1}) ;
Rf-PFPE-X⁵-CR^{e}₃ (C1)
R^{e}₃C-X⁵-PFPE-X⁵-CR^{e}₃ (C2)
dans lequel PFPE et Rf sont tels que définis pour les formules (B1) et (B2) et, chacun indépendamment à chaque occurrence :
X⁵ est un groupe organique divalent de la formule -(R³¹)_{*p*'}-((X^{b})*_{l'}*)_{*q*'}- dans lequel, chacun indépendamment à chaque occurrence,
R³¹ est une liaison simple, -(CH₂)_{s'}- facultativement substitué par un ou plusieurs F dans lequel s' est un nombre entier de 1 à 20, ou un o-, m- ou p-phénylène,
X^{b} est -O-, -(OR³⁵)_{*n*4}-, -S-, un o-, m- ou p-phénylène, -C(O)O-, -Si(R³³)₂-, -(Si(R³³)₂O)_{m'}-Si(R³³)₂-, -CON(R³⁴)-, -O-CON(R³⁴)-, -N(R³⁴)- ou -(CH₂)_{*n'*-}, dans lequel
R³³ est un phényle, un alkyle en C₁₋₆, ou un alcoxy en C₁₋₆,
R³⁴ est H, un phényle ou un alkyle en C₁₋₆,
R³⁵ est un alkylène en C₁₋₆,
*n4* est un nombre entier de 1 à 5,
*m*' est un nombre entier de 1 à 100,
*n*' est un nombre entier de 1 à 20,
/' est un nombre entier de 1 à 10,
p' est 0 ou 1,
*q'* est 0 ou 1, et
au moins l'un parmi p' et q' est 1, et l'ordre des unités de répétition respectives entre parenthèses avec p' ou q' est arbitraire ;
R^{e} est -Y-SiR⁸⁵_{*n*2}R⁸⁶_{3-*n*2} ;
Y est chacun indépendamment un alkylène en C₁₋₆ ou un -phénylène-(CH₂)_{i'}- dans lequel i' est un nombre entier de 0 à 6 ;
R⁸⁵ est OH ou un groupe hydrolysable ;
R⁸⁶ est H ou un alkyle en C₁₋₂₀ ; et
*n2* est un nombre entier de 1 à 3 pour chaque unité (-Y-SiR⁸⁵_{*n*2}R⁸⁶_{3-*n*2}).

2. Dispositif électronique selon la revendication 1, dans lequel dans les formules (A1) et (A2), il y a au moins deux SiR¹³.

3. Dispositif électronique selon la revendication 1 ou la revendication 2, dans lequel X¹ est -X¹⁰-CON(R³⁴)-X¹¹-, -X¹⁰-(OR³⁵)_{*n*4}-X¹¹- ou un alkylène en C₁₋₆, dans lequel
X¹⁰ est chacun indépendamment une liaison simple ou un groupe organique divalent, de préférence une liaison simple, -O-R³⁶-O-, -R³⁶-, ou un groupe o-, m-, ou p-phénylène, et plus préférentiellement une liaison simple, -O-R³⁶-O-, ou -R³⁶- ;
R³⁶ est un alkylène en C₁₋₂₀ facultativement substitué par un ou plusieurs F ;
X¹¹ est chacun indépendamment une liaison simple, O, ou un groupe organique divalent, et de préférence une liaison simple, un atome d'oxygène, ou un alkylène en C₁₋₂₀ facultativement substitué par un ou plusieurs F ;
R³⁴ est chacun indépendamment H, un phényle ou un alkyle en C₁₋₆ ;
R³⁵ est chacun indépendamment un alkylène en C₁₋₆, de préférence un alkylène en C₁₋₃ ; et
n4 est un nombre entier de 1 à 5.

4. Dispositif électronique selon l'une quelconque des revendications 1 à 3, dans lequel X³est -X¹⁰-CON(R³⁴)-X¹¹-, -X¹⁰-(OR³⁵)ₙ₄-X¹¹- ou un alkylène en C₁₋₆, dans lequel
X¹⁰ est chacun indépendamment une liaison simple ou un groupe organique divalent, de préférence une liaison simple, -O-R³⁶-O-, -R³⁶-, ou un groupe o-, m-, ou p-phénylène, et plus préférentiellement une liaison simple, -O-R³⁶-O-, ou -R³⁶- ;
R³⁶ est un alkylène en C₁₋₂₀ facultativement substitué par un ou plusieurs F ;
X¹¹ est chacun indépendamment une liaison simple, O, ou un groupe organique divalent, et de préférence une liaison simple, un atome d'oxygène, ou un alkylène en C₁₋₂₀ facultativement substitué par un ou plusieurs F ;
R³⁴ est chacun indépendamment H, un phényle ou un alkyle en C₁₋₆ ;
R³⁵ est chacun indépendamment un alkylène en C₁₋₆, de préférence un alkylène en C₁₋₃ ; et
n4 est un nombre entier de 1 à 5.

5. Dispositif électronique selon l'une quelconque des revendications 1 à 4, dans lequel X⁵ est -X¹⁰-CON(R³⁴)-X¹¹-, -X¹⁰-(OR³⁵)ₙ₄-X¹¹- ou un alkylène en C₁₋₆, dans lequel
X¹⁰ est chacun indépendamment une liaison simple ou un groupe organique divalent, de préférence une liaison simple, -O-R³⁶-O-, -R³⁶-, ou un groupe o-, m-, ou p-phénylène, et plus préférentiellement une liaison simple, -O-R³⁶-O-, ou -R³⁶- ;
R³⁶ est un alkylène en C₁₋₂₀ facultativement substitué par un ou plusieurs F ;
X¹¹ est chacun indépendamment une liaison simple, O, ou un groupe organique divalent, et de préférence une liaison simple, un atome d'oxygène, ou un alkylène en C₁₋₂₀ facultativement substitué par un ou plusieurs F ;
R³⁴ est chacun indépendamment H, un phényle ou un alkyle en C₁₋₆ ;
R³⁵ est chacun indépendamment un alkylène en C₁₋₆, de préférence un alkylène en C₁₋₃ ; et
n4 est un nombre entier de 1 à 5.

6. Dispositif électronique selon l'une quelconque des revendications 1 à 5, dans lequel -(OC₃X^{F}₆)_{d}- dans les formules (B1), (B2), (C1) et (C2) est -(OC₃F₆)_{d}-.

7. Dispositif électronique selon l'une quelconque des revendications 1 à 6, dans lequel -(OC₃F₆)_{d}- dans les formules (A1) et (A2) et -(OC₃X^{F}₆)_{d}- dans les formules (B1), (B2), (C1) et (C2) est -(OCF(CF₃)CF₂)_{d}- ou -(OCF₂CF(CF₃))_{d}-, et d est un nombre entier de 1 à 200.

8. Dispositif électronique selon l'une quelconque des revendications 1 à 7, qui est capable d'être alimenté par une batterie rechargeable.

9. Dispositif électronique selon l'une quelconque des revendications 1 à 8, qui est un téléphone mobile ou un téléphone intelligent.

10. Dispositif électronique selon la revendication 8 ou la revendication 9, qui présente une première surface principale et une seconde surface principale faisant face à la première surface principale, et présente une couche de traitement de surface sur la seconde surface principale.

11. Dispositif électronique, qui est une station de charge, et comprend une couche de traitement de surface formée sur au moins une partie de sa surface, la couche de traitement de surface étant formée d'un composé qui est un composé silane contenant un groupe fluoro(poly)éther de l'une quelconque des formules (A1), (A2), (B1), (B2), (C1) ou (C2) : 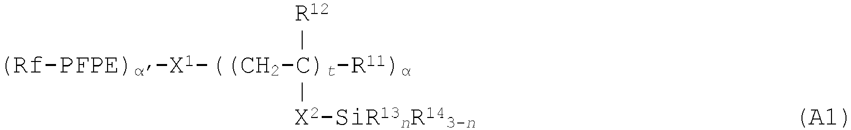 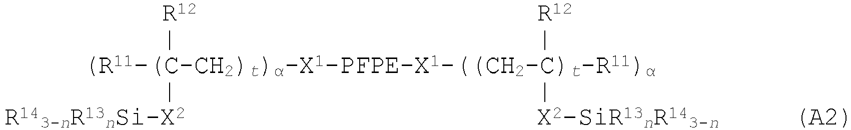
dans lequel, chacun indépendamment à chaque occurrence :
PFPE est un groupe de la formule :
-(OC₆F₁₂)ₐ-(OC₅F₁₀)_{b}-(OC₄F₈)_{c}-(OC₃X^{F}₆)_{d}-(OC₂F₄)ₑ-(OCF₂)_{f}- et présente au moins une structure ramifiée,
dans lequel *a-f* représentent chacun indépendamment un nombre entier de 0 à 200 et (*a*+*b*+*c*+*d*+*e*+*f*) ≥ 1, et l'ordre des unités de répétition respectives entre parenthèses avec a, *b, c, d,* e ou *f* est arbitraire, et X^{F} est chacun indépendamment H, F ou CI ;
ou est un groupe de la formule :
-(R¹⁶-R¹⁷)_{*j*1}-
dans lequel R¹⁶ est OCF₂ ou OC₂F₄ ; R¹⁷ est un groupe sélectionné parmi OC₂F₄, OC₃X^{F}₆, OC₄F₈, OC₅F₁₀, et OC₆F₁₂, ou est une combinaison de deux ou trois groupes indépendamment sélectionnés parmi ces groupes ; j1 est un nombre entier de 2 à 100 ; et X^{F} est chacun indépendamment H, F ou CI ;
Rf est un alkyle en C₁₋₁₆ facultativement substitué par F ;
X¹ est une liaison simple ou un groupe organique divalent à décavalent ;
α est un nombre entier de 1 à 9 ;
α' est un nombre entier de 1 à 9 ;
R¹¹ est H ou un halogène ;
R¹² est H ou un alkyle en C₁₋₂₀ ;
X² est une liaison simple ou un groupe organique divalent ;
R¹³ est OH ou un groupe hydrolysable ;
R¹⁴ est H ou un alkyle en C₁₋₂₂ ;
*n* est un nombre entier de 0 à 3 pour chaque unité (-SiR¹³*ₙ*R¹⁴_{3-*n*}) ;
*t* est un nombre entier de 2 à 10 ;
dans les formules (A1) et (A2), au moins un n est un nombre entier de 1 à 3 ;
(Rf-PFPE)_{β'}-X³-(SiR^{a}_{*k*1}R^{b}_{*l*1}R^{c}_{*m*1})_{β} (B1 )
(R^{c}_{*m*1}R^{b}_{*l*1}R^{a}_{*k*1}Si)_{β}-X³-PFPE-X³-(SiR^{a}_{*k*1}R^{b}_{*l*1}R^{c}_{*m*1})_{β} (B2)
dans lequel PFPE and Rf sont tels que définis ci-dessus et, chacun indépendamment à chaque occurrence :
X³ est une liaison simple ou un groupe organique divalent à décavalent ;
β est un nombre entier de 1 à 9 ;
β' est un nombre entier de 1 à 9 ;
R^{a} est -Z³-SiR⁷¹ₚ₁R⁷²_{q1}R⁷³ᵣ₁ ; dans lequel, chacun indépendamment à chaque occurrence,
Z³ est O ou un groupe organique divalent ;
R⁷¹ est tel que défini pour R^{a} ;
R⁷² est OH ou un groupe hydrolysable ;
R⁷³ est H ou un alkyle en C₁₋₂₀ ;
p1 est un nombre entier de 0 à 3 ;
q1 est un nombre entier de 0 à 3 ;
r1 est un nombre entier de 0 à 3 ;
*(p1+q1+r1)* = 3 dans chaque (-Z³-SiR⁷¹_{*p*1}R⁷²_{*q*1}R⁷³_{*r*1}) ; et
dans R^{a}, le nombre d'atomes de Si qui sont linéairement liés via Z³ est ≤ 5 ;
R^{b} est OH ou un groupe hydrolysable ;
R^{c} est H ou un alkyle en C₁₋₂₀ ;
k1 est un nombre entier de 0 à 3 ;
/1 est un nombre entier de 0 à 3 ;
*m*1 est un nombre entier de 0 à 3 ; dans chaque (SiR^{a}_{*k*1}R^{b}_{*l*1}R^{c}_{*m*1}), (k1+/1+*m*1) = 3, et dans les formules (B1) et (B2), au moins un *q*1 est un nombre entier de 1 à 3 ;
(Rf-PFPE)_{γ'}-X⁵-(CR^{d}_{*k*2}R^{e}_{*l*2}R^{f}_{*m*2})_{γ} (C1)
(R^{f}_{*m*2}R^{e}_{*l*2}R^{d}_{*k*2}C)_{γ}-X⁵-PFPE-X⁵-(CR^{d}_{*k*2}R^{e}_{*l*2}R^{f}_{*m*2})_{γ} (C2)
dans lequel PFPE and Rf sont tels que définis ci-dessus et, chacun indépendamment à chaque occurrence :
X⁵ est une liaison simple ou un groupe organique divalent à décavalent ;
y est un nombre entier de 1 à 9 ;
y' est un nombre entier de 1 à 9 ;
R^{d} est -Z⁴-CR⁸¹_{*p*2}R⁸²_{*q*2}R⁸³_{*r*2} ; dans lequel, chacun indépendamment à chaque occurrence,
Z⁴ est O ou un groupe organique divalent ;
R⁸¹ est tel que défini pour R^{d} ;
R⁸² est -Y-SiR⁸⁵_{*n*2}R⁸⁶_{3-*n*2} ;
Y est un groupe organique divalent ;
R⁸⁵ est OH ou un groupe hydrolysable ;
R⁸⁶ est H ou un alkyle en C₁₋₂₀ ;
*n2* est un nombre entier de 0 à 3 pour chaque unité (-Y-SiR⁸⁵_{*n*2}R⁸⁶_{3-*n*2}) ;
R⁸³ est H, OH ou un alkyle en C₁₋₂₀ ;
p2 est un nombre entier de 0 à 3 ;
*q2* est un nombre entier de 0 à 3 ;
*r2* est un nombre entier de 0 à 3 ;
(*p*2+*q*2+*r*2) = 3 dans chaque (-Z⁴-CR⁸¹_{*p*2}R⁸²_{*q*2}R⁸³_{*r*2}) ; et
dans R^{d}, le nombre d'atomes de C qui sont linéairement liés via Z⁴ est≤ 5 ;
R^{e} est -Y-SiR⁸⁵_{*n*2}R⁸⁶_{3-*n*2} ;
R^{f} est H, OH ou un alkyle en C₁₋₂₀ ;
*k*2 est un nombre entier de 0 à 3 ;
*l*2 est un nombre entier de 0 à 3 ;
*m*2 est un nombre entier de 0 à 3 ; et
(*k*2+*l*2+*m*2) = 3 dans chaque (CR^{d}ₖ₂R^{e}_{*l*2}R^{f}_{*m*2}), et dans les formules (C1) et (C2), il y a au moins deux groupes représentés par -Y-SiR⁸⁵.

12. Dispositif électronique selon l'une quelconque des revendications 1 à 11, comprenant une couche de traitement de surface sur une surface, dans lequel
- l'angle de contact de l'eau sur la surface est ≥ 100°, mesuré comme un angle de contact statique avec 2 µl d'eau dans un environnement à 21 °C et 65 % d'humidité, et
- le coefficient de frottement dynamique sur la surface, mesuré selon la norme ASTM D4917, est de 0,1 à 0,5.

13. Dispositif électronique selon la revendication 12, dans lequel l'angle de contact de l'eau est >_ 110° et le coefficient de frottement dynamique est de 0,15 à 0,35.

14. Dispositif électronique selon l'une quelconque des revendications 1 à 13, dans lequel PFPE
dans les formules (A1), (A2), (B1), (B2), (C1) et (C2) est -(OCF₂CF(CF₃))*_{d}*- dans lequel *d* est un nombre entier de 1 à 200.
